# EUROPEAN PATENT SPECIFICATION

(11) **EP 2 273 355 B1**
(45) Date of publication and mention of the grant of the patent: **20.07.2016**
(21) Application number: 08858989.0
(22) Date of filing: 17.11.2008
(51) Int. Cl.: G06F 3/0354

(54) **INFORMATION INPUT DEVICE, INFORMATION PROCESSING DEVICE AND INFORMATION INPUT SYSTEM**
INFORMATIONSEINGABEEINRICHTUNG, INFORMATIONSVERARBEITUNGSEINRICHTUNG SOWIE INFORMATIONSEINGABESYSTEM
DISPOSITIF D'ENTRÉE D'INFORMATIONS, DISPOSITIF DE TRAITEMENT D'INFORMATIONS ET SYSTÈME D'ENTRÉE D'INFORMATIONS

(30) Priority: 12.12.2007 JP 2007320429
(43) Date of publication of application: 12.01.2011
(73) Proprietor: Yoshida, Kenji, Bunkyo-ku Tokyo 112-0002 (JP)
(72) Inventor: Yoshida, Kenji, Bunkyo-ku Tokyo 112-0002 (JP)
(74) Representative: Dunleavy, Kevin James
(86) International application number: PCT/JP2008/003343
(87) International publication number: WO 2009/075061

(56) References cited:
- WO-A1-2006/087824
- CA-A1- 2 646 022
- JP-A- 2001 216 311
- JP-A- 2003 067 135
- JP-A- 2004 038 547
- JP-A- 2005 037 990
- JP-A- 2007 133 824

## Description

### CROSS REFERENCE TO RELATED APPLICATIONS

This application claims priority under EPC, Article 87 based upon Japanese Patent Application No. 2007-320429, filed on December 12, 2007.

### FIELD OF THE INVENTION

The present invention relates to a technique to input information using a medium printed with a dot pattern, a display that displays a dot pattern, or a transparent sheet printed with a dot pattern, and by parsing of electronic data and image analysis.

### BACKGROUND OF THE INVENTION

Conventionally, for example, when processing information relating to the content displayed on a print medium or a screen using a device, such as a personal computer, PDA, handy terminal, and television receiver, a user would manually input information that the user desires to process into such a device.

For example, if there is a word "Tokyo" in kanji on a print medium and a user searches information relevant to the word "Tokyo" in kanji with a personal computer, the user would retrieve a search engine on the Internet and input the word "Tokyo" in kanji through a keyboard to display the search outcome of the word "Tokyo" in kanji on the screen.

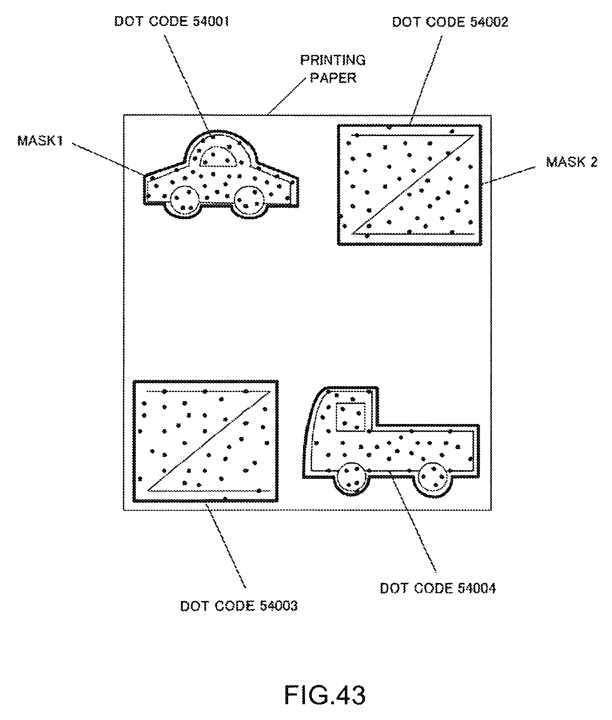

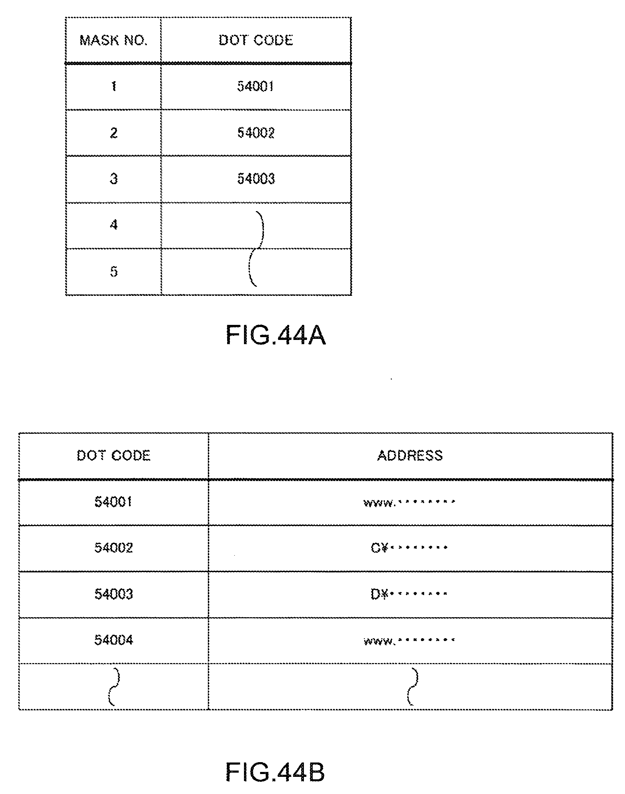

Further, to save the trouble of inputting information that the user desires to process with an input device such as a keyboard as described above, there is known a technique as shown in Figures 43 to 44B in which a specific region of content displayed on a print medium or a screen is defined in advance as a mask region and a specific dot code is embedded in the mask region, then, if a dot pattern in the mask region is read out by a user using a scanner or the like, the dot code corresponding to the dot pattern is recognized, and information associated to the dot code in advance is searched and displayed (e.g., WO2007/089021).

Further, there is also known a technique in which an HTML document or the like is displayed by a personal computer or the like and a hyperlink is set to the displayed content so that a user can search information relevant to the content.

However, when inputting information to a device using the conventional technique, to the end that particular information that a user desired to input (hereafter, referred to as specific information) is input into the device, it takes the trouble of defining a mask region in advance over the content displayed on a print medium or a screen, printing or displaying a dot pattern whose mask region is embedded with a dot code corresponding to the specific information, as well as preparing a dot code and specific information correspondence table that defines specific information corresponding to dot codes.

Further, when displaying relevant information to the specific information on the device, it takes the trouble of preparing a dot code and address correspondence table in advance that shows addresses where relevant information corresponding to dot codes resides, instead of the dot code and specific information correspondence table.

Furthermore, if the content is described by HTML or the like that is displayed on a screen, specific information for which a hyperlink or the like is not set cannot be processed until a user explicitly inputs the specific information that the user desires to process via a keyboard or the like.

Canadian Patent publication no. CA-A-2 646 022 discloses an input system to replace a hardware device such as a keyboard, a mount and a tablet that is capable of inputting characters to a computer by an easy operation and performing an easy operation, i.e. a paper icon, a paper controller, a paper keyboard, and a mouse pad. By providing an icon formed on a medium for a reading, using a scanner connected to the information processing device, a dot pattern formed on the medium surface and converting it into a code value and/or a coordinate value defined by the dot pattern and outputting access information to access audio, an image, a dynamic image, a character or a program, a web corresponding to the code value and/or the coordinate value, it is possible to start information such as audio, an image, a dynamic image and a character which have been prepared in advance, start a program and access the web without using a keyboard or a mouse.

The invention is devised in consideration of such points, and has a technical feature that provides an information input device that allows a user to input specific information that is printed or displayed on a screen and for which a hyperlink or the like is not set, without defining a mask region in advance, embedding a dot code corresponding to the specific information on the mask region, or preparing a dot code and specific information correspondence table that defines specific information corresponding to dot codes in advance.

### SUMMARY OF THE INVENTION

(1) To solve the above-described problem, an information input device of the invention comprises: a dot-pattern reading unit whose subject is DTP data, HTML, Flash, CAD data, map data and other two-dimensional format information to be printed on a medium, wherein, among information that is visualized as a text, a figure, an illustration, a photograph, and the like, information that meets a predetermined criterion is determined in advance as specific information and formatted, and the dot-pattern reading unit is used to touch on the medium to read a dot pattern at the touch position when a user specifies, by a predetermined operation, the visualized specific information on a medium printed together with a dot pattern that is made into a pattern with an XY coordinate value and/or a code value based on a predetermined algorithm for a variety of multimedia information output and/or operation instruction; a two-dimensional format information storing and selecting unit that, using identification information for identifying the two-dimensional format information, selects the two-dimensional format information corresponding to the identification information among one or more pieces of the two-dimensional format information stored in advance; a coordinate conversion unit that converts a coordinate value (Xt, Yt) in an XY coordinate system of the dot pattern at the touch position into a coordinate value (xt, yt) in an xy coordinate system of the selected two-dimensional format information; and a specific information selecting unit that, using the coordinate value (xi, yi) in the xy coordinate system of the two-dimensional format information as position information for selection, the coordinate value (xi, yi) being determined when laying out and printing the specific information in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device.

Two-dimensional format information is DTP (Desk Top Publishing) data or the like that isused as basic electrical data when preparing a printed material. The two-dimensional format information may be content data prepared by HTML, Flash or the like, CAD data, or map data.

Specific information is information such as a text, figure, illustration, and photograph included in two-dimensional format information and a unit identified by text parsing and image analysis.

For example, when preparing a printed material on which a photograph of Tokyo Tower, buildings, and sky, and a text of "City of flower, Tokyo" in kanji and hiragana (Japanese characters) are laid out using a word processor, the electronic data prepared by the word processor is the two-dimensional format information and the photograph and text included in the electronic data is the specific information. Further, the photograph is broken down into Tokyo Tower, buildings, and sky by image analysis and the text is broken down into "City of flower," in kanji and
hiragana "Tokyo,""Flower,""City,""To," and "Kyo" each in kanji and each of them is specific information.

Position information for selection is information used for selecting specific information on a printed material based on a position touched by a user. For example, position information for selection is a coordinate value of the center of a region where the word "Tokyo" in kanji is laid out in the DTP data.

Two-dimensional format information that includes specific information that is analyzed and for which position information for selection is set is stored by a two-dimensional format information storing and selecting unit.

Identification information is information that uniquely specifies two-dimensional format information, and may be, for example, a file name of DTP data or a predetermined document ID or a URL.

In the above-described example, a photograph and a text are printed on a medium, and a dot pattern made into a pattern with a XY coordinate value and/or code value is superimposed and printed thereon.

According to the above-described structure, if a user touches on information, that the user desires to input, on a medium using the dot-pattern reading unit, the XY coordinate value and/or code value of the touch position is read out. Next, based on the read XY coordinate value and/or code value, the medium touched by the user is identified, and two-dimensional format information corresponding to the medium is taken out from the two-dimensional format information storing and selecting unit. Then, the coordinate value conversion unit calculates the xy coordinate value of the touch position in the two-dimensional format information based on the taken-out two-dimensional format information and the XY coordinate value of the touch position on the medium. Next, the specific information selecting unit, using the coordinates of the touch position expressed in the xy coordinate system of the two-dimensional format information and position information for selection retained by each specific information in the two-dimensional format information, selects specific information of the touch position according to a predetermined algorithm as input into the information input device. As a result, the invention provides an advantage that allows a user to input specific information that is printed and for which a hyperlink or the like is not set without defining a mask region in advance, embedding a dot code corresponding to the specific information in a mask region, or preparing a dot code and specific information correspondence table that defines specific information corresponding to dot codes in advance.
(2) In the information input device of the invention, preferably, the identification information is the code value of the dot pattern printed on the medium, and printed together with an XY coordinate value of the dot pattern on at least part of a region printed with the XY coordinate value of the dot pattern or other region than said region.
   According to the above-described structure, since the identification information is the code value and, thus, the identification information is read out by a touch operation of the user, the invention provides further advantage that saves a user the trouble of inputting identification information separately.
   Moreover, a further advantage is provided that information to be can be read adjusted depending on a position touched by a user by adjusting a position printed with identification information.
(3) In the information input device of the invention, preferably, the identification information is an XY coordinate value of the dot pattern that uniquely identifies the two-dimensional format information, and the XY coordinate value is printed on all over a region printed with the XY coordinate value of the dot pattern.
   According to the above-described structure, by dividing the wide XY coordinate surface into regions used by DTP data and defining the regions so that regions do not overlap one another, the DTP data can be identified based on which XY coordinate value is used.
   As the identification information is an XY coordinate value of the dot pattern that uniquely identifies two-dimensional format information, a further advantage is provided that a process of including identification information as a code value in a dot pattern is not required.
(4) In the information input device of the invention, preferably, the medium is a structure that diffusely reflects infrared rays irradiated from an infrared irradiation unit provided on the dot-pattern reading unit, the two-dimensional format information is printed on the medium using an ink made of an infrared transmissive material or an infrared reflective material; and the dot pattern is printed on the material using an ink made of an infrared absorbing material.
   According to the above-described structure, as the medium diffusely reflects infrared rays, a further advantage is provided that uneven reflection that occurs at specular reflection is prevented.
   Further, since the dot pattern is printed using an ink made of an infrared absorbing material, which enhances contrast ratios between the dots and other part in an image captured by the dot-pattern reading unit, a further advantage is provided that a dot pattern can be read without fail
(5) To solve the above-described problem, the information input device of the invention comprises: a display whose subject is DTP data, HTML, Flash, CAD data, map data and other two-dimensional format information to be displayed on the display, wherein, among information that is visualized as a text, a figure, an illustration, a photograph, and the like, information that meets a predetermined criterion is determined in advance as specific information and formatted, and the display displays the two-dimensional format information together with a dot pattern that is made into a pattern with an XY coordinate value and/or a code value based on a predetermined algorithm for a variety of multimedia information output and/or operation instruction; a dot-pattern reading unit that is used to touch on the display to read a dot pattern at the touch position, when a user specifies the visualized specific information on the display by a predetermined operation; a two-dimensional format information storing and selecting unit that, using input identification information for identifying the two-dimensional format information, selects the two-dimensional format information corresponding to the identification information among one or more pieces of the two-dimensional format information stored in advance; a coordinate conversion unit that converts a coordinate value (Xt, Yt) in an XY coordinate system of the dot pattern at the touch position into a coordinate value (xt, yt) in an xy coordinate system of the selected two-dimensional format information; and a specific information selecting unit that, using (xi, yi) in the xy coordinate system of the two-dimensional format information as position information for selection, the (xi, yi) being determined when displaying the specific information on the display in order to specify a position of the specific information in the xy coordinate system of the two-dimensional format information, calculates a distance from the coordinate value (xt, yt) in the xy coordinate system of the two-dimensional format information that are converted from the coordinate value (Xt, Yt) of the dot pattern of the touch position to one or more pieces of position information for selection within a predetermined distance, and selects specific information having coordinates of the closest position information for selection as input into a local device.
   The two-dimensional format information is content data and the like that is electrical data of the content displayed on a display.
   The position information for selection is information used to select specific information on a display based on the position touched by a user.
   The display displays content that is superimposed with a dot pattern made into a pattern with an XY coordinate value and/or code value.
   According to the above-described structure, if a user touches on information, that the user desires to input, on a display using the dot-pattern reading unit, the XY coordinate value and/or code value of the touch position is read out. Next, the content touched by the user is identified based on the read XY coordinate value and/or code value, and the two-dimensional format information of the content is retrieved from the two-dimensional format information storing and selecting unit. Then, the coordinate conversion unit calculates an xy coordinate value of the touch position on the two-dimensional format information based on the retrieved two-dimensional format information and the XY coordinate value of the touch position on the display. Next, according to a predetermined algorithm, the specific information selecting unit selects the specific information of the touch position as an input into the information input device, using coordinates of the touch position expressed in the xy coordinate system of the two-dimensional format information and position information for selection retained by each specific information in the two-dimensional format information. As a result, an advantage is provided that a user can input specific information displayed on a display and for which a hyperlink or the like is not set without defining a mask region in advance, embedding a dot code corresponding to the specific information in a mask region, or preparing a dot code and specific information correspondence table that defines specific information corresponding to dot codes in advance.
(6) In the information input device of the invention, preferably, the identification information is the code value of the dot pattern displayed on the display and displayed together with an XY coordinate value of the dot pattern on at least part of a region that displays the XY coordinate value of the dot pattern or other region than said region.
   According to the above-described structure, as the identification information is the code value and the identification information is read out by a touch operation by a user, the invention provides a further advantage that saves a user the trouble of inputting identification information separately.
(7) In the information input device of the invention, preferably, the identification information is an XY coordinate value of the dot pattern that uniquely identifies the two-dimensional format information and the XY coordinate value is displayed all over a region that displays the XY coordinate value of the dot pattern.
   According to the above-described structure, as the identification information is the XY coordinate value of the dot pattern that uniquely identifies two-dimensional format information, a further advantage is provided that a process of including identification information as a code value in a dot pattern is not required.
(8) In the information input device of the invention, preferably, the display is a structure in which dot part of the dot pattern absorbs or transmits infrared rays irradiated from an infrared irradiation unit provided on the dot-pattern reading unit and other region than the dot part diffusely reflects the infrared rays.
   According to the above-described structure, as the other region than the dot part on the display diffusely reflects infrared rays, a further advantage is provided that uneven reflection that occurs at specular reflection is prevented.
   Further, since the dot part absorbs or transmits infrared rays, which enhances contrast ratios between the dots and other part in an image captured by the dot-pattern reading unit, a further advantage is provided that a dot pattern can be read without fail
(9) In the information input device of the invention, the display displays dots of the dot pattern by adjusting RGB values of pixels displayed on a screen.
   According to the above-described structure, since the display expresses dots of the dot pattern by adjusting the RGB values of the pixels displayed on the screen, a further advantage is provided that a general-purpose display can be used instead of a special display.
(10) The information input device of the invention comprises: an information input assisting sheet printed with a dot pattern made into a pattern with an XY coordinate value and/or a code value based on a predetermined algorithm for a variety of multimedia information output and/or operation instruction, whose subject is DTP data, HTML, Flash, CAD data, map data and other two-dimensional format information to be printed on a medium, wherein among information that is visualized as a text, a figure, an illustration, a photograph, and the like, information that meets a predetermined criterion is determined in advance as specific information and formatted, and the information input assisting sheet is placed on a medium printed with the two-dimensional format information or attached on a display that displays the two-dimensional format information; a dot-pattern reading unit that is used to touch on the medium or the display through the information input assisting sheet to read a dot pattern at the touch position, when a user specifies the visualized specific information on the medium or the display by a predetermined operation; a two-dimensional format information storing and selecting unit that, using input identification information for identifying the two-dimensional format information, selects the two-dimensional format information corresponding to the identification information among one or more pieces of the two-dimensional format information stored in advance; a coordinate conversion unit that converts a coordinate value (Xt, Yt) in an XY coordinate system of the dot pattern at the touch position into a coordinate value (xt, yt) in an xy coordinate system of the selected two-dimensional format information; and a specific information selecting unit that, using (xi, yi) in the xy coordinate system of the two-dimensional format information as position information for selection, the (xi, yi) being determined when laying out and printing the specific information or determined when displaying the specific information on the display in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device.
   The information input assisting sheet is a transparent sheet and provided with a dot pattern by means of printing or other methods. This information input assisting sheet is used by being overlaid on a medium printed with content or a display that displays content, and a user touches the desired specific information through the information input assisting sheet using the dot-pattern reading unit in order to input the specific information on the medium or the display.
   According to the above-described structure, a user inputs information that identifies printed or displayed content as needed. Two-dimensional format information corresponding to the content is retrieved from the two-dimensional format information storing and selecting unit. Next, if a user touches on information, that the user desired to input, through the information input assisting sheet using the dot-pattern reading unit, the XY coordinate value and/or code value of the touch position is read out. Then, the coordinate conversion unit calculates an xy coordinate value of the touch position on the two-dimensional format information based on the retrieved two-dimensional format information and the XY coordinate value of the touch position on the information input assisting sheet. Next, according to a predetermined algorithm, the specific information selecting unit selects the specific information of the touch position as an input into the information input device, using coordinates of the touch position expressed in the xy coordinate system of the two-dimensional format information and position information for selection retained by each specific information in the two-dimensional format information. As a result, an advantage is provided that a user can input printed or displayed specific information for which a hyperlink or the like is not set without defining a mask region in advance, embedding a dot code corresponding to the specific information in a mask region, or preparing a dot code and specific information correspondence table that defines specific information corresponding to dot codes in advance, even when a dot pattern is not printed on a printed material such as a book, magazine, and newspaper.
(11) In the information input device of the invention, preferably, the information input assisting sheet is printed, together with the dot pattern, with a plurality of icons that allow a user to input an index for identifying the two-dimensional format information printed on the medium or displayed on the display, and the two-dimensional format information storing and selecting unit converts the index input by touching the icon using the dot-pattern reading unit into the identification information and selects the two-dimensional format information using the converted identification information.
   According to the above-described structure, as an index is provided on the information input assisting sheet, a further advantage is provided that a user can easily input identification information.
(12) In the information input device of the invention, preferably, the information input assisting sheet is made by laminating: an infrared diffuse-reflection layer that has a characteristic that diffusely reflects infrared rays as well as transmits visible light entering from one side; a dot pattern layer provided on one side of the infrared diffuse-reflection layer and formed by arranging dots of the dot pattern formed of a material that has a characteristic that absorbs infrared rays; and a protection layer provided on opposite side to the infrared diffuse-reflection layer of the dot pattern layer and having a characteristic that transmits infrared rays and visible light.
   According to the above-described structure, as the information input assisting sheet diffusely reflects infrared rays from one side, a further advantage is provided that uneven reflection of an image that occurs at specular reflection can be prevented. Further, since a protection layer is provided on an external surface, a further advantage is provided that difficulty of reading a dot pattern due to wearing of the dot part attributable to the touch operations, dirt, or the like is prevented.
(13) In the information input device of the invention, preferably, the information input assisting sheet is made by laminating an infrared diffuse-reflection layer that has a characteristic that diffusely reflects infrared rays entering from each side as well as transmits visible light from each side; dot pattern layers provided on both sides of the infrared diffuse-reflection layer and formed by arranging dots of the dot pattern formed of a material that has a characteristic that absorbs infrared rays; and protection layers provided on further external sides of each of the dot pattern layers and have a characteristic that transmits infrared rays and visible light entering from each direction, wherein the coordinate values and/or code values made into a pattern in the dot pattern arranged on each of the dot pattern layers are identical or different from each other.
   According to the above-described structure, since the information input assisting sheet is provided with dot patterns on both sides, a further advantage is provided that, if dot patterns on both sides are different, two kinds of dot patterns can be used with a medium or a display, and if dot patterns on both sides are the same, even when a dot pattern of one side becomes unusable, other side can be used.
(14) In the information input device of the invention, preferably, the dot pattern layer or other layers are superimposed and printed with a text, a figure, an illustration, a photograph, and the like using an ink made of a material having a characteristic that transmits or reflects infrared rays.
   According to the above-described structure, the information input assisting sheet is superimposed and printed with a text, figure, illustration, photograph, and the like, that guides a user when touching the information input assisting sheet, thereby providing a further advantage that allows enhancing user's operability.
(15) In the information input device of the invention, preferably, a user performs the predetermined operation by touching the visualized specific information using the dot-pattern reading unit.
(16) In the information input device of the invention, preferably, a user performs the predetermined operation by touching the visualized specific information using the dot-pattern reading unit and dragging the dot-pattern reading unit over the specific information.
(17) In the information input device of the invention, preferably, a user performs the predetermined operation by touching the visualized specific information using the dot-pattern reading unit and encircling a region displaying the specific information.
(18) In the information input device of the invention, preferably, the specific information selecting unit selects specific information having the position information for selection surrounded by a plurality of coordinate values (xt, yt) in an xy coordinate system of the two-dimensional format information corresponding to a trajectory obtained by the operation of encircling the region displaying the specific information, and if there are a plurality pieces of the specific information, decides one piece of the specific information by selecting after displaying candidates of the specific information or based on a predetermined algorithm.
   According to the above-described structure, since the specific information selecting unit can select specific information having encircled position information for selection, a further advantage is provided that the desired specific information can be selected more accurately compared with when selecting the specific information by the coordinate value of only one point obtained by a touch operation.
(19) In the information input device of the invention, preferably, if the specific information is a word and a gap exists between letters constituting the word, the specific information has the position information for selection for each letter, while if the specific information is a figure, an illustration, a photograph, and the like and constituted by a plurality of objects, the specific information has the position information for selection for each object.
   According to the above-described structure, since the specific information has position information for selection for each detached letter and each figure, illustration, and photograph, a further advantage is provided that such specific information can be selected without fail.
(20) In the information input device of the invention, preferably, the position information for selection is a coordinate value of a center of a word, that is, specific information, or a center of each letter constituting the word, or a coordinate value of a centroid of a figure, an illustration, a photograph, and the like, that is, specific information, or an object constituting the figure, the illustration, and the photograph.
   According to the above-described structure, a further advantage is provided that, when a user performs an operation for specifying the center of the desired specific information, the specific information is selected without a fail.
(21) In the information input device of the invention, preferably, the position information for selection is a combination of a coordinate value of a starting point (xil, yil) and a coordinate value of an end point (xi2, yi2) of a line segment indicating a width of a word of specific information or a letter constituting the word between middle points or arbitrary positions in a height direction of the word or the letter, and the specific information selecting unit selects the specific information having a line segment where a length from a coordinate value of the touch position (xt, xy) to said line segment is within an arbitrary distance and shortest.
   According to the above-described structure, as position information for selection is expressed by a line segment, a further advantage is provided that it becomes easy to calculate a distance between the line segment and the coordinate value of the touch position.
(22) In the information input device of the invention, preferably, the positon information for selection is a collection of all coordinate values (xia, yia) included in a mask surrounding a word of the specific information or each letter constituting the word or a collection of all coordinate values (xia, yia) included in a figure, an illustration, a photograph, and the like of the specific information, or an object constituting the figure, the illustration and the photograph, wherein if a coordinate value of the touch position (xt, yt) matches any pair of the all coordinate values (xia, yia), the specific information selecting unit selects the corresponding specific information, and if the coordinate value of the touch position (xt, yt) does not match any pair of the all coordinate values (xia, yia), the specific information selecting unit selects the specific information having a coordinate value (xie, yie) of a contour of the object or mask that is within an arbitrary distance from and closest to the coordinate value (xt, yt).
   According to the above-described structure, as the position information for selection is expressed by a mask region, a further advantage is provided that the specific information can appropriately retain position information for selection, whatever the shape of the specific information may be.
(23) In the information input device of the invention, preferably, the specific information selecting unit, based on a combination of a coordinate value of a starting point (xil, yil) and a coordinate value of an end point (xi2, yi2) of a line segment indicating a width of a word of specific information or each letter constituting the word between middle points or arbitrary positions in a height direction of the word or the letter, and a height of the letter, hi, generates the mask surrounding the word or the letter according to a predetermined algorithm.
   According to the above-described structure, as the specific information, that is a word, has a combination of a line segment that indicates a width of the word or the letter and a height hi of the letter as position information for selection, a further advantage is provided that a mask region is accurately defined.
(24) In the information input device of the invention, preferably, the specific information selecting unit recognizes one or more pieces of the specific information by parsing a text and/or searching a file and/or analyzing an image of a figure, an illustration, a photograph and the like within an arbitrary distance from the coordinate value of the touch position (xt, yt) in the two-dimensional format information according to a predetermined algorithm, calculates the position information for selection of the specific information according to a predetermined algorithm, and selects the specific information based on the coordinate value (xt, yt), the recognized specific information, and the calculated position information for selection.
   According to the above-described structure, since the specific information selecting unit, after retrieving the two-dimensional format information, performs text-parsing and image analysis within a limited area close to the touch position among the content, the text-parsing and image analysis are done in advance, which provides a further advantage that saves the trouble of preparing two-dimensional format information for which position information for selection is set.
   Moreover, compared with a case in which the entire two-dimensional format information is subject to the text-parsing and image analysis, a further advantage is provided that the analysis can be done in short time.
(25) In the information input device of the invention, preferably, the specific information is specified in advance by parsing a text and/or searching a file and/or analyzing an image of a figure, an illustration, a photograph, and the like included in the two-dimensional format information, the position information for selection of the specific information is calculated in advance according to a predetermined algorithm, and the two-dimensional format information stores the specific information and the position information for selection.
   According to the above-described structure, as the two-dimensional format information is analyzed, set position information for selection, and identified the specific information in advance, and the specific information selecting unit does not have to parse a text nor analyze an image after retrieving the two-dimensional format information, a further advantage is provided that processing time after retrieving two-dimensional format information until selecting the specific information can be reduced.
(26) In the information input device of the invention, preferably, the two-dimensional format information is a figure drawn by CAD and has a text and/or a dot, a line segment, a plane, a three-dimensional object as the specific information.
   According to the above-described structure, a further advantage is provided that content generated by CAD, such as CAD drawings, can also be used for the input process.
(27) In the information input device of the invention, preferably, the two-dimensional format information is map data, and the map data has specific information sorted into categories including a text, a road, a feature, and an intersection, and the specific information has a region surrounded by roads, a feature area, a road centerline, and a centroid of a feature as position information for selection.
   According to the above-described structure, a further advantage is provided that maps can also be used for the input process.
(28) The information input device of the invention preferably further comprises a print unit that prints the two-dimensional format information displayed on a screen, together with the dot pattern.
   According to the above-described structure, as it is possible to prepare a printed material on which a dot pattern is superimposed and printed with the content displayed on a screen, a further advantage is provided that newly retrieved content can also be used for input.
(29) To solve the above-described problem, the information-processing device of the invention comprises: the information input device; and a relevant information searching unit that searches relevant information of the specific information selected by the information input device, and outputs the searched relevant information.
   According to the above-described structure, since relevant information to the information input by the information input device is output, if a user just touches on the print medium or display using the dot-pattern reading unit, a text, illustration, photograph, and the like on the display are specified and detailed descriptions thereof can be shown on the screen. Therefore, even for a text, illustration, photograph, address and the like for which a link is not set on a web-site and like, information relating thereto can be accessed just by touching them, which provides an advantage that enhances user convenience. It should be noted that the specific information may be an instruction of operation.
(30) In the information-processing device of the invention, preferably, the relevant information searching unit searches the relevant information from a preset link table, database, and/or electronic dictionary.
   According to the above-described structure, an advantage is provided that a text, illustration, photograph, and the like of the touch position is recognized, multimedia information, such as sound information and image information, corresponding to the recognized specific information is searched from an electronic dictionary and database in which corresponding multimedia information is set in advance, and relevant information is automatically output.
(31) In the information-processing unit of the invention, preferably, the link table, the database, and the electronic dictionary are respectively one or more of general-purpose link table, general-purpose database, and general-purpose electronic dictionary, and the relevant information searching unit searches the relevant information from the general-purpose link table, the general-purpose database, and/or the general-purpose electronic dictionary according to a predetermined algorithm.
   According to the above-described structure, since existing general-purpose link table, general-purpose database, and/or general-purpose electronic dictionary on a network can be used, a further advantage is provided that larger number of relevant information can be searched and maintenance of the general-purpose link table, general-purpose database, and/or general-purpose electronic dictionary is not required.
(32) To solve the above-described problem, the information input system of the invention is composed of an information input device, a two-dimensional format information server, and a network connecting the information input device and the two-dimensional format server, and the information input device comprises: a dot-pattern reading unit whose subject is DTP data, HTML, Flash, CAD data, map data and other two-dimensional format information to be printed on a medium, wherein, among information that is visualized as a text, a figure, an illustration, a photograph, and the like, information that meets a predetermined criterion is determined in advance as specific information and formatted, and the dot-pattern reading unit is used to touch on the medium to read a dot pattern at the touch position when a user specifies, by a predetermined operation, the visualized specific information on a medium printed with the two-dimensional information together with a dot pattern that is made into a pattern with an XY coordinate value and/or a code value based on a predetermined algorithm for a variety of multimedia information output and/or operation instruction; a communication unit that transmits input identification information for identifying the two-dimensional format information to the two-dimensional format information server and receives two-dimensional format information corresponding to the identification information from the two-dimensional format information server; a coordinate conversion unit that converts a coordinate value (Xt, Yt) in an XY coordinate system of the dot pattern at the touch position into a coordinate value (xt, yt) in an xy coordinate system of the received two-dimensional format information; and a specific information selecting unit that, using (xi, yi) in the xy coordinate system of the two-dimensional format information as position information for selection, the (xi, yi) being determined when laying out and printing the specific information in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device, and the two-dimensional format information server comprising: a two-dimensional format information storing and selecting unit that, using the identification information received from the information input device, selects the two-dimensional format information corresponding to the identification information among one or more pieces of the two-dimensional format information stored in advance; and a communication unit that receives the identification information from the information input device and transmits the selected two-dimensional format information to the information input device.
   The two-dimensional format information server may be a server that provides two-dimensional format information including specific information for which position information for selection is set, or a general web server. It should be noted that if a general web server is used, position information for selection or specific information is not set for the two-dimensional format information retrieved from the web server, thus, the specific information selecting unit performs analysis to set position information for selection and specific information.
   According to the above-described structure, as the information input device is a client-server-type structure, which retrieves two-dimensional format information corresponding to identification information from the two-dimensional format information server on the network, a further advantage is provided that a plurality of information input devices can share the two-dimensional format information server.
   Also, an advantage is provided that an existing web server and the like can be used as the two-dimensional format information server.
(33) To solve the above-described problem, the information input device of the invention comprises: a dot-pattern reading unit whose subject is DTP data, HTML, Flash, CAD data, map data and other two-dimensional format information to be printed on a medium, wherein, among information that is visualized as a text, a figure, an illustration, a photograph, and the like, information that meets a predetermined criterion is determined in advance as specific information and formatted, and the dot-pattern reading unit is used to touch on the medium to read a dot pattern at the touch position when a user specifies, by a predetermined operation, the visualized specific information on a medium printed with the two-dimensional information together with a dot pattern that is made into a pattern with an XY coordinate value and/or a code value based on a predetermined algorithm for a variety of multimedia information output and/or operation instruction; a communication unit that transmits input identification information for identifying the two-dimensional format information to a two-dimensional format information server and receives two-dimensional format information corresponding to the identification information from the two-dimensional format information server; a coordinate conversion unit that converts a coordinate value (Xt, Yt) in an XY coordinate system of the dot pattern at the touch position into a coordinate value (xt, yt) in an xy coordinate system of the received two-dimensional format information; and a specific information selecting unit that, using the coordinate value (xi, yi) in the xy coordinate system of the two-dimensional format information as position information for selection, the coordinate value (xi, yi) being determined when laying out and printing the specific information in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device.
   According to the above-described structure, since the information input device communicates with the two-dimensional format information server on the network, an advantage is provided that the information input device can use the two-dimensional format information server in its input process.
(34) To solve the above-described problem, the two-dimensional format information server of the invention comprises: a two-dimensional format information storing and selecting unit that, using identification information received from an information input device, selects two-dimensional format information corresponding to the identification information among one or more pieces of the two-dimensional format information stored in advance; and a communication unit that transmits the selected two-dimensional format information to the information input device, the information input device comprising: a dot-pattern reading unit whose subject is DTP data, HTML, Flash, CAD data, map data and other two-dimensional format information to be printed on a medium, wherein, among information that is visualized as a text, a figure, an illustration, a photograph, and the like, information that meets a predetermined criterion is determined in advance as specific information and formatted, and the dot-pattern reading unit is used to touch the medium to read a dot pattern at the touch position when a user specifies, by a predetermined operation, the visualized specific information on a medium printed with the two-dimensional information together with a dot pattern that is made into a pattern with an XY coordinate value and/or a code value according to a predetermined algorithm for a variety of multimedia information output and/or operation instruction; a communication unit that transmits input identification information for identifying the two-dimensional format information to the two-dimensional format information server and receives two-dimensional format information corresponding to the identification information from the two-dimensional format information server; a coordinate conversion unit that converts a coordinate value (Xt, Yt) in an XY coordinate system of the dot pattern at the touch position into a coordinate value (xt, yt) in an xy coordinate system of the received two-dimensional format information; and a specific information selecting unit that, using (xi, yi) in the xy coordinate system of the two-dimensional format information as position information for selection, the (xi, yi) being determined when laying out and printing the specific information in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device.
   According to the above-described structure, since the two-dimensional format information server communicates with the information input device on the network, an advantage is provided the information input device can be provided with two-dimensional format information required for its input process.
(35) To solve the above-described problem, the information input system of the invention is composed of an information input device, a two-dimensional format information server, and a network connecting the information input device and the two-dimensional format server, and the information input device comprises: a display whose subject is DTP data, HTML, Flash, CAD data, map data and other two-dimensional format information to be displayed on the display, wherein, among information that is visualized as a text, a figure, an illustration, a photograph, and the like, information that meets a predetermined criterion is determined in advance as specific information and formatted, and the display displays the two-dimensional format information together with a dot pattern that is made into a pattern with an XY coordinate value and/or a code value based on a predetermined algorithm for a variety of multimedia information output and/or operation instruction; a dot-pattern reading unit that is used to touch on the display to read a dot pattern at the touch position, when a user specifies the visualized specific information on the display by a predetermined operation; a communication unit that transmits input identification information for identifying the two-dimensional format information to a two-dimensional format information server and receives two-dimensional format information corresponding to the identification information from the two-dimensional format information server; a coordinate conversion unit that converts a coordinate value (Xt, Yt) in an XY coordinate system of the dot pattern at the touch position into a coordinate value (xt, yt) in an xy coordinate system of the received two-dimensional format information; and a specific information selecting unit that, using (xi, yi) in the xy coordinate system of the two-dimensional format information as position information for selection, the (xi, yi) being determined when displaying the specific information on the display in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device, and the two-dimensional format information server comprising: a two-dimensional format information storing and selecting unit that, using the identification information received from the information input device, selects the two-dimensional format information corresponding to the identification information among one or more pieces of the two-dimensional format information stored in advance; and a communication unit that receives the identification information from the information input device and transmits the selected two-dimensional format information to the information input device.
   According to the above-described structure, since the information input device is a client-server-type structure, which retrieves two-dimensional format information corresponding to identification information from the two-dimensional format information server on the network, an advantage is provided that a plurality of information input devices can share the two-dimensional format information server.
(36) To solve the above-described problem, the information input device of the invention comprises: a display whose subject is DTP data, HTML, Flash, CAD data, map data and other two-dimensional format information to be displayed on the display, wherein, among information that is visualized as a text, a figure, an illustration, a photograph, and the like, information that meets a predetermined criterion is determined in advance as specific information and formatted, and the display displays the two-dimensional format information together with a dot pattern that is made into a pattern with an XY coordinate value and/or a code value based on a predetermined algorithm for a variety of multimedia information output and/or operation instruction; a dot-pattern reading unit that is used to touch on the display to read a dot pattern at the touch position, when a user specifies the visualized specific information on the display by a predetermined operation; a communication unit that transmits input identification information for identifying the two-dimensional format information to a two-dimensional format information server and receives two-dimensional format information corresponding to the identification information from the two-dimensional format information server; a coordinate conversion unit that converts a coordinate value (Xt, Yt) in an XY coordinate system of the dot pattern at the touch position into a coordinate value (xt, yt) in an xy coordinate system of the received two-dimensional format information; and a specific information selecting unit that, using (xi, yi) in the xy coordinate system of the two-dimensional format information as position information for selection, the (xi, yi) being determined when displaying the specific information on the display in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device.
   According to the above-described structure, since the information input device communicates with the two-dimensional format information server on the network, an advantage is provided that the information input device can use the two-dimensional format information server in its input process.
(37) To solve the above-described problem, the two-dimensional format information server of the invention comprises: a two-dimensional format information storing and selecting unit that, using identification information received from an information input device, selects two-dimensional format information corresponding to the identification information among one or more pieces of the two-dimensional format information stored in advance; and a communication unit that transmits the selected two-dimensional format information to the information input device, the information input device comprising: a display whose subject is DTP data, HTML, Flash, CAD data, map data and other two-dimensional format information to be displayed on the display, wherein, among information that is visualized as a text, a figure, an illustration, a photograph, and the like, information that meets a predetermined criterion is determined in advance as specific information and formatted, and the display displays the two-dimensional format information together with a dot pattern that is made into a pattern with an XY coordinate value and/or a code value according on a predetermined algorithm for a variety of multimedia information output and/or operation instruction; a dot-pattern reading unit that is used to touch on the display to read a dot pattern at the touch position, when a user specifies the visualized specific information on the display by a predetermined operation; a communication unit that transmits input identification information for identifying the two-dimensional format information to a two-dimensional format information server and receives two-dimensional format information corresponding to the identification information from the two-dimensional format information server; a coordinate conversion unit that converts a coordinate value (Xt, Yt) in an XY coordinate system of the dot pattern at the touch position into a coordinate value (xt, yt) in an xy coordinate system of the selected two-dimensional format information; and a specific information selecting unit that, using (xi, yi) in the xy coordinate system of the two-dimensional format information as position information for selection, the (xi, yi) being determined when displaying the specific information on the display in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device.
   According to the above-described structure, since the two-dimensional format information server communicates with the information input device on the network, an advantage is provided that the two-dimensional format information server can provide two-dimensional format information required for input process of the information input device.
(38) To solve the above-described problem, the information input system of the invention is composed of an information input device, a two-dimensional format information server, and a network connecting the information input device and the two-dimensional format server, and the information input device comprises: an information input assisting sheet printed with a dot pattern made into a pattern with an XY coordinate value and/or a code value based on a predetermined algorithm for a variety of multimedia information output and/or operation instruction, whose subject is DTP data, HTML, Flash, CAD data, map data and other two-dimensional format information to be printed on a medium, wherein among information that is visualized as a text, a figure, an illustration, a photograph, and the like, information that meets a predetermined criterion is determined in advance as specific information and formatted, and the information input assisting sheet is placed on a medium printed with the two-dimensional format information or attached on a display that displays the two-dimensional format information; a dot-pattern reading unit that is used to touch on the medium or the display through the information input assisting sheet to read a dot pattern at the touch position, when a user specifies the visualized specific information on the medium or the display by a predetermined operation; a communication unit that transmits input identification information for identifying the two-dimensional format information to the two-dimensional format information server and receives two-dimensional format information corresponding to the identification information from the two-dimensional format information server; a coordinate conversion unit that converts a coordinate value (Xt, Yt) in an XY coordinate system of the dot pattern at the touch position into a coordinate value (xt, yt) in an xy coordinate system of the received two-dimensional format information; and a specific information selecting unit that, using (xi, yi) in the xy coordinate system of the two-dimensional format information as position information for selection, the (xi, yi) being determined when laying out and printing the specific information or determined when displaying the specific information on the display in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device, and the two-dimensional format information server comprising: a two-dimensional format information storing and selecting unit that, using the identification information received from the information input device, selects the two-dimensional format information corresponding to the identification information among one or more pieces of the two-dimensional format information stored in advance; and a communication unit that receives the identification information from the information input device and transmits the selected two-dimensional format information to the information input device.
   According to the above-described structure, since the information input device is a client-server-type structure, which retrieves two-dimensional format information corresponding to identification information from the two-dimensional format information server on a network, an advantage is provided that a plurality of information input devices can share the two-dimensional format information server.
(39) To solve the above-described problem, the information input device of the invention comprises: an information input assisting sheet printed with a dot pattern made into a pattern with an XY coordinate value and/or a code value based on a predetermined algorithm for a variety of multimedia information output and/or operation instruction, whose subject is DTP data, HTML, Flash, CAD data, map data and other two-dimensional format information to be printed on a medium, wherein among information that is visualized as a text, a figure, an illustration, a photograph, and the like, information that meets a predetermined criterion is determined in advance as specific information and formatted, and the information input assisting sheet is placed on a medium printed with the two-dimensional format information or attached on a display that displays the two-dimensional format information; a dot-pattern reading unit that is used to touch on the medium or the display through the information input assisting sheet to read a dot pattern at the touch position, when a user specifies the visualized specific information on the medium or the display by a predetermined operation; a communication unit that transmits input identification information for identifying the two-dimensional format information to a two-dimensional format information server and receives two-dimensional format information corresponding to the identification information from the two-dimensional format information server;
   a coordinate conversion unit that converts a coordinate value (Xt, Yt) in an XY coordinate system of the dot pattern at the touch position into a coordinate value (xt, yt) in an xy coordinate system of the received two-dimensional format information; and a specific information selecting unit that, using (xi, yi) in the xy coordinate system of the two-dimensional format information as position information for selection, the (xi, yi) being determined when laying out and printing the specific information or determined when displaying the specific information on the display in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device.
   According to the above-described structure, since the information input device communicates with the two-dimensional format information server on the network, an advantage is provided that the information input device can use two-dimensional format information server in its input process.
(40) To solve the above-described problem, the two-dimensional format information serverof the invention comprises: a two-dimensional format information storing and selecting unit that, using identification information received from an information input device, selects two-dimensional format information corresponding to the identification information among one or more pieces of the two-dimensional format information stored in advance; and a communication unit that transmits the selected two-dimensional format information to the information input device, the information input device comprising: an information input assisting sheet printed with a dot pattern made into a pattern with an XY coordinate value and/or a code value based on a predetermined algorithm for a variety of multimedia information output and/or operation instruction, whose subject is DTP data, HTML, Flash, CAD data, map data and other two-dimensional format information to be printed on a medium, wherein among information that is visualized as a text, a figure, an illustration, a photograph, and the like, information that meets a predetermined criterion is determined in advance as specific information and formatted, and the information input assisting sheet is placed on a medium printed with the two-dimensional format information or attached on a display that displays the two-dimensional format information; a dot-pattern reading unit that is used to touch on the medium or the display through the information input assisting sheet to read a dot pattern at the touch position, when a user specifies the visualized specific information on the medium or the display by a predetermined operation; a communication unit that transmits input identification information for identifying the two-dimensional format information to a two-dimensional format information server and receives two-dimensional format information corresponding to the identification information from the two-dimensional format information server; a coordinate conversion unit that converts a coordinate value (Xt, Yt) in an XY coordinate system of the dot pattern at the touch position into a coordinate value (xt, yt) in an xy coordinate system of the received two-dimensional format information; and a specific information selecting unit that, using (xi, yi) in the xy coordinate system of the two-dimensional format information as position information for selection, the (xi, yi) being determined when laying out and printing the specific information or determined when displaying the specific information on the display in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device.
   According to the above-described structure, since the two-dimensional format information server communicates with the information input device on the network, an advantage is provided that the two-dimensional format information server can provide two-dimensional format information required for input process of the information input device.
(41) In the information input system of the invention, preferably, the specific information selecting unit recognizes one or more pieces of the specific information in the two-dimensional format information by parsing a text and/or searching a file and/or analyzing an image of a figure, an illustration, a photograph and the like within an arbitrary distance from the coordinate value of the touch position (xt, yt) based on a predetermined algorithm, calculates the position information for selection of the specific information based on a predetermined algorithm, and selects the specific information based on the coordinate value (xt, yt), the recognized specific information, and the calculated position information for selection.
   According to the above-described structure, since, after retrieving two-dimensional format information, the specific information selecting unit performs text-parsing and image analysis within a limited area closed to the touch position among the content, a further advantage is provided that text-parsing and image analysis are done in advance, saving the trouble of preparing the two-dimensional format information for which position information for selection is set.
   Moreover, a further advantage is provided that the analysis is performed in shorter time compared with a case in which text-parsing and image analysis are performed for the entire two-dimensional format information.
(42) In the information input device of the invention, preferably, the specific information selecting unit recognizes one or more pieces of the specific information in the two-dimensional format information by parsing a text and/or searching a file and/or analyzing an image of a figure, an illustration, a photograph and the like within an arbitrary distance from the coordinate value of the touch position (xt, yt) based on a predetermined algorithm, calculates the position information for selection of the specific information based on a predetermined algorithm, and selects the specific information based on the coordinate value (xt, yt), the recognized specific information, and the calculated position information for selection.
   According to the above-described structure, since, after retrieving the two-dimensional format information, the specific information selecting unit performs text-parsing and image analysis within a limited area closed to the touch position among the content, a further advantage is provided that text-parsing and image analysis are done in advance, saving the trouble of preparing the two-dimensional format information for which position information for selection is set.
   Moreover, a further advantage is provided that the analysis is performed in shorter time compared with a case in which text-parsing and image analysis are performed for the entire two-dimensional format information.
(43) In the information input system of the invention, preferably, the specific information is specified in advance by parsing a text and/or searching a file and/or analyzing an image of a figure, an illustration, a photograph, and the like included in the two-dimensional format information, the position information for selection of the specific information is calculated in advance based on a predetermined algorithm, and the two-dimensional format information stores the specific information and the position information for selection.
   According to the above-described structure, as the two-dimensional format information is analyzed in advance, position information for selection is set therefore, and specific information thereof is identified in advance, and, thus, the specific information selecting unit does not have to perform text-parsing or image analysis after retrieving the two-dimensional format information, a further advantage is provided that processing time after retrieving two-dimensional format information until selecting the specific information can be reduced.
(44) In the two-dimensional format information server of the invention, preferably, the specific information is specified in advance by parsing a text and/or searching a file and/or analyzing an image of a figure, an illustration, a photograph, and the like included in the two-dimensional format information, the position information for selection of the specific information is calculated in advance according to a predetermined algorithm, and the two-dimensional format information stores the specific information and the position information for selection.
   According to the above-described structure, as the two-dimensional format information is analyzed in advance, position information for selection is set therefore, and specific information thereof is identified in advance, and, thus, the specific information selecting unit of the information input device does not have to perform text-parsing or image analysis after retrieving the two-dimensional format information, a further advantage is provided that processing time after retrieving two-dimensional format information until selecting the specific information can be reduced.
(45) To solve the above-described problem, the information input method of the inventioncomprises: a dot pattern reading step whose subject is DTP data, HTML, Flash, CAD data, map data and other two-dimensional format information to be printed on a medium, wherein, among information that is visualized as a text, a figure, an illustration, a photograph, and the like, information that meets a predetermined criterion is determined in advance as specific information and formatted, and the dot pattern reading step, using a dot pattern reading unit to touch on the medium, reads a dot pattern at the touch position when a user specifies, by a predetermined operation, the visualized specific information on a medium printed with the two-dimensional information together with a dot pattern that is made into a pattern with an XY coordinate value and/or a code value based on a predetermined algorithm for a variety of multimedia information output and/or operation instruction; a two-dimensional format information storing and selecting step that, using input identification information for identifying the two-dimensional format information, selects the two-dimensional format information corresponding to the identification information among one or more pieces of the two-dimensional format information stored in advance; a coordinate conversion step that converts a coordinate value (Xt, Yt) in an XY coordinate system of the dot pattern at the touch position into a coordinate value (xt, yt) in an xy coordinate system of the selected two-dimensional format information; and a specific information selecting step that, using (xi, yi) in the xy coordinate system of the two-dimensional format information as position information for selection, the (xi, yi) being determined when laying out and printing the specific information in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device.
   According to the above-described structure, if a user touches on information, that the user desires to input, on a medium using the dot-pattern reading unit, the XY coordinate value and/or code value of the touch position is read out. Next, based on the read XY coordinate value and/or code value, the medium touched by the user is identified, and two-dimensional format information corresponding to the medium is retrieved from the two-dimensional format information storing and selecting unit. Then, the coordinate value conversion unit calculates an xy coordinate value of the touch position on two-dimensional format information based on the retrieved two-dimensional format information and XY coordinate value of the touch position on the print medium. Next, using coordinates of the touch position expressed in the xy coordinate system on the two-dimensional format information and position information for selection retained by the specific information in the two-dimensional format information, the specific information selecting unit selects specific information of the touch position as input into the information input device according to a predetermined algorithm. As a result, the invention provides an advantage that allows a user to input specific information that is printed and for which a hyperlink or the like is not set without defining a mask region in advance, embedding a dot code corresponding to the specific information in a mask region, or preparing a dot code and specific information correspondence table that defines in advance specific information corresponding to dot codes.
(46) To solve the above-described problem, the information input method of the invention comprises: a dot pattern reading step whose subject is DTP data, HTML, Flash, CAD data, map data and other two-dimensional format information to be displayed on a display, wherein, among information that is visualized as a text, a figure, an illustration, a photograph, and the like, information that meets a predetermined criterion is determined in advance as specific information and formatted, and the dot pattern reading step, using a dot pattern reading unit to touch on the display, reads a dot pattern at the touch position when a user specifies, by a predetermined operation, the visualized specific information on the display that displays the two-dimensional information and a dot pattern that is made into a pattern with an XY coordinate value and/or a code value based on a predetermined algorithm for a variety of multimedia information output and/or operation instruction; a two-dimensional format information storing and selecting step that, using input identification information for identifying the two-dimensional format information, selects the two-dimensional format information corresponding to the identification information among one or more pieces of the two-dimensional format information stored in advance; a coordinate conversion step that converts a coordinate value (Xt, Yt) in an XY coordinate system of the dot pattern at the touch position into a coordinate value (xt, yt) in an xy coordinate system of the selected two-dimensional format information; and a specific information selecting step that, using (xi, yi) in the xy coordinate system of the two-dimensional format information as position information for selection, the (xi, yi) being determined when displaying the specific information on the display in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device.
   According to the above-described structure, if a user touches on information, that the user desires to input, on a display using the dot-pattern reading unit, the XY coordinate value and/or code value of the touch position are read out. Next, based on the read XY coordinate value and/or code value, the content touched by the user is identified, and two-dimensional format information corresponding to the content is retrieved from the two-dimensional format information storing and selecting unit. Then, the coordinate value conversion unit calculates an xy coordinate value of the touch position on two-dimensional format information based on the retrieved two-dimensional format information and the XY coordinate value of the touch position on the display. Next, using coordinates of the touch position expressed in the xy coordinate system on the two-dimensional format information and position information for selection retained by the specific information in the two-dimensional format information, the specific information selecting unit selects specific information of the touch position as input into the information input device according to a predetermined algorithm. As a result, the invention provides an advantage that allows a user to input specific information displayed on a display and for which a hyperlink or the like is not set, without defining a mask region in advance, embedding a dot code corresponding to the specific information in a mask region, or preparing a dot code-specific information correspondence table that defines in advance specific information corresponding to dot codes.
(47) To solve the above-described problem, the information input method of the invention comprises: a dot pattern reading step that reads a dot pattern of a touch position using: an information input assisting sheet printed with a dot pattern made into a pattern with an XY coordinate value and/or a code value based on a predetermined algorithm for a variety of multimedia information output and/or operation instruction, whose subject is DTP data, HTML, Flash, CAD data, map data and other two-dimensional format information to be printed on a medium, wherein among information that is visualized as a text, a figure, an illustration, a photograph, and the like, information that meets a predetermined criterion is determined in advance as specific information and formatted, and the information input assisting sheet is placed on a medium printed with the two-dimensional format information or attached on a display that displays the two-dimensional format information; and a dot-pattern reading unit that is used to touch on the medium or the display through the information input assisting sheet to read a dot pattern at the touch position, when a user specifies the visualized specific information on the medium or the display by a predetermined operation; a two-dimensional format information storing and selecting step that, using input identification information for identifying the two-dimensional format information, selects the two-dimensional format information corresponding to the identification information among one or more pieces of the two-dimensional format information stored in advance; a coordinate conversion step that converts a coordinate value (Xt, Yt) in an XY coordinate system of the dot pattern at the touch position into a coordinate value (xt, yt) in an xy coordinate system of the selected two-dimensional format information; and a specific information selecting unit that, using (xi, yi) in the xy coordinate system of the two-dimensional format information as position information for selection, the (xi, yi) being determined when laying out and printing the specific information or determined when displaying the specific information on the display in order to specify a position of the specific information in the xy coordinate system of the two-dimensional format information, calculates a distance from the coordinate value (xt, yt) in the xy coordinate system of the two-dimensional format information that is converted from the coordinate value (Xt, Yt) of the dot pattern of the touch position to one or more pieces of position information for selection within a predetermined distance, and selects specific information having coordinates of the closest position information for selection as input into a local device.
   According to the above-described structure, a user inputs information that identifies printed or displayed content when necessary. Two-dimensional format information corresponding to the content is retrieved from the two-dimensional format information storing and selecting unit. Next, if a user touches on information, that the user desired to input, through the information input assisting sheet using the dot-pattern reading unit, the XY coordinate value and/or code value of the touch position is read out. Then, the coordinate conversion unit calculates an xy coordinate value of the touch position on the two-dimensional format information based on the retrieved two-dimensional format information and the XY coordinate value of the touch position on the information input assisting sheet. Next, the specific information selecting unit selects the specific information of the touch position as a input into the information input device using coordinates of the touch position expressed in the xy coordinate system of the two-dimensional format information and position information for selection retained by each specific information in the two-dimensional format information, according to a predetermined algorithm. As a result, the invention provides an advantage that allows a user to input printed or displayed specific information for which a hyperlink or the like is not set without defining a mask region in advance, embedding a dot code corresponding to the specific information in a mask region, or preparing a dot code and specific information correspondence table that defines in advance specific information corresponding to dot codes even when a dot pattern is not printed on a printed material such as a book, a magazine, and a newspaper.
(48) In the information input method of the invention, preferably, the specific information selecting step further comprises steps of: recognizing one or more pieces of the specific information by parsing a text and/or searching a file and/or analyzing an image of a figure, an illustration, a photograph and the like within an arbitrary distance from the coordinate value of the touch position (xt, yt) according to a predetermined algorithm in the two-dimensional format information; calculating the position information for selection of the specific information according to a predetermined algorithm; and selecting the specific information based on the coordinate value (xt, yt), the recognized specific information, and the calculated position information for selection.
   According to the above-described structure, since, after retrieving two-dimensional format information, the specific information selecting step, performs text-parsing and image analysis within a limited area close to the touch position among the content, the text-parsing and image analysis are done in advance, which provides a further advantage that saves the trouble of preparing two-dimensional format information for which position information for selection is set.
   Moreover, a further advantage is provided that the analysis can be done in shorter time compared with a case in which the entire two-dimensional format information is subject to the text-parsing and image analysis.
(49) In the information input method of the invention, preferably, the specific information is specified in advance by parsing a text and/or searching a file and/or analyzing an image of a figure, an illustration, a photograph, and the like included in the two-dimensional format information, the position information for selection of the specific information is calculated in advance based on a predetermined algorithm, and the two-dimensional format information stores the specific information and the position information for selection.
   According to the above-described structure, since the two-dimensional format information is analyzed, position information for selection is set therefor, and specific information thereof is identified in advance, and, thus, the specific information selecting step does not have to perform text-parsing or image analysis after retrieving the two-dimensional format information, a further advantage is provided that processing time after retrieving two-dimensional format information until selecting the specific information can be reduced.
(50) It should be noted that the information input device and information processing device may be realized using hardware or a program run by a computer. Specifically, the program of the invention is a computer-operable control program at least as the above-described coordinate conversion unit, specific information selecting unit, or relevant information searching unit, and the recording medium of the invention stores the control program.

If this control program is run by a computer, the computer operates as the information input device or information processing device. Therefore, similarly to the information input device or information processing device, an advantage is provided that a user can input printed or displayed specific information for which a hyperlink or the like is not set without defining a mask region, embedding a dot code corresponding to the specific information in a mask region, or preparing a dot code and specific information correspondence tale that defines in advance specific information corresponding to dot codes.

### Advantage of the Invention

As described above, the information input device of the invention features comprising: a dot-pattern reading unit used to touch on a medium to read a dot pattern of the touch position when a user specifies, by a predetermined operation, visualized specific information on the medium printed with two-dimensional format information that is formed by formatting specific information visualized as a text, a figure, illustration, photograph, and the like together with a dot pattern that is made into a pattern with an XY coordinate value and/or code value based on a predetermined algorithm for a variety of multimedia information output and/or operation instruction; a two-dimensional format information storing and selecting unit that, using input identification information for identifying the two-dimensional format information, selects the two-dimensional format information corresponding to the identification information among one or more pieces of the two-dimensional format information stored in advance; a coordinate conversion unit that converts the coordinate value (Xt, Yt) of the touch position in an XY coordinate system of the dot pattern into a coordinate value (xt, yt) in an xy coordinate system of the selected two-dimensional format information; and a specific information selecting unit that, using position information for selection retained by the specific information to specify a position of the specific information in the xy coordinate system of the two-dimensional format information, selects specific information having coordinates of the position information for selection, that is within an arbitrary distance from and closest to the coordinate value (xt, yt) in the xy coordinate system of the two-dimensional format information converted from the coordinate value (Xt, Yt) in the dot pattern of the touch position, as input into the local device.

Further, to solve the above-described problem, the information input device of the invention features comprising: a display that displays two-dimensional format information that is formed by formatting specific information visualized as a text, a figure, illustration, photograph, and the like together with a dot pattern that is made into a pattern with an XY coordinate value and/or code value based on a predetermined algorithm for a variety of multimedia information output and/or operation instruction; a dot-pattern reading unit that is used to touch on the display to read a dot pattern of the touch position when a user specifies the visualized specific information on the display by a predetermined operation; a two-dimensional format information storing and selecting unit that, using input identification information for identifying the two-dimensional format information, selects the two-dimensional format information corresponding to the identification information among one or more pieces of the two-dimensional format information stored in advance; a coordinate conversion unit that converts the coordinate value (Xt, Yt) in an XY coordinate system of the dot pattern at the touch position into a coordinate value (xt, yt) in an xy coordinate system of the selected two-dimensional format information; and a specific information selecting unit that, using position information for selection retained by the specific information to specify a position of the specific information in the xy coordinate system of the two-dimensional format information, selects specific information having coordinates of the position information for selection, that is within an arbitrary distance from and closest to the coordinate value (xt, yt) in the xy coordinate system of the two-dimensional format information converted from the coordinate value (Xt, Yt) in the dot pattern of the touch position, as input into the local device.

Further, as described above, the information input device of the invention features comprising: an information input assisting sheet printed with a dot pattern made into a pattern with an XY coordinate value and/or code value based on a predetermined algorithm for a variety of multimedia information output and/or operation instruction and placed on a medium printed with two-dimensional format information that is formed by formatting specific information visualized as a text, figure, illustration, photograph, and the like or attached on a display that displays the two-dimensional format information; a dot-pattern reading unit that is used to touch on the medium or the display through the information input assisting sheet to read a dot pattern at the touch position when a user specifies the visualized specific information on the medium or the display by a predetermined operation; a two-dimensional format information storing and selecting unit that, using input identification information for identifying the two-dimensional format information, selects the two-dimensional format information corresponding to the identification information among one or more pieces of the two-dimensional format information stored in advance; a coordinate conversion unit that converts the coordinate value (Xt, Yt) of the touch position in an XY coordinate system of the dot pattern into a coordinate value (xt, yt) in an xy coordinate system of the selected two-dimensional format information; and a specific information selecting unit that, using position information for selection retained by the specific information to specify a position of the specific information in the xy coordinate system of the two-dimensional format information, selects specific information having coordinates of the position information for selection, that is within an arbitrary distance from and closest to the coordinate value (xt, yt) in the xy coordinate system of the two-dimensional format information converted from the coordinate value (Xt, Yt) of the dot pattern of the touch position, as input into the local device.

Further, as described above, the information input method of the invention features comprising: a dot-pattern reading step that, using a dot pattern reading unit to touch on a medium, reads a dot pattern of the touch position when a user specifies, by a predetermined operation, visualized specific information on the medium printed with two-dimensional format information that is formed by formatting specific information visualized as a text, figure, illustration, photograph, and the like, as well as a dot pattern that is made into a pattern with an XY coordinate value and/or code value based on a predetermined algorithm for a variety of multimedia information output and/or operation instruction; a two-dimensional format information storing and selecting step that, using input identification information for identifying the two-dimensional format information, selects the two-dimensional format information corresponding to the identification information among one or more pieces of the two-dimensional format information stored in advance; a coordinate conversion step that converts the coordinate value (Xt, Yt) of the touch position in an XY coordinate system of the dot pattern into a coordinate value (xt, yt) in an xy coordinate system of the selected two-dimensional format information; and a specific information selecting step that, using position information for selection retained by the specific information to specify a position of the specific information in the xy coordinate system of the two-dimensional format information, selects specific information having coordinates of the position information for selection, that is within an arbitrary distance from and closest to the coordinate value (xt, yt) in the xy coordinate system of the two-dimensional format information converted from the coordinate value (Xt, Yt) in the dot pattern of the touch position, as input into the local device.

Further, as described above, the information input method of the invention features comprising: a dot-pattern reading step that, using a dot pattern reading unit to touch on a display, reads a dot pattern at the touch position when a user specifies, by a predetermined operation, visualized specific information on the display that displays two-dimensional format information that is formed by formatting specific information visualized as a text, figure, illustration, photograph, and the like and a dot pattern that is made into a pattern with an XY coordinate value and/or code value based on a predetermined algorithm for a variety of multimedia information output and/or operation instruction; a two-dimensional format information storing and selecting step that, using input identification information for identifying the two-dimensional format information, selects the two-dimensional format information corresponding to the identification information among one or more pieces of the two-dimensional format information stored in advance; a coordinate conversion step that converts the coordinate value (Xt, Yt) of the touch position in an XY coordinate system of the dot pattern into a coordinate value (xt, yt) in an xy coordinate system of the selected two-dimensional format information; and a specific information selecting step that, using position information for selection retained by the specific information to specify a position of the specific information in the xy coordinate system of the two-dimensional format information, selects specific information having coordinates of the position information for selection, that is within an arbitrary distance from and closest to the coordinate value (xt, yt) in the xy coordinate system of the two-dimensional format information converted from the coordinate value (Xt, Yt) in the dot pattern of the touch position, as input into the local device.

Further, as described above, the information input method of the invention features comprising: a dot-pattern reading step that reads a dot pattern at a touch position using: an information input assisting sheet printed with a dot pattern made into a pattern with an XY coordinate value and/or code value based on a predetermined algorithm for a variety of multimedia information output and/or operation instruction and placed on a medium printed with two-dimensional format information that is formed by formatting specific information visualized as a text, figure, illustration, photograph, and the like or attached on a display that displays the two-dimensional format information; and a dot-pattern reading unit that is used to touch on the medium or the display through the information input assisting sheet to read a dot pattern at the touch position when a user specifies the visualized specific information on the medium or the display by a predetermined operation; a two-dimensional format information storing and selecting step that, using input identification information for identifying the two-dimensional format information, selects the two-dimensional format information corresponding to the identification information among one or more pieces of the two-dimensional format information stored in advance; a coordinate conversion step that converts the coordinate value (Xt, Yt) of the touch position in an XY coordinate system of the dot pattern into a coordinate value (xt, yt) in an xy coordinate system of the selected two-dimensional format information; and a specific information selecting step that, using position information for selection retained by the specific information to specify a position of the specific information in the xy coordinate system of the two-dimensional format information, selects specific information having coordinates of the position information for selection, that is within an arbitrary distance from and closest to the coordinate value (xt, yt) in the xy coordinate system of the two-dimensional format information converted from the coordinate value (Xt, Yt) in the dot pattern of the touch position, as input into the local device.

As a result, the invention provides an advantage that allows a user to input printed or displayed specific information for which a hyperlink or the like is not set, without defining a mask region in advance, embedding a dot code corresponding to the specific information in a mask region, or preparing a dot code and specific information correspondence tale that defines in advance specific information corresponding to dot codes.

### BRIEF DESCRIPTION OF THE DRAWINGS

Figures 1A and 1B are diagrams showing an overview of the first embodiment of the invention. Figure 1A is a diagram showing how the operation is performed, and Figure 1B is a diagram showing how specific information is selected.
Figure 2 is a diagram showing constituents of a dot pattern 3 and a position relationship thereamong.
Figures 3A and 3B are diagrams showing examples of information defining methods by way of arrangements of information dot 7. Figure 3A is an example in which 3 bit information is expressed, and Figure 3B is an example of information dot 7 that has 2 bit information.
Figure 4 is an example of an information defining method by way of another arrangement of an information dot 7.
Figures 5A to 5C are diagrams showing examples of information defining methods by way of arrangements of a plurality of information dots 7 per grid. Figure 5A is an example in which two information dots 7 are arranged; Figure 5B is an example in which four information dots 7 are arranged; and Figure 5C is an example in which five information dots 7 are arranged.
Figure 6 is a diagram showing an example of a format used when extracting information dot 7 from a dot pattern 3.
Figures 7A to 7D are diagrams showing other examples of arrays of grids that include information dots 7. Figure 7A is an example that arranges 6 (2 x 3) grids in a block; Figure 7B is an example that arranges 9 (3 x 3) grids; Figure 7C is an example that arranges 12 (3 x 4) grids; and, Figure 7C is an example that arranges 36 grids.
Figures 8A to 8C are diagrams showing other examples of dot pattern 3b. Figure 8A is a diagram showing a position relationship among reference point dots 8a to 8e, virtual reference points 9a to 9d, and an information dot 7 in a dot pattern 3b; Figure 8B is an example in which information is defined based on the fact that whether there is an information dot 7 on virtual reference points 9a to 9d; and, Figure 8C is a diagram showing an example in which each two blocks are connected in horizontal and vertical directions respectively.
Figure 9 is a diagram showing a format example of information bits within a block of a dot pattern 3.
Figures 10A to 10C are diagram showing format examples of dot codes. Figure 10A is an example in which a dot code includes XY coordinate values, a code value and a parity; Figure 10B is an example in which formats are varied depending on a position where a dot pattern 3 is provided; and Figure 10C is an example in which a dot code includes XY coordinate values and a parity.
Figures 11A to 11C are section views of printed material 1a. Figure 11A is a diagram showing how infrared rays are diffusely reflected from an unprinted part of a print medium 1c. Figure 11B is a diagram showing how infrared rays are diffusely reflected from a printed part of a printed medium 1a. Figure 11C is a diagram showing how infrared rays reach and are absorbed into a dot pattern 3.
Figure 12 is a diagram showing a structure of a part of a scanner 4 for reading a dot pattern 3 and how the dot pattern 3 on a printed material 1a is read.
Figure 13 is a functional block diagram of information input device 5 of the first embodiment.
Figures 14A to 14C are diagrams showing examples in which a coordinate value of the center of an object or a coordinate value of the centroid of an object is used as position information for selection. Figure 14A is a case in which specific information is a text; Figure 14B is a case in which specific information is a figure; and Figure 14C is a case in which specific information is an illustration or a photograph.

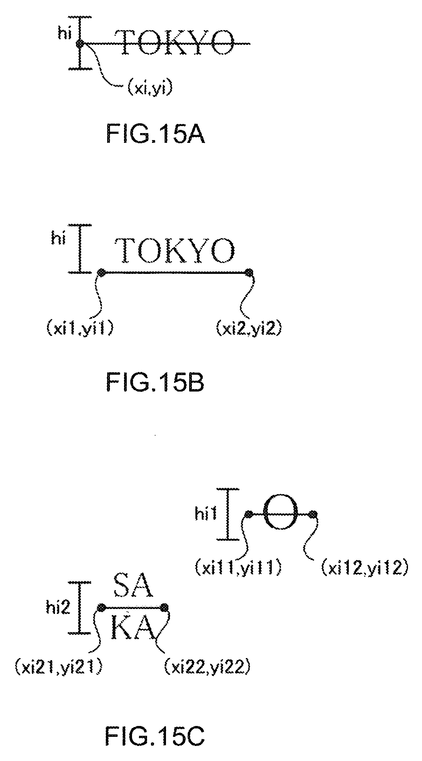

Figures 15A to 15C are diagrams showing further examples of position information for selection. Figure 15A is an example in which coordinates of the starting point of a word and the height of the word are used as position information for selection; Figure 15B is an example in which coordinates of the starting point of a word, coordinates of the end point of the word and the height of the word are used as position information for selection; and, Figure 15C is an example in which letters constituting a word are apart from each other, and coordinates of the starting point of each letter, coordinates of the end point of each letter and the height of each letter are used as position information for selection.
Figure 16 is a diagram showing an example of operation in which a user touches a single point of specific information that the user desires to specify.
Figure 17 is a diagram showing an example of operation in which a user drags the scanner over specific information that the user desires to specify.
Figure 18 is a diagram showing an example of an operation in which a user drags the scanner around specific information to encircle the specific information that the user desires to specify.
Figures 19A and 19B are diagrams showing examples of methods for selecting specific information. Figure 19A is a case in which the foot of a perpendicular drawn from a touch position to a line segment does not cross the line segment. Figure 19B is a case in which the foot of a perpendicular drawn from a touch position to a line segment crosses the line segment.
Figures 20A and 20B are diagrams showing examples of methods for selecting specific information. Figure 20A is a case in which a touch position is within a mask region 2b. Figure 20B is a case in which a touch position is neither in a mask region 2b nor mask region 2b'.
Figure 21 is a diagram showing an example of a method for selecting specific information.
Figure 22 is a flowchart of a procedure of information input process performed by information input device 5.
Figure 23 is a flowchart illustrating details of a process for selecting specific information performed in process S40.
Figure 24 is a functional block diagram of information input device 5a of the second embodiment.
Figure 25 is a functional block diagram of information processing device 12 of the third embodiment.
Figure 26 is a flowchart illustrating a procedure of information processing performed by information processing device 12.
Figure 27 is a diagram showing how information processing device 12 performs the information processing.
Figure 28 is a diagram illustrating an overview of the forth embodiment.
Figures 29A and 29B are section views of an organic electro-luminescence display provided with a dot part. Figure 29A is a diagram showing how infrared rays entering into the dot part are transmitted through or absorbed into the dot part. Figure 29B is a diagram showing how infrared rays entering into light emitting elements other that the dot part are diffusely reflected.
Figures 30A and 30B are diagrams showing examples in which dot parts are provided on a screen of a front projector or a rear projector. Figure 30A is a diagram showing how infrared rays entering into the dot part are transmitted through or absorbed into the dot part. Figure 30B is a diagram showing how infrared rays entering into light emitting elements other that the dot part are diffusely reflected.
Figure 31 is a functional block diagram of information processing device 12b of the forth embodiment.
Figure 32 is a flowchart illustrating a procedure of information processing per formed by information processing device 12b.
Figure 33 is a diagram showing an overview of the fifth embodiment.
Figure 34 is a front view of a surface of a grid sheet 1g.
Figures 35A and 35B are diagrams showing a method using a grid sheet 1g. Figure 35A is a case in which the grid sheet 1g is used on a right-hand page. Figure 35B is a case in which the grid sheet 1g is used on a left-hand page.
Figure 36 is a section view showing an example of the internal structure of the grid sheet 1g.
Figure 37 is a section view showing an example of the internal structure of the grid sheet 1g.
Figure 38 is a section view showing an example of the internal structure of the grid sheet 1g.
Figure 39 is a diagram showing an overview of the sixth embodiment.
Figure 40 is a diagram showing an overview of the seventh embodiment.
Figure 41 is a functional block diagram of television receiver 12e of the seventh embodiment.
Figure 42 is a flowchart illustrating a procedure of information processing performed by television receiver 12e.
Figure 43 is a diagram showing a conventional technique.
Figure 44 is a diagram showing a conventional technique.

### Description of Numerals and Signs

1a PRINTED MATERIAL (MEDIUM)
1b DTP DATA (TWO-DIMENSIONAL FORMAT INFORMATION)
1c PRINT MEDIUM (MEDIUM)
1d CONTENT DATA (TWO-DIMENSIONAL FORMAT INFORMATION)
1g GRID SHEET (INFORMATION INPUT ASSISTING SHEET)
2a WORD (SPECIFIC INFORMATION)
2b MASK REGION (POSITION INFORMATION FOR SELECTION)
3 DOT PATTERN
4-4c SCANNER (DOT-PATTERN READING MEANS)
5-5a INFORMATION INPUT DEVICE
6 KEY DOT
7 INFORMATION DOT
8 REFERENCE GRID POINT DOT
9 VIRTUAL GRID POINT
9a-9d VIRTUAL REFERENCE POINT
12-12d INFORMATION PROCESSING DEVICE
12e TELEVISION RECEIVER (INFORMATION PROCESSING DEVICE)
13 DOCUMENT MANAGEMENT SERVER (TWO-DIMENSIONAL FORMAT INFORMATION SERVER)
13b WEB SERVER (TWO-DIMENSIONAL FORMAT INFORMATION SERVER)
13c CONTENT SERVER (TWO-DIMENSIONAL FORMAT INFORMATION SERVER)
15 DISPLAY
20-20a DOCUMENT MANAGEMENT UNIT (TWO-DIMENSIONAL FORMAT INFORMATION STORING AND SELECTING MEANS)
30-30b COORDINATE CONVERSION UNIT (COORDINATE CONVERSION MEANS)
40-40c SPECIFIC INFORMATION SELECTING UNIT (SPECIFIC INFORMATION SELECTING MEANS)
50-50c COMMUNICATION UNIT (COMMUNICATION MEANS)
51 COMMUNICATION UNIT (COMMUNICATION MEANS)
60 RELEVANT INFORMATION SEARCHING UNIT (RELEVANT INFORMATION SEARCHING MEANS)

### DETAILED DESCRIPTION OF THE INVENTION

### [First Embodiment]

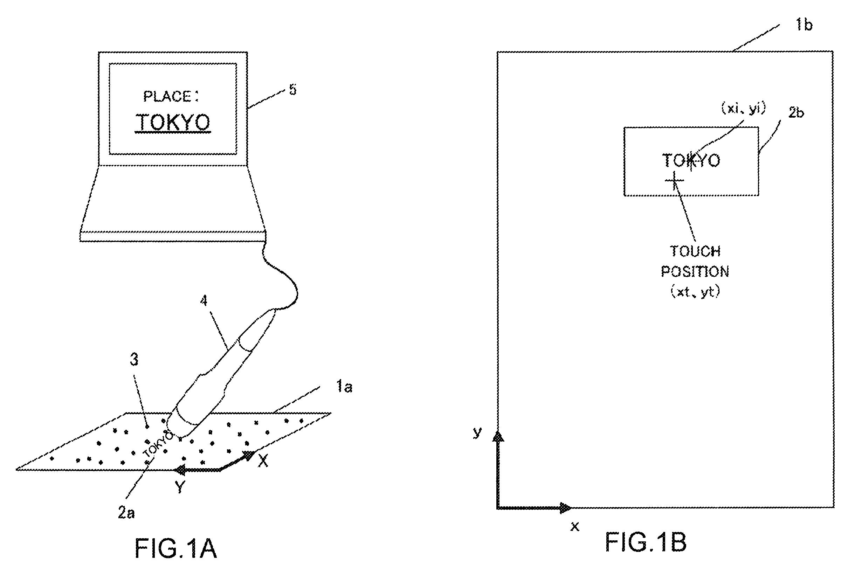

An embodiment using a medium printed with a dot pattern together with content is described among the information input devices of the invention with reference to Figures 1 to 23 as follows.

### <Overview>

Figures 1A and 1B show an overview of this embodiment. Figure 1A is a diagram showing an operation of this embodiment. Figure 1B is a diagram showing how specific information is selected.

As shown in Figure 1A, firstly, a user touches on information, that the user desires to input into the information input device 5, on a printed material 1a (a medium) printed with content together with a dot pattern 3 (details are described later) using a scanner 4 (a dot pattern reading means).

In this example, since the user wants to input a word "Tokyo" in kanji (Japanese character) in a position box of the input form displayed on the screen of the information input device 5, the user touches the word "Tokyo" 2a in kanji printed on the printed material 1a using the scanner 4.

In the dot pattern 3, XY coordinate values on the printed material 1a and a document ID for identifying the printed material 1a (identification information) are made into a code. When the user touches the printed material 1a with the scanner 4, a coordinate value (Xt, Yt) on the touch position in the XY coordinate system of the printed material 1a and the document ID of the printed material 1a are read in the information input device 5.

The information input device 5 recognizes the existence of the word "Tokyo" 2a in kanji at the touch position from the read XY coordinate value, the document ID, and DTP (Desk Top Publishing) data 1b (two-dimensional format information) that is electronic data and the original data of the printed material 1a prepared in advance (details are described later), and the word "Tokyo" 2a in kanji is input into the information input device 5.

The example shown in Figure 1A shows how the word "Tokyo" 2a in kanji that was input into the information input device 5 is entering in the position box of the input form displayed on the screen.

As shown in Figure 1B, the DTP data 1b has its own xy coordinate system. The text, figure, illustration, photograph, and the like (specific information) included in the DTP data 1b are set with position information for selection used for selecting them.

For example, the word "Tokyo" 2a in kanji is set with a corresponding mask region 2b and/or coordinate value of the center (xi, yi) of the word.

Figure 1B shows an example of a position relationship among the coordinate value (xt, yt) of a touch position in DTP data 1b that is converted from the coordinate value (Xt, Yt) of the touch position on the printed material 1a touched by the scanner 4, a mask region 2b corresponding to the word "Tokyo" 2a in kanji, and the coordinate value (xi, yi) of the center of the mask region 2b.

For example, if the coordinate value (xt, yt) of the touch position is included in the mask region 2b, the word "Tokyo" 2a in kanji is selected as an input into the information input device 5 from many pieces of specific information included in the DTP data 1b.

It should be noted that the method for selecting specific information may be a method for selecting the word "Tokyo" 2a in kanji as an input based on the fact that the distance from the coordinate value (xt, yt) of the touch position to the coordinate value (xi, yi) of the center of the word "Tokyo" 2a in kanji is shorter than the distance from the coordinate value of the touch position (xt, yt) to the coordinate value of the center of other specific information (xi, yi). The details of the method for selecting specific information are described later.

### <Dot Pattern>

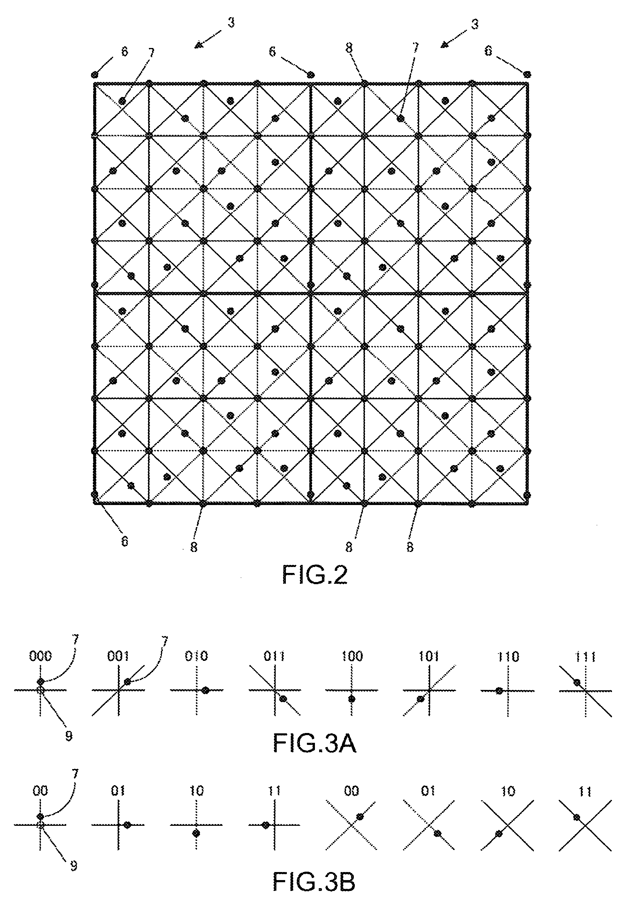

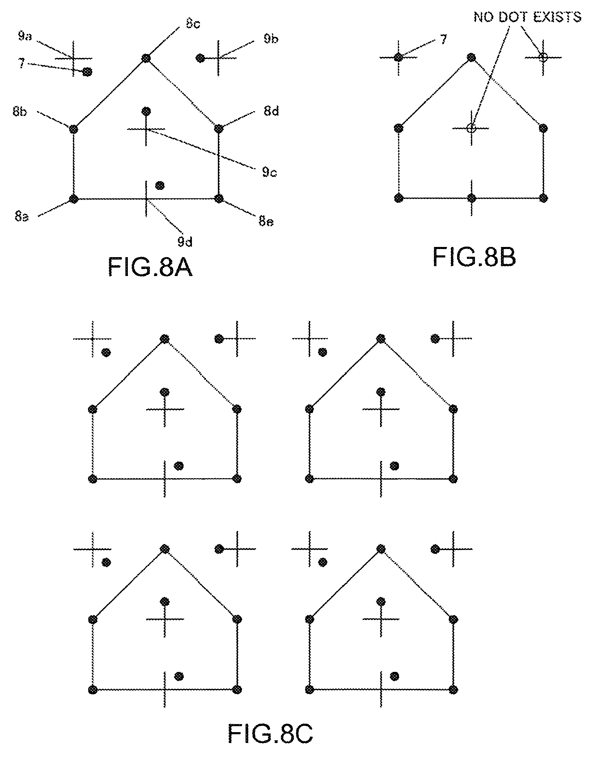

An example of dot pattern 3 used in this embodiment (hereinafter, referred to as GRID1) is described with reference to Figures 2 to 7D. Also, an example of another dot pattern 3b (hereinafter, referred to as GRID5) is described with reference to Figures 8A to 8C. It should be noted that, in these drawings, grid lines of horizontal, vertical, and diagonal directions are added for convenience of description, and do not exist in actual printed surfaces.

Figure 2 shows constituent elements of dot pattern 3 and the position relationship among them. The dot pattern 3 is composed of a key dot 6, an information dot 7, and a reference grid point dot 8.

The dot pattern 3 is generated by arranging fine dots, that is, a key dot 6, an information dot 7, and a reference grid point dot 8, in accordance with a predetermined rule based on a dot code generation algorithm for causing recognition of numerical information.

As shown in Figure 2, a block of a dot pattern 3 that represents information is structured by arranging 5 x 5 reference grid point dots 8 with reference to a key dot 6 and arranging an information dot 7 around a virtual grid point at the center surrounded by four reference grid point dots 8. This block defines arbitrary numerical information. It should be noted that, in the example of Figure 2, the case in which four blocks of dot pattern 3 are arranged in parallel (in bold frame) is shown, provided, however, the dot pattern 3 is not limited to four blocks.

A key dot 6 is a dot arranged by shifting four reference grid point dots 8 at the four corners of a block in a certain direction as shown in Figure 2. This key dot 6 is a representative point of a block of a dot pattern 3 including an information dot 7. For example, this is a dot obtained by shifting reference grid point dots 8 at four corners of a block of a dot pattern 3 by 0.1 mm upward. However, this numerical value is not limited to this, and may vary in accordance with the size of a block of a dot pattern 3.

Preferably, the displacement of a key dot 6 is approximately 20% of a grid gap in order to avoid false recognition with a reference grid point dot 8 and information dot 7.

An information dot 7 is a dot used for recognition of a variety of information. The information dot 7 is arranged around a representative point of a key dot 6 as well as arranged at the end point of a vector that is expressed by having the starting point of a virtual grid point at the center of a grid surrounded by four reference grid point dots 8.

The gap between an information dot 7 and a virtual grid point surrounded by four reference grid point dots 8 is preferably a gap approximately 15 to 30% of the distance between the information dot 7 and an adjacent virtual grid point. If the gap between the information dot 7 and the virtual grid point is closer than this gap, the dots are easily recognized as a large cluster, degrading visual quality of the dot pattern 3. On the other hand, if the distance between an information dot 7 and a virtual grid point is longer than this gap, it is difficult to judge which one of adjacent virtual grid points is the starting point of the vector of the information dot 7 with a vector directionality.

When retrieving a dot pattern 3 as image data using the scanner 4, the reference grid point dot 8 can calibrate a distortion attributable to the lens of the scanner 4, a skewed imaging, contraction and expansion of a paper surface, curved medium surface, and a distortion during printing. Specifically, a function for calibration that converts distorted four reference grid point dots 8 into the original square (Xn, Yn) = f(Xn', Yn') is calculated, and an information dot 7 is calibrated to calculate the vector of the correct information dot 7 using the same function.

If the reference grid point 8 is arranged in a dot pattern 3, a distortion due to the scanner 4 is calibrated in image data generated by retrieving this dot pattern 3 by the scanner 4. Thus, the dot arrangement can be correctly recognized even when retrieving the image data of the dot pattern 3 using a popular scanner 4 with a lens of high distortion rate. Further, the dot pattern 3 can be accurately recognized even when being read by the scanner 4 inclined with reference to the surface of the dot pattern 3.

The key dot 6, information dot 7, and reference grid point dot 8 are preferably printed with an invisible ink or a carbon ink which absorbs the infrared light when the scanner 4 reads dots by infrared ray irradiation.

If the dot pattern 3 is printed with a conventional inkjet printer or the like, the gap between reference grid point dots 8 (that is, the size of a grid) may be approximately 0.5 mm. If printing with offset printing, the gap may be minimum of approximately 0.3 mm.

If the dot pattern 3 is formed using an exposure technology or the like in a semiconductor manufacturing process, the gap between reference grid points 8 may be some several micro meters, or if a design rule of nano meter units is used, a dot pattern 3 with finer dot gaps may be formed.

It should be appreciated that the gap between reference grid point dots 8 may be any value depending on the use purpose of a dot pattern 3 as long as the gap is equal to or more than the minimum value mentioned above.

Further, the diameter of a key dot 6, information dot 7, and reference grid point dot 8 is preferably approximately 10% of the gap between the reference grid point dots 8.

Figures 3A to 4 show an example of an information defining method by way of arrangements of information dot 7. Figures 3A to 4 are enlarged drawings showing an example of positions of information dot 7 and bit expressions of information defined by the positions.

Figure 3A shows an example of a defining method in which an information dot 7 is shifted from a virtual grid point 9 (for example, 0.1 mm) so that the information dot 7 has a length and direction when expressed as a vector, and the information dot 7 is disposed in eight directions by rotating 45 degrees each in a clockwise direction to express 3 bit information. In this example, 16 information dots 7 are included in a block, which can express information of 3 bits × 16 = 48 bits.

Figure 3B shows a defining method of an information dot 7 when a dot pattern 3 has 2-bit information per grid. In this example, 2 bit-information is defined for each information dot 7 by shifting the information dot 7 in a plus (+) direction and a diagonal (×) direction from a virtual grid point 9. In this defining method, unlike the defining method shown in Figure 3A (48 bit information can be defined indeed), 32 bit (2 bits × 16 grids) data can be given by dividing a block into grids shifted in a plus (+) direction and grids shifted in a diagonal (x) direction.

It should be noted that maximum of 2¹⁶ (approximately 65,000) patterns of dot pattern formats can be realized by combining plus (+) direction shifting and diagonal (x) direction shifting for each grid as a combination of shifting directions of information dot 7 arranged in 16 grids included in a block.

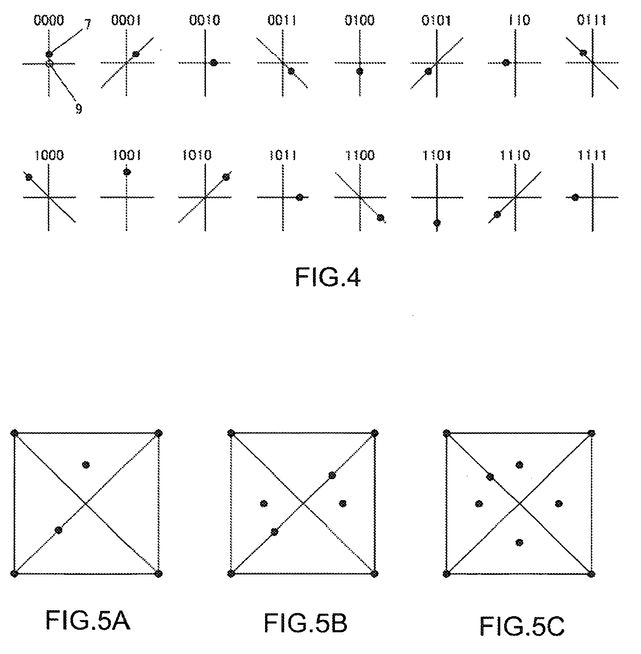

Figure 4 shows an example of an information defining method by way of arrangements of information dot 7. This defining method can express 4-bit information by arranging an information dot 7 using two types of displacemenet amounts, that is, long and short from a virtual grid point 9 surrounded by reference grid point dots 8, in eight vector directions, thereby defining 16 pattern arrangements.

When using this defining method, the displacement amount of the long one is preferably approximately 25 to 30% of the distance between adjacent virtual gird points 9, and the displacement amount of the short one is approximately 15 to 20 % thereof, provided, however, if the long and short information dots 7 are shifted in the same direction, the gap between the centers of the information dots 7 is preferably longer than the diameter of each information dot 7.

It should be noted that the method for defining 4-bit information is not limited to the above-described defining method and 4 bits can be expressed by arranging an information dot 7 in 16 directions or may vary in many ways.

Figures 5A to 5C show an example of an information defining method by way of arrangements of a plurality of information dots 7 per grid. Figure 5A is an example of arranging two information dots 7; Figure 5B is an example of arranging four information dots 7; and, Figure 5C is an example of arranging five information dots 7.

The number of information dots 7 per grid surrounded by four reference grid point dots 8 is preferably one in consideration of visual quality. However, if large information amount is required sacrificing visual quality, large amount of information can be defined by allocating 1 bit to each vector and expressing using a plurality of dots of information dots 7. For example, vectors of eight concentric directions can express 2⁸ pieces of information per grid, expressing 2¹²⁸ pieces of information per block including 16 grids.

Recognition of a dot pattern 3 is performed by, after retrieving the dot pattern 3 using a scanner 4 as image data, first, extracting a reference grid point dot 8, then extracting a key dot 6 based on the fact that there is no dot at the position where a reference grid point dot 8 is supposed to be, and then, extracting an information dot 7.

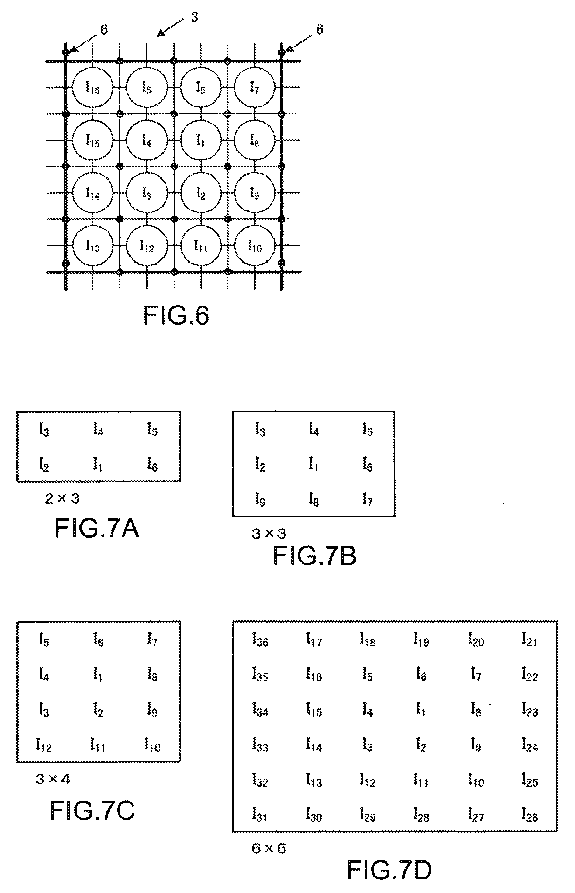

Figure 6 shows an example of a format used for extracting an information dot 7 from a dot pattern 3. Figure 6 is an example of a format arranging grids of I1 to I16 from the center of a block in a right-hand spiral direction. It should be noted that I1 to I16 in Figure 6 each expresses the arrangement of each grid, and, if one information dot 7 is included per grid, expresses the arrangement position of the information dot 7 in the grid.

Figures 7A to 7D show further examples of arrays of grids including information dots 7. Figure 7A is an example arranging 6 (2 × 3) grids in a block; Figure 7B is an example arranging 9 (3 × 3) grids in a block; Figure 7C is an example arranging 12 (3 × 4) grids in a block; and, Figure 7D is an example arranging 36 grids in a block. In this way, the number of grids included in a block in a dot pattern 3 can vary in many ways, without being limited to 16 grids.

That is, the amount of information stored in a dot pattern 3 can be flexibly adjusted by adjusting the number of grids in a block and the number of information dots 7 in a grid in accordance with the size of required information amount and the resolution of the scanner 4.

Figures 8A to 8C show an example of another dot pattern 3b (GRID5). Figure 8A shows a position relationship among reference point dots 8a to 8e, virtual reference points 9a to 9d, and an information dot 7 in a dot pattern 3b.

The dot pattern 3b defines the direction of the dot pattern 3b by the shape of the block. In GRID5, firstly, reference point dots 8a to 8e are arranged. The shape indicating the orientation of the block (here, a pentagon facing upward) is defined by the line connecting the reference point dots 8a to 8e. Next, virtual reference points 9a to 9d are defined based on the arrangement of reference point dots 8a to 8e. Then, having the virtual reference points 9a to 9d as the starting points, vectors with directions and lengths are defined. Finally, an information dot 7 is arranged at the end point of the vectors.

In this way, the orientation of the block can be defined by way of the arrangement of the reference point dots 8a to 8e in GRID5. Then, as the orientation of the block is defined, the size of the entire block is also defined.

Figure 8B shows an example in which information is defined based on the fact whether or not an information dot 7 exists on virtual reference points 9a to 9d of a block.

Figure 8C shows an example in which two blocks of GRID5 are connected in horizontal and vertical directions respectively, provided, however, the directions in which the blocks are connected and arranged are not limited to horizontal and vertical directions and the blocks may be arranged and connected in any directions.

It should be noted that, while the reference point dots 8a to 8e and the information dot 7 are all the same shape in Figures 8A to 8C, the reference point dots 8a to 8e and the information dot 7 may take different shapes, and, for example, the reference point dots 8a to 8e may be larger than the information dot 7. Further, the reference point dots 8a to 8e and the information dot 7 may take any shapes, such as a circle, triangle, rectangle, or any other polygon, as long as they can be distinguished.

### <Dot Code Format>

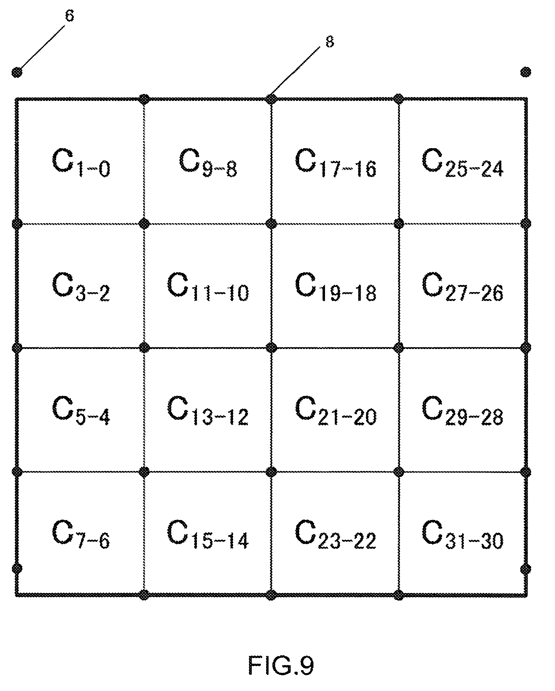

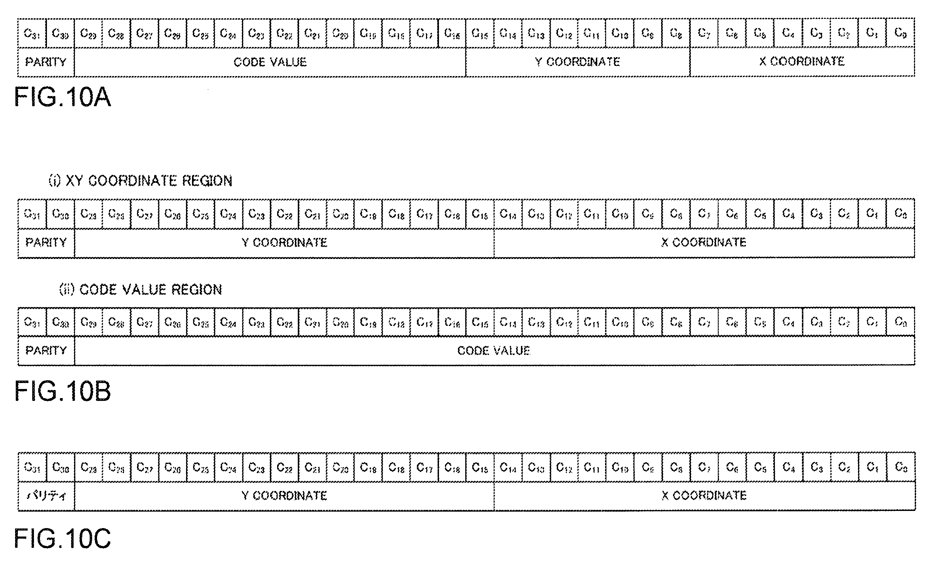

A dot code and format examples thereof will be described with reference to Figures 9 and 10C. A dot code is information stored in a dot pattern 3.

Figure 9 shows an example of an information bit format in a block of a dot pattern 3. In this example, 2-bit information is stored per grid. For example, in the upper left grid, bits C0 and C1 are defined with the bit C1 as the highest order bit; these 2 bits are together indicated as C1-0. It should be noted that these bits may be stored in one information dot 7 per grid or in a plurality of information dots 7 per grid.

Figures 10A to 10C show examples of dot code formats. In these examples, dot codes are 32-bit length and expressed by bits C0 to C31.

Figure 10A is a format example in which the dot code includes XY coordinate values and a code value and parity; Figure 10B is an example in which the format is changed depending on the place where the dot pattern 3 is provided; and Figure 10C is a format example in which the dot code includes XY coordinate values and parity.

The format example shown in Figure 10A expresses the X coordinate value of a position where a dot pattern 3 is provided using 8 bits of bits C0 to C7, and in the same way, the Y coordinate value is expressed using bits C8 to C15. Next, the code value is expressed using 14 bits of bits C16 to C29. This code value can be used to express arbitrary information in accordance with the use purpose of the dot pattern 3. In this embodiment, the code value can be used to express a document ID. Finally, as parity of the dot code, 2 bits of bits C30 and C31 can be used. It should be noted that a method for calculating parity may be a generally known method, and omitted from description.

In the format example shown in Figure 10B, the format changes depending on the place where the dot pattern 3 is provided. In this example, the place where the dot pattern 3 is provided is divided into an XY coordinate region and a code value region. An XY coordinate region format is used in the XY coordinate region and a code value region format is used in the code value region.

In the XY coordinate region format, an X coordinate is expressed using 15 bits of bits C0 to C14. Similarly, a Y coordinate is expressed using 15 bits of C 15 to C29. Also, in the code value region format, a code value is expressed using 30 bits of C0 to C29.

It should be noted that the expression rule of bit sequences should be determined to eliminate overlapping of a bit sequence expressing XY coordinate values and a bit sequence expressing a code value so that the read information can be distinguished whether the information expresses XY coordinate values or a code value.

In this way, the format example shown in Figure 10B expresses a wider range of XY coordinate values and larger number of code values, since the format can allocate more bits to XY coordinate values and a code value compared to the format example shown in Figure 10A.

The format example shown in Figure 10C uses the same format as the XY coordinate region format in Figure 10B. A document ID cannot be directly stored in a dot pattern 3 since the format does not have a field for code value. Therefore, the format distinguishes a document ID indirectly by sectioning the regions allocated to XY coordinate values.

For example, an area where X coordinates are in the range of 0 to 100 and Y coordinates are in the range of 0 to 100 is dedicated to DTP data of document ID = 1. Similarly, DTP data of document ID = 2 is allocated to an area where X coordinates are in the range of 101 to 200 and Y coordinates are in the range of 0 to 100. By having such allocations in advance, if an XY coordinate value read out from a dot pattern 3 is (150, 50), the document ID of the printed material can be identified as 2, since this coordinate value has the X coordinate in the range of 101 to 200 and the Y coordinate in the range of 0 to 100.

### <Method for Inputting a Document ID>

As described above, a document ID that indicates which DTP data corresponds to a printed material 1a may be set by being included in a dot code together with an XY coordinate value at least in a part of a region of a dot pattern 3 printed on a printed material 1a, or may be printed by dividing the surface of the printed material 1a into a dot code region including only XY coordinate values and a dot code region including only a document ID.

Further, the document ID may be input into an information input device 5 manually by a user using input means, such as a keyboard.

### <Structure of a Printed Material>

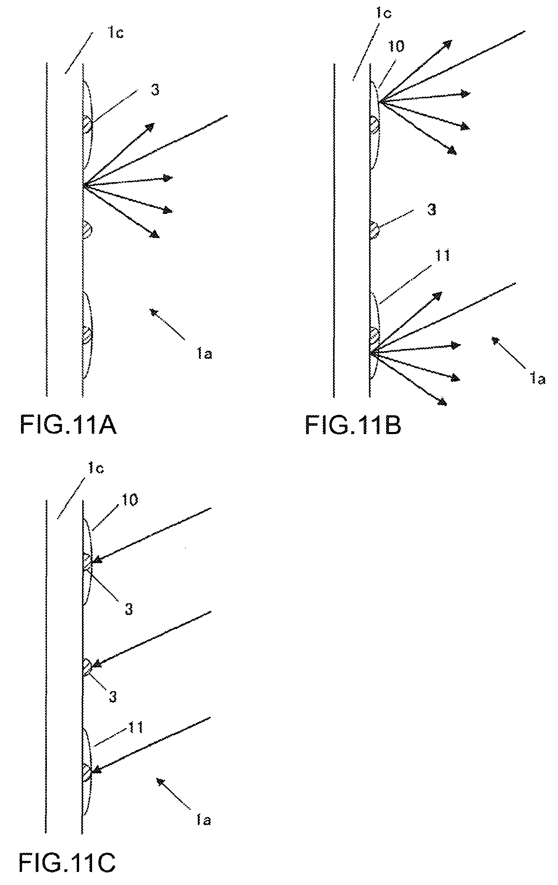

The structure of printed material 1a is described with reference to Figures 11A to 11C. Figures 11A to 11C are section views of printed material 1a. Figure 11A is a diagram showing how infrared rays reach a part where nothing is printed of the print material 1c and are diffusely reflected. Figure 11B is a diagram showing how infrared rays reach a content-printed part of the printed material 1a and diffusely reflected. Figure 11C is a diagram showing how infrared rays reach a dot pattern 3 and are absorbed. It should be noted that, for convenience of illustration, ink is shown as being risen on the surface of the printed material. While this happens when a printed material 1c has a property that does not absorb ink and when a printed material 1c has a property that absorbs ink yet the ink is highly viscous, ink is normally printed to permeate a printed material.

As shown in Figure 11A, the surface of the print medium 1c on which the content and dot pattern 3 are printed preferably has a property that diffusely reflects infrared rays. This is because, when the surface of the printed medium 1c has a property that specularly reflects infrared rays, reflection from a part of the surface read by the scanner 4 does not enter properly into a lens (described later) and a part of the read image is captured dark, as a result, analyzing the image becomes hard.

Figure 11B shows how infrared rays reach a part printed with infrared diffuse-reflective ink 10 and are diffusely reflected, and how infrared rays reach a part printed with infrared transmissive ink 11 and, after transmitted through the infrared transmissive ink 11, are diffusely reflected from the surface of the print medium 1c.

Figure 11C shows how infrared rays emitted toward a dot pattern 3 are absorbed on the surface on which the dot pattern 3 and infrared diffuse-reflective ink 10 are superimposed and printed in the order from above, how infrared rays emitted toward the dot pattern 3 are absorbed on the surface on which only the dot pattern 3 is printed, and how infrared rays emitted toward the dot pattern 3 are absorbed on the surface on which the dot pattern 3 and infrared transmissive ink 11 are superimposed and printed.

In this way, if a dot pattern 3 and an infrared diffuse reflective ink 10 or an infrared transmissive ink 11 are superimposed and printed, if the inks are highly viscous, the infrared diffuse reflective ink 10 or infrared transmissive ink 11 forms a doughnut shape around the dot pattern 3 printed in advance. If the inks have standard viscosity, the inks permeate each other.

As the scanner 4 irradiates infrared rays to the reading surface of a printed material 1a on which a dot pattern 3 is printed and captures the reflection as an image (the details are described later), the dot pattern 3 printed with infrared absorbing ink is shown in black and the part that diffusely reflects infrared rays is shown in white.

It should be noted that, since the infrared diffuse reflective ink 10 and infrared transmissive ink 11 have properties that reflect or absorb specific wavelength of visible light, when one sees a printed material 1a printed with these inks, the printed content can be read as normal print.

In this way, a variety of combinations of dot-pattern print and content print can be realized by printing a dot pattern 3 over a print medium 1c, and further selecting either the infrared diffuse reflective ink 10 or the infrared transmissive ink 11 as an ink used for superimposing and printing content over the dot pattern 3.

### <Scanner 4>

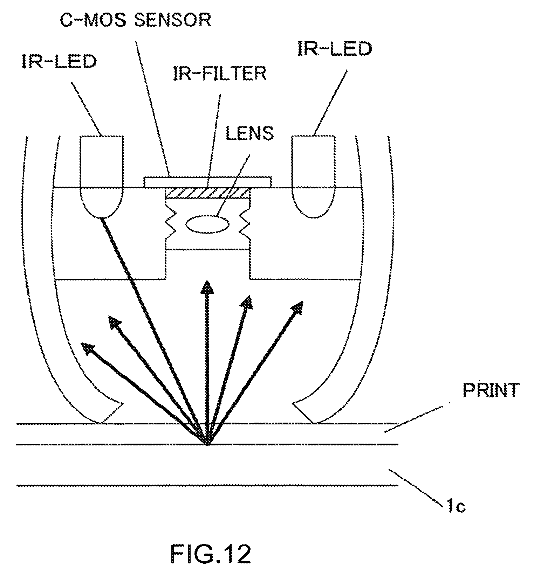

Figure 12 shows a structure of a section for reading a dot pattern 3 among the structure of the scanner 4 and how the dot pattern 3 on the printed material 1 a is read. The scanner 4 incorporates an IR-LED as means for irradiating infrared rays, a lens for collecting reflection of infrared rays irradiated from the IR-LED and reflected from the surface of the printed material 1a, an IR filter for cutting a predetermined wavelength element among the reflection transmitted through the lens, and a C-MOS sensor as an imaging element.

The scanner 4 irradiates infrared rays on the printed material 1 a, and captures reflection diffusely reflected from the surface of the print medium 1c and the part printed with infrared diffuse reflective ink 10. As described above, since the dot pattern 3 is printed with an ink having a property that absorbs infrared rays, only the dot part of the dot pattern 3 is imaged in black in the image captured by the C-MOS sensor.

Further, the scanner 4 has a central processing unit (not shown in Figure 12) in addition to the above-described structure, and the central processing unit analyzes the dot pattern 3 that was input from the C-MOS sensor using analysis software, converts the dot pattern 3 into a dot code, and outputs the dot code.

It should be noted that, instead of the central processing unit and analysis software, the scanner 4 may have a hardware circuit having a similar function.

Further, the structure may be that the process for analyzing the dot pattern 3 and converting the dot pattern 3 into a dot code may be performed by a device connected to the scanner 4, for example, a personal computer, instead of being performed by a central processing unit mounted on the scanner 4.

Wired means, such as a USB cable, or wireless means may connect between the scanner 4 and a device connected with the scanner 4.

### <Structure of Information Input Device 5>

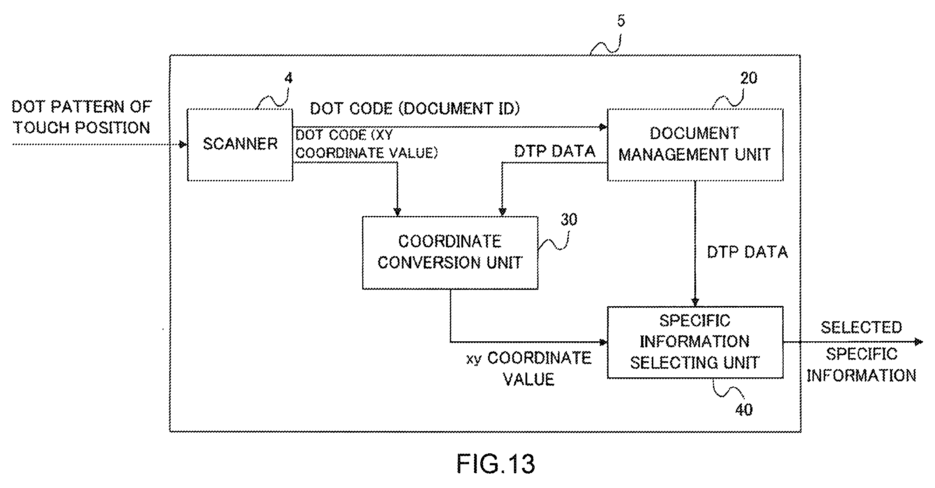

Figure 13 shows a functional block diagram of the information input device 5 of this embodiment. The information input device 5 comprises a scanner 4, a document management unit 20 (two-dimensional format information storing and selecting means), a coordinate conversion unit 30 (coordinate conversion means), and a specific information selecting unit 40 (specific information selecting means).

The scanner 4 reads out a dot pattern 3 of a position on a printed material 1a touched by a user using the scanner 4, converts the dot pattern 3 into a dot code, and outputs the document ID part of the dot code to a document management unit 20. Also, the scanner 4 outputs the XY coordinate value (xt, yt) part of the dot code to a coordinate conversion unit 30. It should be noted that, in this embodiment, the case in which the dot code includes both an XY coordinate value and a code value is described.

The document management unit 20 searches DTP data of the document stored in advance in the document management unit 20 using the document ID input by the scanner 4. Then, the document management unit 20 outputs the DTP data 1b corresponding to the input document ID to the coordinate conversion unit 30 and the specific information selecting unit 40.

The coordinate conversion unit 30, using the XY coordinate value (Xt, Yt) input by the scanner 4 and the DTP data 1b input by the document management unit 20, converts the coordinates of the touch position from the XY coordinate value (Xt, Yt) in the coordinate system on the printed material 1a into an xy coordinate value (xt, yt) in the coordinate system on the DTP data 1b, and outputs the converted xy coordinate value (xt, yt) to the specific information selecting unit 40.

Using the DTP data 1b input from the document management unit 20 and the xy coordinate value (xt, yt) input from the coordinate conversion unit 30, the specific information selecting unit 40 selects and outputs specific information considered as being specified by a user by a touch operation among the specific information included in the DTP data 1b, such as a text, figure, illustration, and photograph. While the method for selecting the specific information are detailed later, for example, there is a method that selects specific information closest to the xy coordinate value (xt, yt) of the touch position.

The specific information output from the specific information selecting unit 40 is used as input in other device.

It should be noted that, as specific examples of the information input device 5, there are a personal computer, a PDA, a television receiving device, a front projector, a rear projector, a game machine, a karaoke machine, a mobile phone terminal, a POS terminal, an ATM, a KIOSK terminal, a car navigation system, a pachinko, a watch, a smartphone, and the like.

### <DTP data>

In this embodiment, DTP data is used as an example of the two-dimensional format information. More specifically, DTP data is electronic data created by DTP software, such as a word processor, CAD software, or authoring software that creates a file in the format of HTML, XML, Flash, PDF, or the like. In addition to the text body, the electronic data includes, for example, specifications of font types (vector font) and font sizes and layout information used when displaying or printing the text.

Further, if DTP data includes a figure, illustration, photograph and the like, the DTP data also includes a file name that stores each image data, position information of a region occupied by the image when displaying and printing the DTP data.

The DTP data is managed in a way that the DTP data can be uniquely identified by a document ID. If DTP data is printed over a plurality of pages, that is, printed material 1a is constituted by a plurality of pages, the document ID is preferably structured in a way that each page can be distinguished.

It should be noted that the DTP data may be map data.

### <About Position Information for Selection>

Specific information, such as a text, figure, illustration, and photograph, in DTP data is provided with position information for selection to determine which specific information is specified by a user based on the position relationship with xy coordinates (xt, yt) of the touch position.

Timing for setting position information for selection to each specific information may be set in advance at the time storing DTP data in the document management unit 20, or set by the specific information selecting unit 40 after the specific information selecting unit 40 has received DTP data 1b from the document management unit 20.

Also, the specific information selecting unit 40 may set position information for selection to all specific information included in the DTP data 1b by analyzing the entire DTP data 1b received from the document management unit 20 at once or set position information for selection by analyzing only specific information near the coordinate value (xt, yt) of the touch position in the DTP data 1b.

As for the analysis method, if the specific information is a text, publicly known conventional text-parsing methods can be used. If the specific information is a figure, illustration, or CAD data (a point, line segment, plane, three-dimension object, and the like) expressed as a collection of objects in which specific information is hierarchized, software or the like that can manage the hierarchical structure and objects may be used to analyze the specific information. Further, if the specific information is an illustration, photograph, or the like expressed in bitmaps, after retrieving the bitmap data from the file name of the specific information included on the DTP data, a publicly-known conventional image analysis method may be used to analyze the bitmaps.

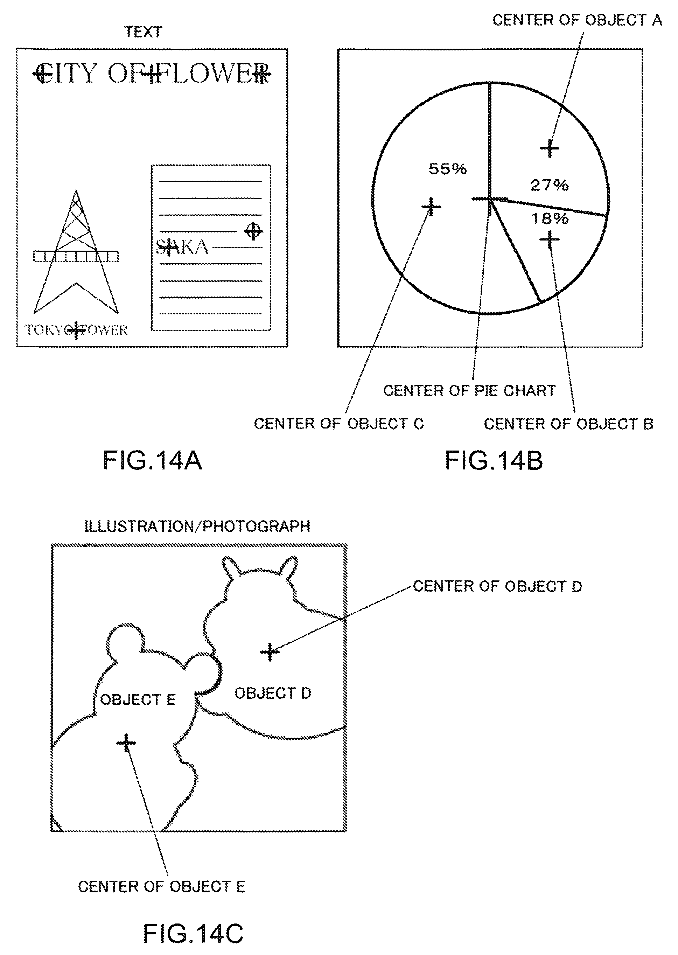

Figures 14A to 14C show examples of cases in which the coordinate value of the center of an object or the coordinate value of the centroid of an object is used as the position information for selection of specific information. Figure 14A is an example in which specific information is a text; Figure 14B is an example in which specific information is a figure (a pie chart); and Figure 14C is an example in which specific information is an illustration or a photograph. It should be noted that, in Figures 14A to 14C, while plus marks are used to indicate the position of the coordinate value of the center of an object or the coordinate value of the centroid of an object, these marks are used for description and not actually printed or displayed.

In the example shown in Figure 14A, words "City of Flower," "Osaka," and "Tokyo Tower" are shown in kanji and hiragana and katakana as specific information. The center of the display area of the word "Tokyo Tower" in kanji and katakana is set as position information for selection.

On the other hand, in the case of the word "City of Flower," letters constituting the word are apart from each other. If the coordinate value of the center of the display area is set as position information for selection, when a user touches near the letter "Flower" to select the word "City of Flower," the word "City of Flower" is probably not selected as the coordinate value of the center of the word "City of Flower" and coordinate value of the touch position are apart.

For this reason, if letters constituting a word are apart from each other, the coordinate value of the center of each letter should be set as position information for a selection for each letter constituting the word.

It should be noted that when a user touches near the letter "Flower," the specific information selecting unit 40 may not judge whether the word that the user want to specify is the word "City of Flower" or the word "Flower" in some cases. In such cases, the specific information selecting unit 40 may display both the word "City of Flower" and the word "Flower" as available choices to the user, and the user may select the desired word from the available choices.

Also, in the case of the word "Osaka," the letter "O" in kanji and the letter "saka" in kanji are apart by a line break. In such a case, again, the user can select the word "Osaka" properly by setting the coordinate value of the center of each letter as position information for selection.

The example of Figure 14B shows a pie chart and a pie constituting the pie chart as specific information. The coordinates of the central point of the circle is set as the position information for a selection for the entire pie chart, and coordinate values at centroids of pies of 27%, 18%, and 55% (referred to as object A, B, and C, respectively) are set as position information for selection of the objects.

The example of Figure 14C shows contours of illustrations of a hippopotamus (object D) and a bear (object E) as specific information. The coordinate value of the centroid of each object is set as position information for selection. It should be noted that the set coordinate value of the centroid does not have to be precisely calculated, and an estimate value that allows proper selection of the object can be employed.

In this way, if one large object is constituted by a plurality of small objects, setting position information for selection for each small object allows a user to flexibly specify specific information.

Figures 15A to 15C show further examples of position information for selection when specific information is a text and a word. Figure 15A is an example in which position information for selection is the coordinates of the starting point of a word and the height of the word. Figure 15B is an example in which position information for selection is the coordinates of the starting point and end point of a word and the height of the word. Figure 15C is an example in which, when letters constituting a word are apart from each other, position information for selection is the coordinates of the starting point and end point of each letter and the height of the letter.

In the example shown in Figure 15A, the height hi of the word "Tokyo" in kanji and the coordinate value (xi, yi) of the middle point of the left side member (whose height is hi) of the rectangular area occupied by the word "Tokyo" in kanji are used as position information for selection.

In the example shown in Figure 15B, the height hi of the word "Tokyo" in kanji and the coordinates of the starting point (xi1, yi1) and the coordinates of the end point (xi2, yi2) of a line segment at arbitrary positions in the height direction indicating the width of the word "Tokyo" in kanji are used as position information for selection.

In the example shown in Figure 15C, since letters constituting the word "Osaka" in kanjiare apart, the height of the letter and the line segment indicating the width of the letter is used to set position information for selection for each letter "O" in kanji and "Saka" in kanji, similarly to the example shown in Figure 15B. That is, the letter "O" in kanji has the height hi1 and the coordinates of the starting point (xi11, yi11) and the coordinates of the end point (xi12, yi12) as its position information for selection, and the letter "Saka" in kanji has the height hi2 and the coordinates of the starting point (xi21, yi21) and the coordinates of the end point (xi22, yi22) as its position information for selection.

It should be noted that, since a position, height, and width of the area occupied by sucha text, word, and letter are known by using a variety of position information for selection shown in Figures 15A to 15C for such a text, word, and letter, mask regions of these text, word, and letter in an xy coordinate system can be easily calculated.

Further, position information for selection may be constituted by a collection of all coordinate values (xia, yia) included in the mask region and a collection of the coordinate values (xie, yie) of the contour of the mask region.

It should be noted that, even when a figure, illustration, photograph and the like are used as specific information, by defining the contours of these objects, a collection of all coordinate values (xia, yia) included in the object and a collection of coordinate values (xie, yie) of the contour of the object may be used as position information for selection.

It should be noted that, when the DTP data is map data, position information for selection are a region surrounded by roads, a feature region, a centerline of a road, and/or the centroid of a feature. Within the map data, specific information is divided into categories of a text, road, feature, intersection and the like. When selecting the specific information, any one of the categories is selected for recognition of the specific information. It will be appreciated that the selection of the specific information may be done by selecting from available choices of specific information or touching after selecting a category in advance.

### <Touch Operation>

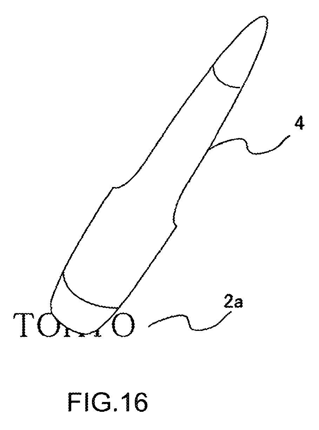

Operations performed by a user when specifying specific information on a printed material 1a are described with reference to Figures 16 to 18.

Figure 16 shows an example of operation in which a user touches a point of specific information using the scanner 4. The specific information selecting unit 40 recognizes the coordinate value (Xt, Yt) of the touch position as the coordinates of the point.

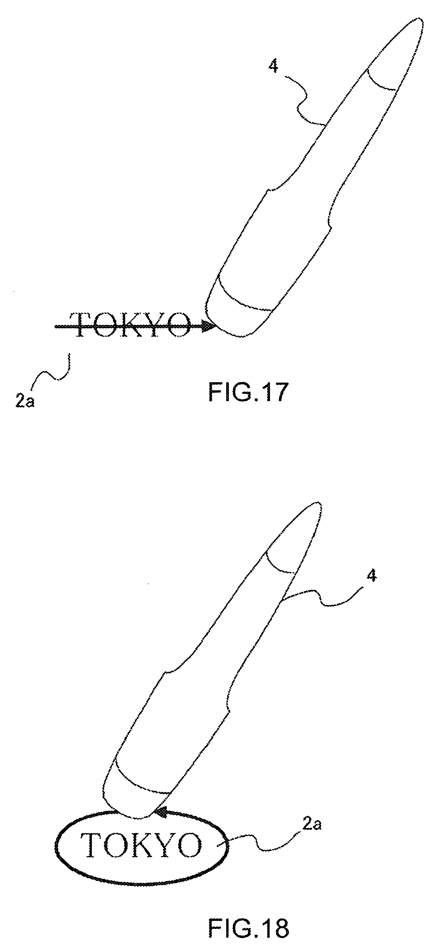

Figure 17 shows an example of operation in which a user touches a point of specific information using the scanner 4 and drags the scanner 4 over the specific information that the user wants to specify. The specific information selecting unit 40 recognizes the coordinate value (Xt, Yt) of the trajectory of the touching and dragging as a line segment.

If this operation method is used, for example, when the scanner drags over the entire word of "Tokyo" 2a in kanji, the specific information selecting unit 40 can recognize the word "Tokyo" 2a in kanji as specific information to be input, while, when the scanner drags only over the letter "To" in kanji, the specific information selecting unit 40 can recognize the letter "To" in kanji as specific information to be input.

Figure 18 shows an example of operation in which a user touches a point of specific information using the scanner 4 and drags the scanner 4 around the specific information to encircle the specific information that the user desires to specify. The specific information selecting unit 40 recognizes the coordinate value (Xt, Yt) of the trajectory of the touching and encircling as a closed circle.

It should be noted that if a completely closed circle is not formed by the operation of encircling, the specific information selecting unit 40 may form a completely closed circle by a calibration that connects the starting point and the end point of the trajectory of the touching and encircling.

Similarly to the operation of touching and dragging, this operation method can provide the information input device 5 precise specification of specific information that distinguishes between the specification of the word "Tokyo" 2a in kanji and the specification of the letter "To" in kanji.

It should be noted that the encircling operation here includes both the case of completely encircling the specific information in a way that the specific information that the user desires to specify is included and the case of encircling so that the trajectory of the dragging overlaps the specific information. When encircling in a way the trajectory of dragging overlaps the specific information, at least the position represented by position information for selection is needed be encircled. If the position represented by position information for selection is not encircled, specific information corresponding to a position of position information for selection closest to a plurality of the coordinate values (xt, yt) constituting the trajectory formed by dragging is used.

### <Method for Selecting Specific Information>

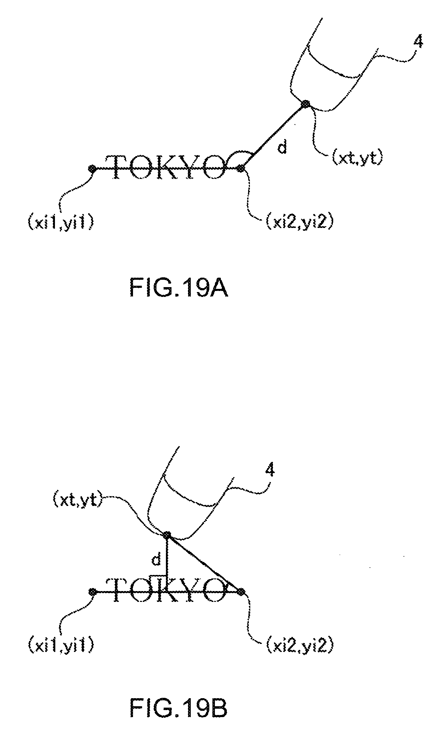

A method for selecting specific information based on the coordinate value (xt, yt) of the touch position and position information for selection retained by each specific information with reference to Figures 19A to 21. It should be noted that as there are three kinds of touch operations by a user and three kinds of position information for selection, nine pattern cases of specific information selecting methods are described below as combinations thereof.

Case 1: A trajectory of a touch operation is a point, and position information for selection is the central point
The specific information selecting unit 40 selects specific information having coordinates (xi, yi) of the center or coordinates (xi, yi) of the centroid that is closest to the coordinate value (xt, yt) of the point of the touch position

Case 2: A trajectory of a touch operation is a point, and position information for selection is a line segment
Figures 19A and 19B show an example of a method for selecting specific information when a user specifies specific information by a touch operation and the word "Tokyo" 2a in kanji has a line segment as the position information for selection.

Figure 19A is an example in which the foot of a perpendicular line drawn from the point of the coordinate value (xt, yt) of the touch position to the line segment does not intersect the line segment. In this case, the distance d from the point of the coordinate value (xt, yt) to the line segment is shorter one of the distances from the coordinate value (xt, yt) to the coordinate value of the starting point (xi1, yi1) and from the coordinate value (xt, yt) to the coordinate value of the end point (xi2, yi2).

Figure 19B is an example in which the foot of the perpendicular line drawn from the point of the coordinate value (xt, yt) of the touch position to the line segment intersects the line segment. In this case, the distance d from the point of the coordinate value (xt, yt) to the line segment is the length of the perpendicular line drawn from the point of the coordinate value (xt, yt) to the line segment.

Based on the above-described method, the specific information selecting unit 40 calculates the distance d between the line segment representing each specific information and the point of the coordinate value (xt, yt) of the touch position, and selects the specific information whose distance d becomes the shortest.

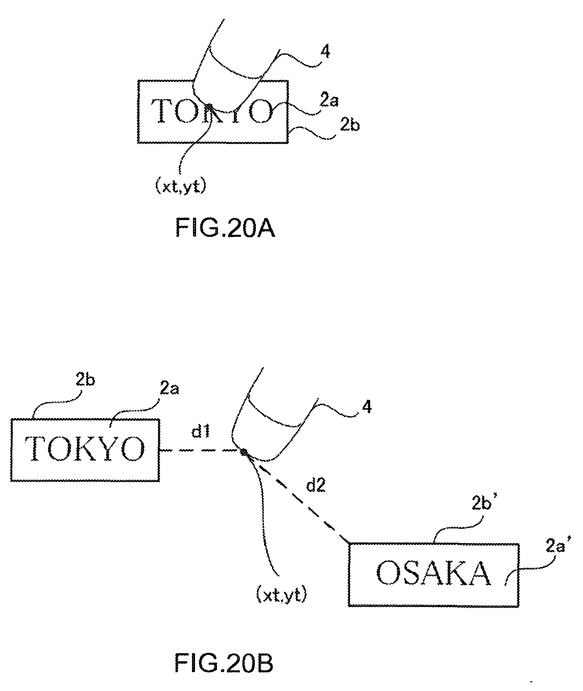

Case 3: A trajectory of a touch operation is a point, and position information for selection is a mask region
Figures 20A and 20B show an example of a method for selecting specific information when a user specifies specific information by a touch operation and the word "Tokyo" 2a in kanji has a mask region 2b as position information for selection.

In this method, if the coordinate value (xt, yt) of the touch position matches any one of all coordinate values (xia, yia) within a mask region, the specific information selecting unit 40 selects specific information having the matching coordinate value. If there is no matching coordinate value, the specific information selecting unit 40 may select the coordinate value (xie, yie) of the contour of the mask region that is closest to the coordinate value of the touch position.

This selecting method using the mask region can be used when specific information is an object, such as a figure, illustration, and photograph, as well as a text.

Figure 20A is an example in which the coordinate value (xt, yt) of the touch position is within a mask region 2b. In this case, the specific information selecting unit 40 selects the specific information of the word "Tokyo" in kanji 2a corresponding to the mask region 2b.

Figure 20B is an example in which the coordinate value (xt, yt) of the touch position is neither inside a mask region 2b of a word "Tokyo" 2a in kanji nor a mask region 2b'of a word "Osaka" 2a'in kanji. In this case, the specific information selecting unit 40 calculates the distance d1 from the coordinate value (xt, yt) of the touch position to the mask region 2b and the distance d2 from the coordinate value (xt, yt) of the touch position to the mask region 2b', and compares these distances. As the distance d1 is shorter, the specific information selecting unit 40 selects the specific information of the word "Tokyo" 2a in kanji corresponding to the mask region 2b.

Case 4: A trajectory of a touch operation is a line segment, and position information for selection is a central point

Similarly to the case 2, the specific information selecting unit 40 selects the specific information with which the distance d from the coordinates (xi, yi) of the center or the coordinates (xi, yi) of the centroid to the line segment of the trajectory becomes the shortest.

Case 5: A trajectory of a touch operation is a line segment and position information for selection is a line segment.
The specific information selecting unit 40, for example, selects the specific information such that the area of a rectangle formed by the coordinate value of the starting point (xt1, yt1) and the coordinate value of the end point (xt2, yt2) of the line segment of the trajectory and the coordinate value of the starting point (xi1, yi1) and the coordinate value of the end point (xi2, yi2) of the line segment of the position information for selection becomes the smallest.

Case 6: A trajectory of a touch operation is a line segment, and position information for selection is a mask region.

The specific information selecting unit 40 selects the specific information having a mask region that includes the largest number of coordinate values (xt, yt) among a plurality of the coordinate values (xt, yt) constituting the line segment of the trajectory.

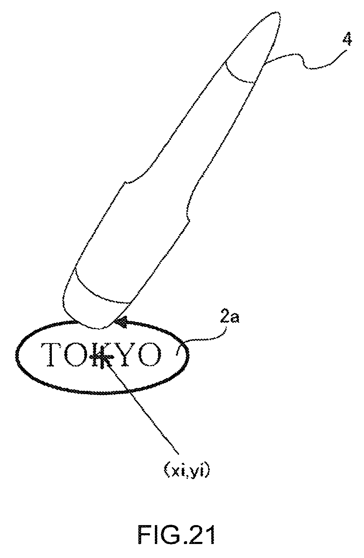

Case 7: A trajectory of a touch operation is a closed circle, and position information for selection is a central point
Figure 21 shows an example of a method in which a user specifies specific information by operation of touching and encircling the specific information, and the word "Tokyo" 2a in kanji has the coordinate value of the center (xi, ti) as position information for selection. In this case, the specific information selecting unit 40 selects the specific information having position information for selection encircled by the trajectory input by the encircling operation.

Case 8: A trajectory of a touch operation is a closed circle, and position information for selection is a line segment
Similarly to Case 6, the specific information selecting unit 40 selects the specific information included in a closed circle of the trajectory that includes the largest number of coordinate values among a plurality of the coordinate values (xi, yi) constituting the line segment of position information for selection.

Case 9: A trajectory of a touch position is a closed circle, and position information for selection is a mask region
The specific information selecting unit 40 selects the specific information such that the overlapping area of the trajectory of the closed circle and the mask region becomes the largest.

### <Procedure of Information Input Process>

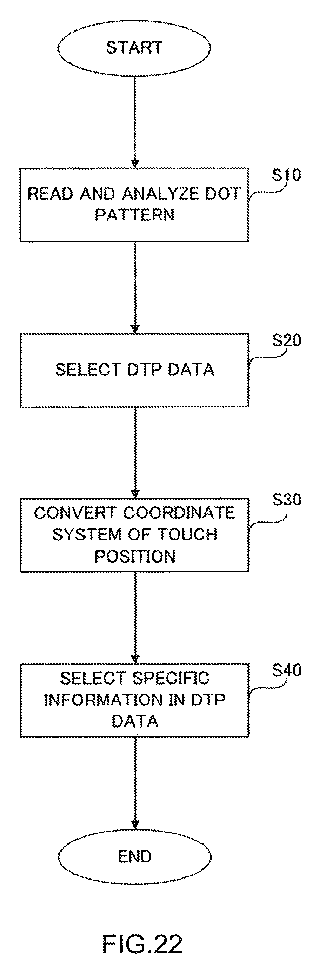

A Procedure of information input process performed by the information input device 5 will be described with reference to the flowchart shown in Figure 22. The following describes a case in which a dot code includes both an XY coordinate value and a code value, and the specific information in the DTP data 1b corresponding to the word "Tokyo" 2a in kanji on a printed material 1a is set with a mask region 2b in advance as position information for selection.

First, if a user performs an operation for specifying desired specific information using the scanner 4, the scanner 4 reads a dot pattern 3 printed on a part of a printed material 1a touched by the user with the scanner 4. The read dot pattern 3 is converted into a dot code by analysis software in the central processing unit of the scanner 4. The scanner 4 transmits the document ID part of the converted dot code to the document management unit 20 and transmits the XY coordinate part to the coordinate conversion unit 30 (Step 10, hereafter abbreviated to S10).

Next, the document management unit 20 selects, using the document ID received from the scanner 4, DTP data 1b corresponding to the document ID among the DTP data stored in advance. Then, the document management unit 20 transmits the selected DTP data 1b to the coordinate conversion unit 30 and the specific information selecting unit 40 (S20).

Next, the coordinate conversion unit 30 converts the coordinate value (Xt, Yt) in the XY coordinate system received from the scanner 4 to the coordinate value (xt, yt) in an xy coordinate system of the DTP data 1b received from the document management unit 20 (S30).

Next, the specific information selecting unit 40 selects appropriate specific information among the specific information in DTP data 1b received from the document management unit 20 based on the coordinate value (xt, yt) received from the coordinate conversion unit 30 (S40). The specific information selecting unit 40 outputs the selected specific information so that the specific information is to be an input to other devices or an input to a next arbitrary process carried out by the information input device 5.

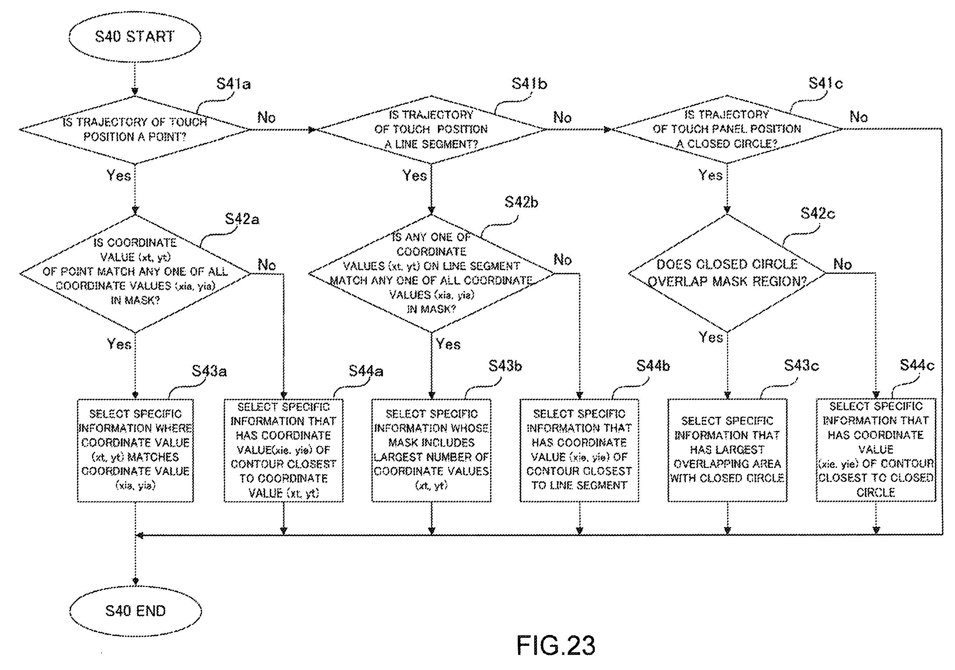

With reference to the flowchart shown in Figure 23, the specific information selecting process carried out in S40 will be detailed as follows.

First, the specific information selecting unit 40 determines whether the trajectory of the coordinate value (xt, yt) of the touch position obtained by the touch operation by a user is a point or not (S41a).

If the coordinate value is a point, the specific information selecting unit 40 proceeds to the process of S42a.

If the coordinate value is not a point, the specific information selecting unit 40 proceeds to the process of S41b.

Next, the specific information selecting unit 40 determines whether the coordinate value (xt, yt) of the point matches any one of all the coordinate values (xia, yia) in the mask region 2b (S42a).

If a match is found, the specific information selecting unit 40 proceeds to the process of S43a.

If no match is found, the specific information selecting unit 40 proceeds to the process of S44a.

If the coordinate value (xt, yt) of the point matches any one of all the coordinate values (xia, yia) in the mask region 2b in S42a, the specific information selecting unit 40 selects the specific information having the coordinate value (xia, yia) that matches the coordinate value (xt, yt) of the point and ends the process (S43a).

If the coordinate value (xt, yt) of the point does not match any of all the coordinate values (xia, yia) in the mask region 2b in S42a, the specific information selecting unit 40 selects the specific information having the coordinate value (xie, yie) of the contour, which is closest to the coordinate value (xt, yt) of the point and ends the process (S44a).

If the trajectory of the coordinate value (xt, yt) of the touch position is not a point in S41a, the specific information selecting unit 40 determines whether the trajectory of the coordinate values (xt, yt) of the touch position is a line segment or not (S41b).

If the trajectory is a line segment, the specific information selecting unit 40 proceeds to S42b.

If the trajectory is not a line segment, the specific information selecting unit 40 proceeds to S41 c.

If the trajectory of the coordinate value (xt, yt) of the touch position is a line segment in S41b, the specific information selecting unit 40 determines whether at least part of the line segment is included in the mask region 2b or not (S42b).

If at least part of the line segment is included in the mask region 2b, the specific information selecting unit 40 proceeds to the process of S43b.

If the line segment is not included in the mask region 2b, the specific information selecting unit 40 proceeds to the process of S44b.

If at least part of the line segment is included in the mask region 2b in S42b, the specific information selecting unit 40 selects the specific information the largest number of whose coordinate values (xt, yt) are included in the mask region and ends the process (S43b).

If the line segment is not included in the mask region 2b in S42b, the specific information selecting unit 40 selects the specific information having a coordinate value (xie, yie) of the contour that is closest to the line segment and ends the process (S44b).

If the trajectory of the coordinate value (xt, yt) of the touch position is not a line segment in S41b, then, the specific information selecting unit 40 determines whether the trajectory of the coordinate value (xt, yt) of the touch position is a closed circle or not (S41c).

If the trajectory is a closed circle, the specific information selecting unit 40 proceeds to the process of S42c.

If the trajectory is not a closed circle, the specific information selecting unit 40 performs error processing as needed then ends the process.

If the trajectory of the coordinate value (xt, yt) of the touch position is a closed circle in S41 c, the specific information selecting unit 40 determines whether at least part of theregion encircled by the closed circle overlaps the mask region 2b or not (S42c).

If overlapping, the specific information selecting unit 40 proceeds to the process of S43c.

If no overlapping, the specific information selecting unit 40 proceeds to the process of S44c.

If at least part of the region encircled by the closed circle overlaps the mask region 2b in S42c, the specific information selecting unit 40 selects the specific information corresponding to the mask region 2b that has the largest overlapping area with the region encircled by the closed circle and ends the process (S43c).

If the region enciecled by the closed circle does not overlap any one of the mask regions 2b in S42c, the specific information selecting unit 40 selects the coordinate value (xie, yie) of the contour that is closest to the region encircled by the closed circle and ends the process (S44c).

### [Second Embodiment]

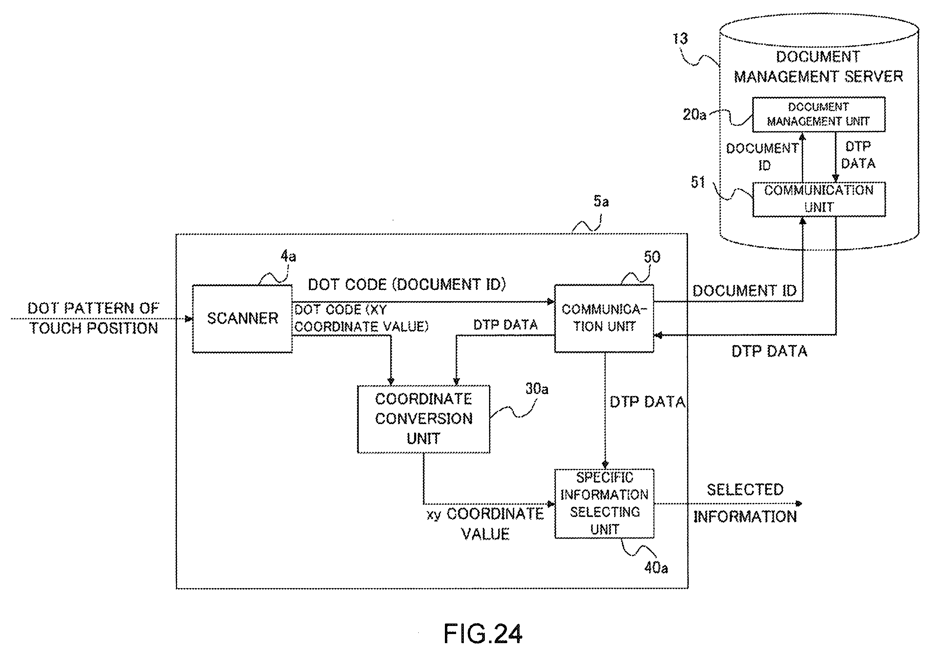

An embodiment in which a medium printed with a dot pattern together with content is used and DTP data is obtained from a server on a network is described among the information input devices of the invention with reference to Figure 24 as follows.

It should be noted that in the following description, only the part different from the first embodiment is described and the same part are omitted from description.

### <Structures of the Information Input Device 5a and Information Input System>

Figure 24 shows a functional block diagram of the information input device 5a of the invention. The information input device 5a has a scanner 4a, coordinate conversion unit 30a, specific information selecting unit 40a, and communication unit 50 (communication means).

Also, the information input system of the invention has an information input device 5a, document management server 13 (two-dimensional format information server), and network that connects the information input device 5a and the document management server 13.

In the information input device 5a, the scanner 4a reads out the dot pattern 3 of the touch position, transmits document ID part among the dot codes to the communication unit 50, and transmits XY coordinate value part among the dot codes to the coordinate conversion unit 30a.

The communication unit 50 transmits the document ID received from the scanner 4a to the document management server 13 as well as transmits the DTP data 1b corresponding to the document ID received from the document management server 13 to the coordinate conversion unit 30a and the specific information selecting unit 40a.

The specific information selecting unit 40a selects the specific information in the DTP data 1b using the xy coordinate value received from the coordinate conversion unit 30a and DTP data 1b received from the communication unit 50 and outputs the selected specific information.

The document management server 13 has a document management unit 20a (two-dimensional format information storing and selecting unit) and a communication unit 51 (communication means). The function of the document management unit 20a is the same as the document management unit 20 in the first embodiment.

It should be noted that, while the document management unit 20a is provided only on the document management server 13 in the above-described structure, the document management unit 20 may be provided on the information input device 5a, similarly to the first embodiment.

In such a case, the DTP data in the document management unit 20 is first searched, then, if the necessary DTP data 1b is found, there is no need to access the document management server 13 on a network again, which reduces traffics on the network and increases the processing speed. Further, the document management unit 20 may cache DTP data 1b received from the document management unit 20a.

### <Procedure of Information Input Process >

The procedure of the information input process carried out by the information input device 5a will be described. Each process of steps S10a to S40a corresponds to S10 to S40 respectively in the flowchart shown in Figure 22. It should be noted that the following describes a case in which a dot code includes both an XY coordinate value and a code value.

First, if a user performs an operation for specifying desired specific information using the scanner 4a, the scanner 4a reads out a dot pattern 3 printed on a part of a printed material 1a touched by the user with the scanner 4a. The read dot pattern 3 is converted into a dot code by the central processing unit of the scanner 4a. The scanner 4 transmits the document ID part of the converted dot code to the document management unit 20a on the document management server through the communication units 50 and 51, then, transmits the XY coordinate value part to the coordinate conversion unit 30 (S10a).

Next, the document management unit 20a selects, using the document ID received from the scanner 4a, the DTP data 1a corresponding to the document ID among the DTP data stored in advance. Then, the document management unit 20a transmits the DTP data 1b to the coordinate conversion unit 30a and the specific information selecting unit 40a through the communication units 51 and 50 (S20a).

Next, the coordinate conversion unit 30a converts the coordinate value (Xt, Yt) in the XY coordinate system received from the scanner 4a into a coordinate value (xt, yt) in the xy coordinate system in the DTP data 1b received from the document management unit 20a (S30a).

Next, the specific information selecting unit 40a selects appropriate specific information among the specific information in the DTP data 1b received from the document management unit 20a based on the coordinate value (xt, yt) received from the coordinate conversion unit 30a (S40a). The specific information selecting unit 40a outputs the selected specific information so that the selected specific information will be an input to other devices or an input to a next arbitrary process carried out by the information input device 5a.

### <Printing of Content and a Dot Pattern>

The information input device 5a may further have a printing unit (not shown in drawings) (printing means) and be able to print newly acquired DTP data 1b together with a dot pattern 3 on a medium. The dot code of the dot pattern 3 preferably includes, in addition to the XY coordinates, a document ID that identifies the newly obtained DTP data 1.

According to this structure, a printed material 1a used for the input process can be created from the newly obtained DTP data 1b.

### [Third Embodiment]

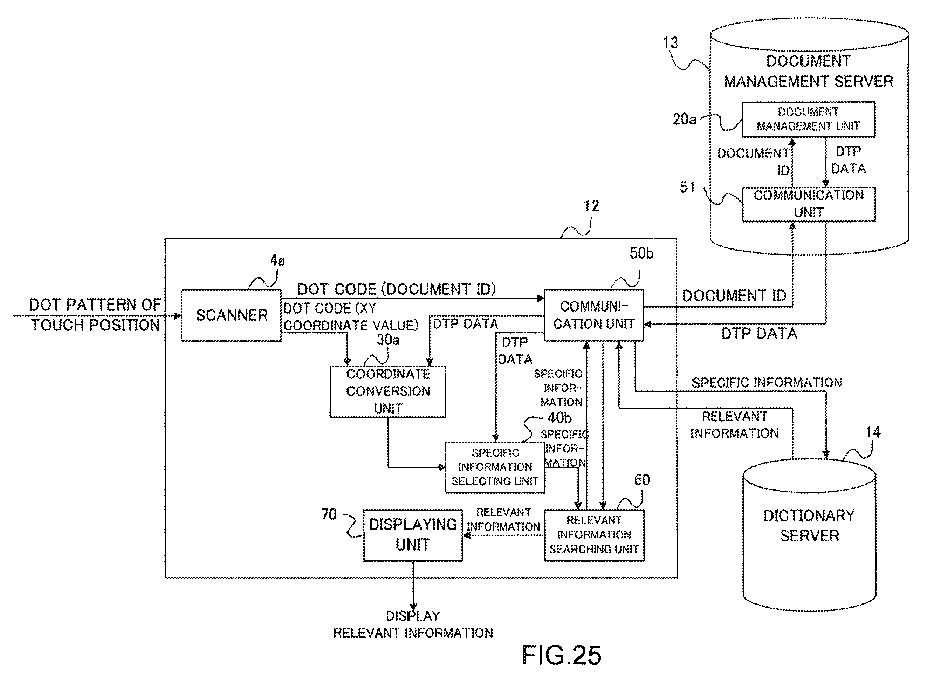

Among the information processing devices of the invention, an embodiment of the information processing device is described that uses a medium printed with content and a dot pattern, obtains DTP data from a server on a network and inputs specific information, and searches and displays relevant information to the specific information, with reference to Figures 25 to 27 as follows.

It should be noted that the following describes a part that is different from the first and second embodiments, and a part that is the same as the first and second embodiments are omitted from the description.

### <Structures of the Information Processing Device 12 and Information Processing System>

Figure 25 shows a functional block diagram of the information processing device 12 of the invention. The information processing device 12 has a scanner 4a, coordinate conversion unit 30a, specific information selecting unit 40b, communication unit 50b, relevant information searching unit 60 (relevant information searching means), and display unit 70. As a specific example of the information processing device 12, for example, there is a personal computer.

It should be noted that the information processing device 12 may be a PDA, television receiving device, front projector, rear projector, game machine, karaoke machine, mobile phone terminal device, POS terminal device, ATM, KIOSK terminal, car navigation system, pachinko, watch, smartphone, and the like.

Also, the information processing system of the invention is composed of an information processing device 12, document management server 13, dictionary server 14, and network connecting the information processing device 12, document management server 13, and dictionary server 14.

In the information processing device 12, the scanner 4a reads out the dot pattern 3 of the touch position, transmits the document ID part of the dot code to the communication unit 50b, and transmits the XY coordinate value part of the dot code to the coordinate conversion unit 30a.

The communication unit 50b transmits the document ID received from the scanner 4a to the document management server 13, as well as transmits the DTP data 1b corresponding to the document ID to the coordinate conversion unit 30a and specific information selecting unit 40b. Further, the communication unit 50b transmits the specific information received from the relevant information searching unit 60 to the dictionary server 14, as well as receives relevant information to the specific information searched in the dictionary server 14 based on the transmitted specific information from the dictionary server 14 and passes the relevant information onto the relevant information searching unit 60.

The specific information selecting unit 40b selects the specific information in the DTP data 1b using the xy coordinate value received from the coordinate conversion unit 30a and the DTP data 1b received from the communication unit 50b, and outputs the selected specific information to the relevant information searching unit 60.

The relevant information searching unit 60 transmits the specific information received from the specific information selecting unit 40b to the dictionary server 14 through the communication unit 50b, receives relevant information as the searching result from the dictionary server 14 through the communication unit 50b, and outputs the received relevant information to the display unit 70.

It should be noted that, while, in this embodiment, the relevant information searching unit 60 searches one or a plurality of dictionary servers 14 on a network, the information processing device 12 may incorporate a preset link table, database, and/or electronic dictionary, as a function substituting the dictionary server 14 on the network, and the relevant information searching unit 60 may search relevant information without accessing a network.

It should be noted that as an example of the dictionary server 14, there are a general-purpose link table, general-purpose database, general-purpose electronic dictionary, and the like.

The display unit 70 displays the relevant information received from the relevant information searching unit 60 to the user using a display or the like.

It should be noted that, while, in the above-described structure, the relevant information searching unit 60 provided on the information processing device 12 communicates with the dictionary server 14 and obtains the relevant information, the document management server 13 may have the relevant information searching unit 60 instead of this structure. In such a case, the specific information selecting unit 40b transmits the selected specific information to the relevant information searching unit 60 on the document management server 13 through the communication unit. The relevant information searching unit 60 communicates with the dictionary server 14, obtains relevant information to the selected specific information, and transmits the relevant information to the information processing unit 12.

The dictionary server 14 stores relevant information, such as a description, URL, and multimedia information, corresponding to data files indicating a text, illustration, photograph, and the like. The data file indicating relevant information to selected specific information of a text, illustration, photograph and the like is searched in the dictionary server 14. The dictionary server 14 may be a search engine, such as Wikipedia, Yahoo, and Google, or dedicated members-only database.

### <Information Processing Procedure>

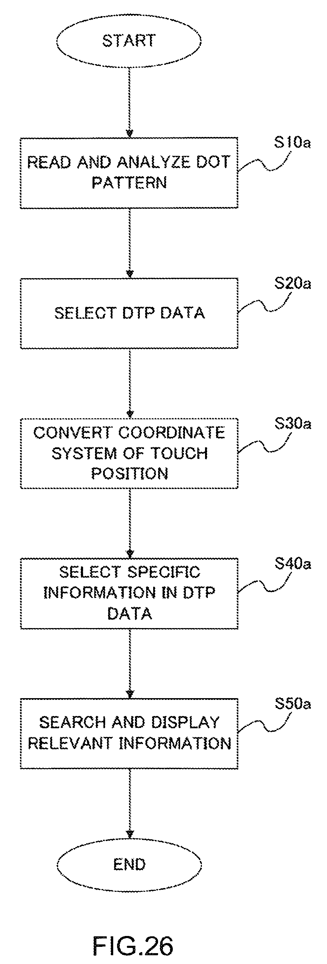

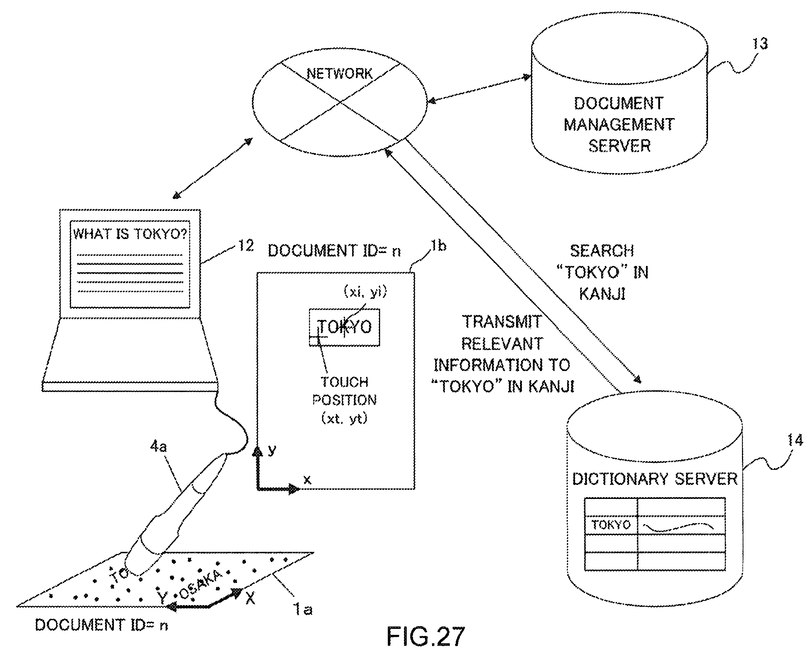

The information processing procedure carried out by the information processing device 12 is described with reference to the flowcharts shown in Figure 26 and 27. It should be noted that the following is a case in which one dot code includes both an XY coordinate value and a code value and the specific information in the DTP data 1b corresponding to the word "Tokyo" 2a in kanji on the printed material 1a is set with the coordinate value (xi, yi) of the center of the specific information in advance as the position information for selection.

First, if a user performs operation for specifying desired specific information using the scanner 4a, the scanner 4a reads out a dot pattern 3 printed on part of the printed material 1a on which the user touched using the scanner 4a. The read dot pattern 3 is converted into a dot code by analysis software in the central processing unit of the scanner 4a. The scanner 4a transmits the document ID part of the converted dot code to the document management unit 20a on the document management server 13 through the communication units 50b and 51, and transmits the XY coordinate value part to the coordinate conversion unit 30 (S10a).

Next, the document management unit 20a, using the document ID received from the scanner 4a, selects the DTP data 1b corresponding to the document ID among the DTP data stored in advance. Then, the document management unit 20a transmits the selected DTP data 1b to the coordinate conversion unit 30a and specific information selecting unit 40b through the communication units 51 and 50b (S20a).

Next, the coordinate conversion unit 30a converts the coordinate value (Xt, Yt) in the XY coordinate system received from the scanner 4a to a coordinate value (xt, yt) in an xy coordinate system of the DTP data 1b received from the document management unit 20a, and passes the coordinate value (xt, yt) onto the specific information selecting unit 40b (S30a).

Next, based on the coordinate value (xt, yt) received from the coordinate conversion unit30a, the specific information selecting unit 40b selects appropriate specific information among the specific information in the DTP data 1b received from the document management unit 20a. The specific information selecting unit 40b passes the selected specific information onto the relevant information searching unit 60 (S40a).

For example, since the distance from the coordinate value (xt, yt) of the touch position to the coordinate value (xi, yi) of the center of the word "Tokyo" 2a in kanji is shorter than the distance from the coordinate value (xt, yt) of the touch position to the coordinate value (xi, yi) of the center of other specific information in the DTP data 1b, the word "Tokyo" 2a in kanji is selected as an input to the information processing device 12.

Next, the relevant information searching unit 60 transmits the specific information received from the specific information selecting unit 40b to the dictionary server 14 through the communication unit 50b, and receives the relevant information to the specific information searched in the dictionary server from the dictionary server 14 through the communication unit 50b. Then, the relevant information searching unit 60 displays the received relevant information to the user through the display unit 70 (S50a).

In the example shown in Figure 27, the word "Tokyo" 2a in kanji is transmitted to the dictionary server 14 over the network. In the dictionary server 14, a description "What is Tokyo?" in hiragana and kanji corresponding to the direction word "Tokyo" in kanji is searched and replied to the information processing device 12. The screen of the information processing device 12 displays the description "What is Tokyo?" in hiragana and kanji corresponding to the word "Tokyo" 2a in kanji.

It should be noted that the relevant information may be a data file indicating an illustration, photograph, and the like, instead of the text.

### [Fourth Embodiment]

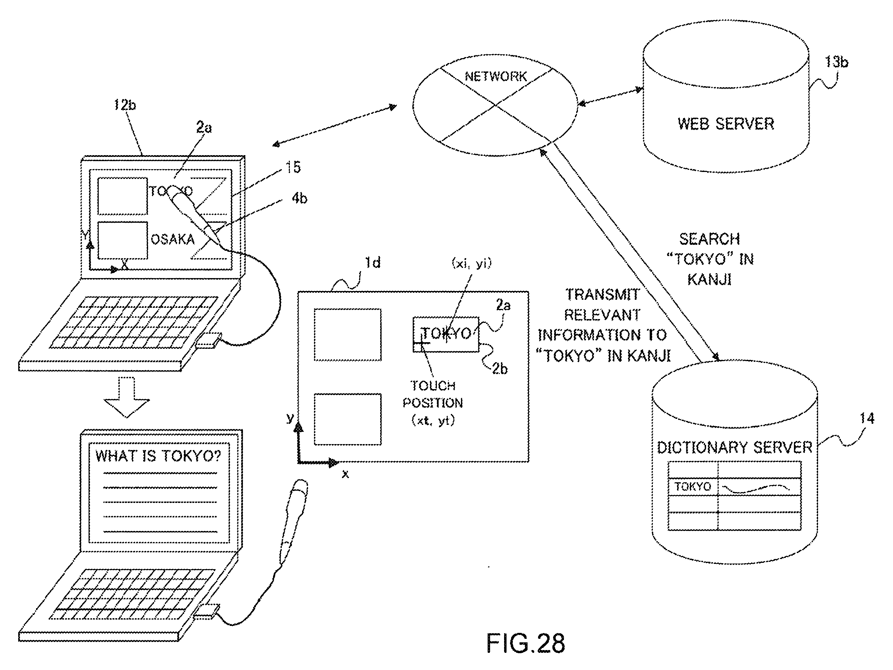

Among the information processing devices of the invention, an embodiment using a display that displays a dot pattern 3 as well as content is described with reference to Figures 28 to 32 as follows.

It should be noted that printed material 1a was used with the information input device 5 of the first embodiment, the information input device 5a of the second embodiment, and the information processing device 12 of the third embodiment. The fourth embodiment will be described using the information processing unit 12b as an example of a variant of the information processing device 12 to describe an example in which a display is used instead of printed material 1a. The method for modifying the information input device 5 and information input device 5a in order to use a display instead of printed material 1a is the same and omitted from description.

Also, the following describes only the part that is different from the third embodiment and the similar part is omitted from description.

### <Overview>

Figure 28 illustrates an overview of the fourth embodiment.

As shown in Figure 28, a user downloads appropriate content from the Web server 13b (two-dimensional format information server) and causes the screen 15 of the information processing device 12b to display the content.

Next, the user touches using the scanner 4b information the user desires to search using the information processing device 12b on the display 15 that displays the content as well as a dot pattern 3.

In this example, as the user wants to search relevant information to the word "Tokyo" 2a in kanji among the content displayed on the display 15, the user touches the word "Tokyo" 2a in kanji displayed on the display 15 using the scanner 4b.

The XY coordinate value of the display 15 is coded in advance in the dot pattern 3. If the user touches on the display 15 using the scanner 4b, the coordinate value (Xt, Yt) of the touch position in the XY coordinate on the display 15 is retrieved by the information processing device 12b.

The information processing device 12b recognizes specific information at the touch position using the retrieved XY coordinate value, the content data 1d (two-dimensional format information) of the content downloaded from the Web server 13b and displayed.

As shown in Figure 28, the content data in the content file has its own xy coordinate system. The specific information, such as a text, figure, illustration, and photograph, included in the content data is set with position information for selection used for selecting the text, figure, illustration, and photograph.

For example, the word "Tokyo" 2a in kanji is set with the corresponding mask region 2b and/or the coordinate value (xi, yi) of the center of the word.

For example, as the coordinate value (xt, yt) of the touch position is included in the mask region 2b, the word "Tokyo" 2a in kanji is selected from the large volume of specific information included in the content data 1d.

The information processing device 12b searches the dictionary server 14 using the selected word "Tokyo" 2a in kanji. Relevant information as the search result is replied from the dictionary server 14 to the information processing device 12b, and shown on the display 15.

In the example shown in Figure 28, the description "What is Tokyo?" that is the relevant information to the word "Tokyo" 2a in kanji is shown on the display 15 as the search result.

In this way, if a user touches and specifies the specific information using the scanner 4, even specific information for which a hyperlink or the like is not set can be an input to the information processing device 12b. Further, relevant information to the input specific information can be searched and displayed.

### <Dot Code Format>

A dot code in this embodiment may include only an XY coordinate value. A content ID is equivalent to the document ID in the above-described embodiment.

It should be noted that if the information processing device 12b has a plurality of displays 15, a dot code including a display ID as a code value can be used for distinguishing the displays 15.

### <Structure of the Display>

A general display may be used for the display 15, and dots of a dot pattern 3 may be displayed by adjusting the RGB values, or a dot part expressing a dot pattern 3 may be provided on the display 15 separate from the pixels of the display 15.

While the expression of "displaying" dots or the like is used through the description of this embodiment, as described above, this expression includes a case of "providing a dot part by arranging the dot part on a display 15."

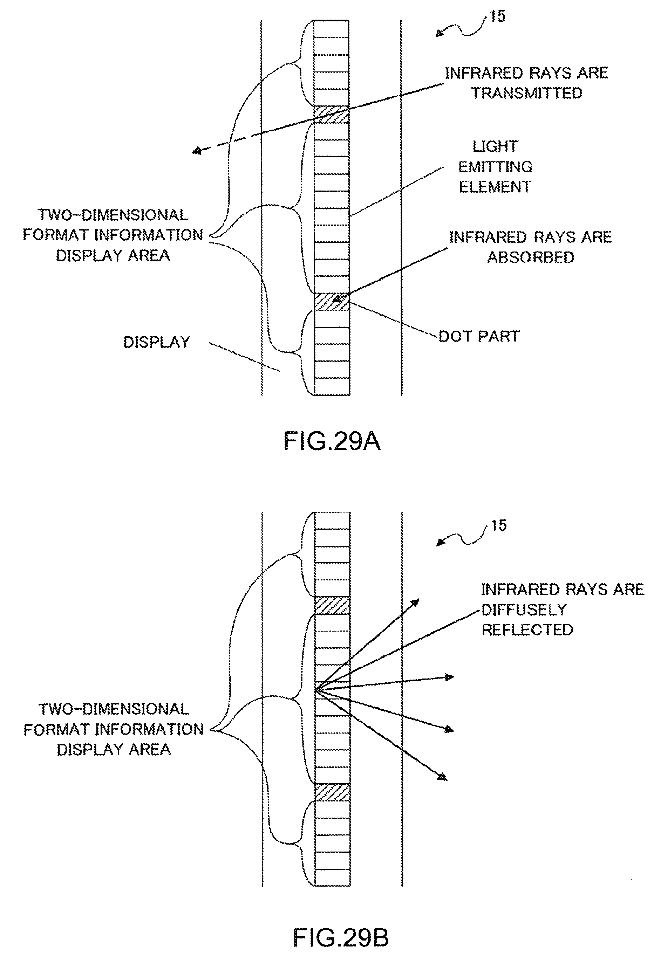

Figures 29A and 29B show section views of an organic electro luminescent (EL) display on which a dot part is provided separately from the pixels. Figure 29A shows a diagram showing how infrared rays entering into the dot part is transmitted or absorbed; and Figure 29B is a diagram showing how infrared rays entering into a light emitting element other than the dot part is diffusely reflected.

In this way, a dot pattern can be expressed by differentiating infrared reflection characteristics between the light emitting element part and the dot part.

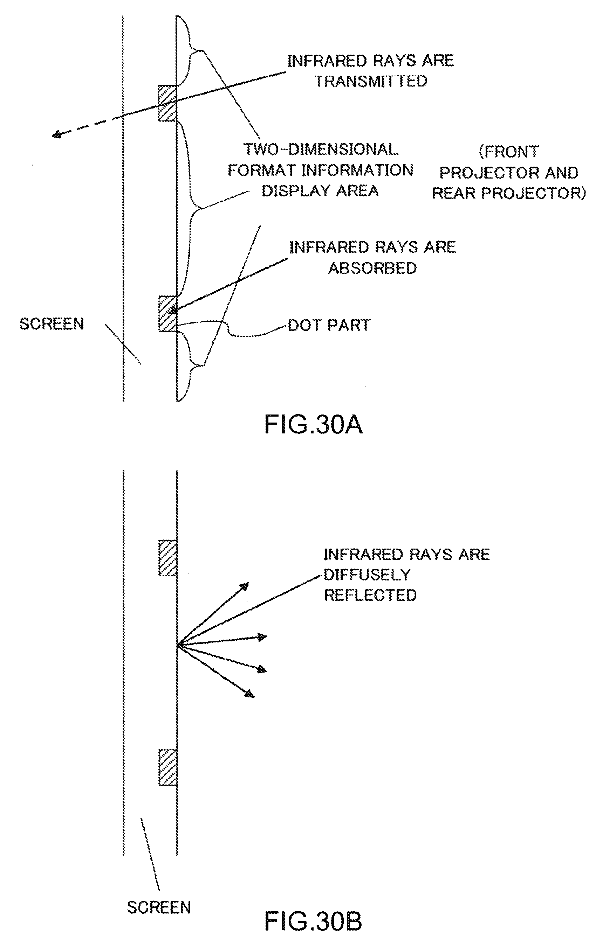

Figures 30A and 30B show an example in which a dot part is provided on a screen of a front projector or rear projector, as a variant of the display 15. Figure 30A is a diagram showing how infrared rays entering into the dot part is transmitted or absorbed, and Figure 30B is a diagram showing how infrared rays enter into part of the screen other than the dot part and are diffusely reflected.

### <Content Data>

As an example of content data, there are ones created using HTML, XML, Flash, or the like. It will be appreciated that the DTP data illustrated in the above-described embodiment may be used as content data.

### <Structures of Information Processing Device 12b and Information Processing System>

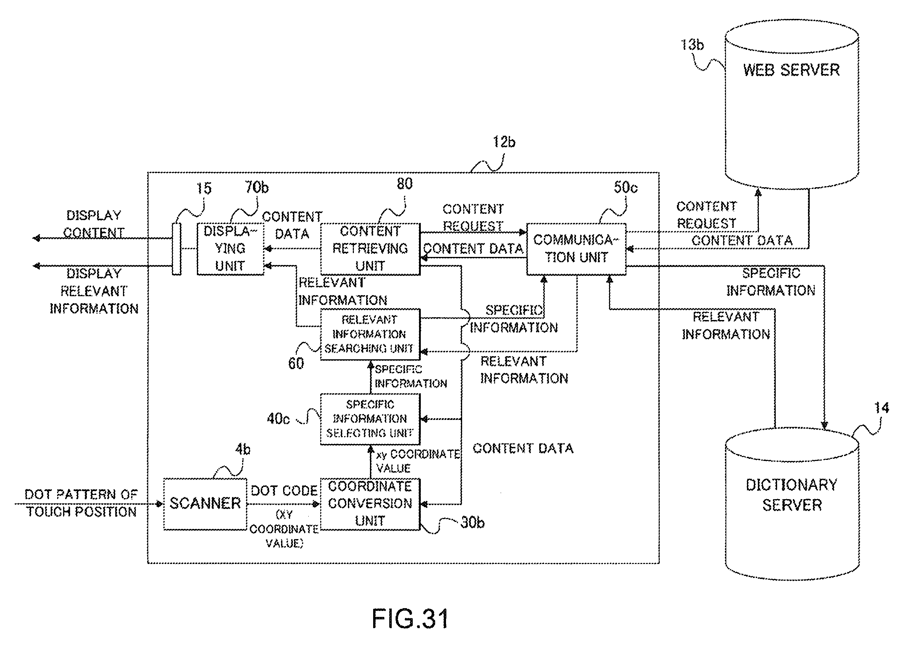

Figure 31 shows a functional block diagram of the information processing device 12b of this embodiment. The Information processing device 12b comprise a scanner 4, coordinate conversion unit 30b, specific information selecting unit 40c, communication unit 50c, relevant information searching unit 60, displaying unit 70b, display 15, and content retrieving unit 80. As a specific example of the information processing device 12b, there is a personal computer.

Also, the information processing system of the embodiment comprises an information processing device 12b, Web server 13b, dictionary server 14, and network connecting the information processing device 12b, Web server 13b, and dictionary server 14.

In the information processing device 12b, the content retrieving unit 80 transmits a content request to the Web server 13b through the communication unit 50c, receives the content data 1d replied from the Web server 13b through the communication unit 50c, then displays the received content data 1d to a user through the displaying unit 70b and the display 15.

The scanner 4b reads the dot pattern 3 of the touch position and transmits the XY coordinate value of the dot code to the coordinate conversion unit 30b.

The coordinate conversion unit 30b converts the XY coordinate value (Xt, Yt) received from the scanner 4b to a coordinate value (xt, yt) of the touch position in the xy coordinate system of the content data 1d using the content data 1d received from the content retrieving unit 80, and transmits the converted coordinate value (xt, yt) to the specific information selecting unit 40c.

The specific information selecting unit 40c, using the xy coordinate value received from the coordinate conversion unit 30b and the content data 1d received from the content retrieving unit 80, selects specific information in the content data 1d and outputs the selected specific information to the relevant information searching unit 60.

The relevant information searching unit 60 transmits the specific information received from the specific information selecting unit 40c to the dictionary server 14 through the communication unit 50, receives relevant information as the search result from the dictionary server 14 through the communication unit 50c, and displays the received relevant information to the user through the displaying unit 70b and the display 15.

The communication unit 50c transmits the content request received from the content retrieving unit 80 to the Web server 13b, as well as transmits the content data 1d corresponding to the content request received from the Web server 13b to the displaying unit 70b, coordinate conversion unit 30b and specific information selecting unit 40c. Further, the communication unit 50c transmits the specific information received from the relevant information searching unit 60 to the dictionary server 14 as well as receives the relevant information to the specific information searched in the dictionary server 14 based on the transmitted specific information from the dictionary server 14 and passes the relevant information onto the relevant information searching unit 60.

The displaying unit 70b displays the content data 1d received from the content retrieving unit 80 and the relevant information received from the relevant information searching unit 60 to the user through the display 15.

It should be noted that, as this structural example is a structure in which a dot part that absorbs infrared rays is provided on a screen of the display 15, a functional block for displaying a dot pattern 3 by adjusting the RGB values is not provided.

### <Information Processing Procedure>

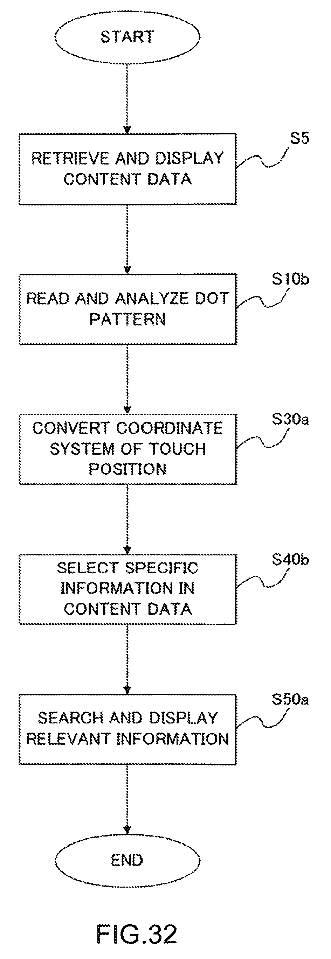

The information processing procedure carried out by the information processing unit 12b is described with reference to the flowchart shown in Figure 32. It should be noted that the following describes a case in which a coordinate value (xi, yi) of the center is set as position information for selection for the specific information in the content data 1d corresponding to the word "Tokyo" 2a in kanji displayed on the display 15

First, the content retrieving unit 80 transmits a content request to the Web server 13b through the communication unit 50c, and receives the content data 1d corresponding to the content request from the Web server 13b through the communication unit 50c. The content retrieving unit 80 displays the received content data 1d on the display 15 through the displaying unit 70b (S5). Also, the content retrieving unit 80 outputs the content data 1d of the displayed content to the coordinate conversion unit 30b and specific information selecting unit 40c.

Specifically, the process of S5 refers to how a user surfs websites using a general Web browser and browses content data downloaded through the Web server 13b.

Next, when the user performs operation for specifying desired specific information using the scanner 4b, the scanner 4b reads out the dot pattern 3 set at the part touched by the user using the scanner 4b on the display 15. The read dot pattern 3 is converted into a dot code by analysis software in the central processing unit of the scanner 4b. The scanner 4b transmits the XY coordinate value of the converted dot code into the coordinate conversion unit 30b (S10b).

Next, the coordinate conversion unit 30b converts the coordinate value (Xt, Yt) in the XY coordinate system received from the scanner 4b to a coordinate value (xt, yt) in the xy coordinate system of the content data 1d received from the content retrieving unit 80, and passes the coordinate value (xt, yt) onto the specific information selecting unit 40c (S30a).

Next, the specific information selecting unit 40c selects appropriate specific information among the specific information in the content data 1d received from the content retrieving unit 80 based on the coordinate value (xt, yt) received from the coordinate conversion unit 30b. The specific information selecting unit 40c passes the selected specific information onto the relevant information searching unit 60 (S40b).

For example, as the distance from the coordinate value (xt, yt) of the touch position to the coordinate value (xi. yi) of the center of the word "Tokyo" 2a in kanji is shorter than the distance from the coordinate value (xt, yt) of the touch position to the coordinate value (xi, yi) of the center of other specific information in the content data 1d, the word "Tokyo" 2a in kanji is selected as input to the information processing device 12b.

Next, the relevant information searching unit 60 transmits the specific information received from the specific information selecting unit 40c to the dictionary server 14 through the communication unit 50c and receives relevant information to the specific information found in the dictionary server 14 from the dictionary server 14 through the communication unit 50c. Then, the relevant information searching unit 60 displays the received relevant information to the user through the displaying unit 70b and the display 15 (S50a).

In an example shown in Figure 28, the word "Tokyo" 2a in kanji is transmitted to the dictionary server 14 over the network. In the dictionary server 14, a description "What is Tokyo?" in hiragana and kanji corresponding to the direction word "Tokyo" in kanji is searched and replied to the information processing device 12b. The description "What is Tokyo?" in hiragana and kanji that is the relevant information corresponding to the word "Tokyo" 2a in kanji is displayed on the screen of the information processing device 12b.

### [Fifth Embodiment]

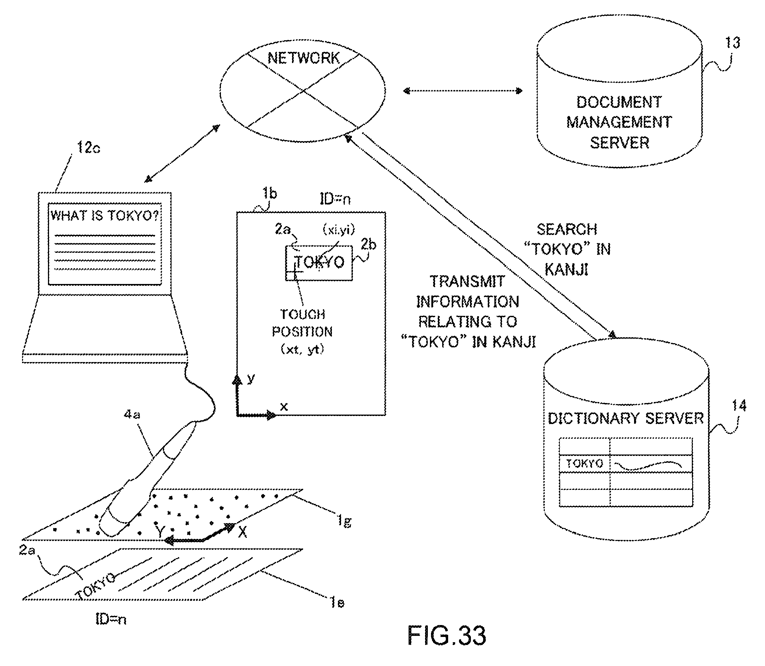

Among the information processing devices of the invention, an embodiment in which a transparent sheet printed with a dot pattern 3 is used by being overlaid and placed on a printed surface of a general printed material is described with reference to Figures 33 to 38 as follows. It should be noted that this transparent sheet is hereafter referred to as the grid sheet 1g (information input assisting sheet).

It should be noted that, in the following description, only a part different from the third embodiment in which a medium printed with content together with a dot pattern is used, specific information is input by retrieving DTP data from a server on a network, and relevant information to the specific information is searched and displayed is described.

### <Description>

Figure 33 shows an overview of the fifth embodiment.

First, a user inputs an index for identifying a general printed material 1e on which no dot pattern 3 is printed to the information processing device 12c. The input method may be a method in which a user touches an icon (described below) printed on a grid sheet 1g to input an index for specifying the printed material 1e, or a method in which a user inputs the index using a keyboard or the like.

It should noted that the index may be converted into a document ID in the document management server 13, and DTP data in the document management server 13 may be searched using the converted document ID.

Next, the user overlays the grid sheet 1g on the printed surface of the printed material 1e.

Next, the user touches the word "Tokyo" 2a in kanji that is specific information that the user wants to search on the printed surface through the grid sheet 1g using the scanner 4a.

Next, the scanner 4a reads the coordinate value (Xt, Yt) of the touch position in the XY coordinate system on the grid sheet 1g.

The process after the input of the index and coordinate value (Xt, Yt) of the touch position into the information processing device 12c is the same as the process in the third embodiment.

In this way, simply overlaying the grid sheet 1g on the printed material 1e and touching on the grid sheet 1g can display on a screen details of the text, illustration, photograph, and the like (relevant information) on the printed material 1e.

In the first to third embodiments, a printed material 1a is superimposed and printed with a text, illustration, photograph, and the like together with a dot pattern 3, and a user touches the printed material 1a with a scanner 4 to display relevant information corresponding to the touched specific information.

However, this method cannot be used to input specific information of a general printed material 1e on which no dot pattern 3 is printed. In this embodiment, since a grid sheet 1g is used by being placed on a printed material 1e, an existing printed material 1e can be used. Also, one sheet of the grid sheet 1g can be used commonly with a plurality of printed materials 1e, which enhances convenience.

### <Grid Sheet>

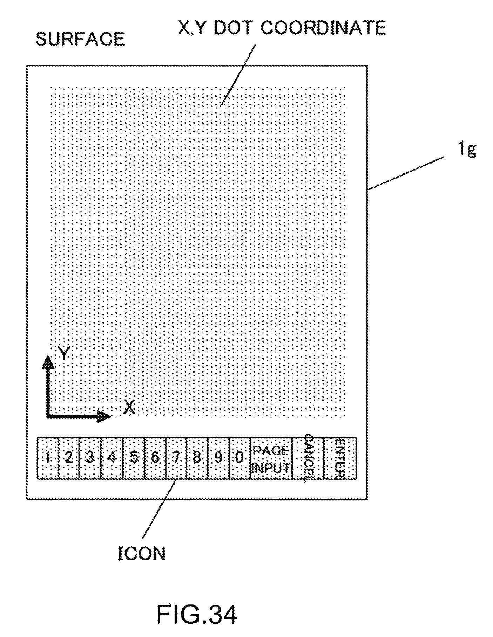

Figure 34 shows a front view of the surface of the grid sheet 1g.

The grid sheet 1 g is printed with a dot pattern 3 that includes an XY coordinate value almost all over the surface. On the bottom part of the grid sheet 1g is superimposed and printed with icons indicating numbers from 0 to 9, and letters of "Page input," "Cancel," and "Enter" together with a dot pattern 3 that includes a code value corresponding to each icon. These icons are icons for a user to input an index that specifies a printed material 1e using the scanner 4a.

### <How to Use a Grid Sheet>

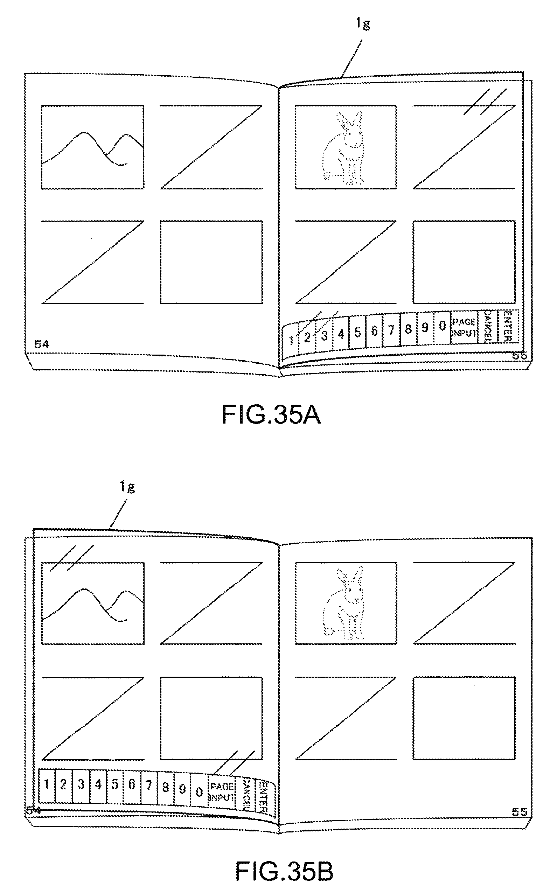

Figures 35A and 35B are diagrams showing a method for using a grid sheet 1g only one side of which is printed with a dot pattern 3 by overlaying the grid sheet 1g on a printed material 1e.

A user uses the grid sheet 1g by overlaying the sheet over a printed material 1e, such as a book, magazine, and newspaper. The user uses the sheet by placing the front surface of the sheet upward whether when using the sheet on the right hand page as shown in Figure 35A or when using the sheet on the left hand page as shown in Figure 35B.

### <Cross Section Structure of the Grid Sheet>

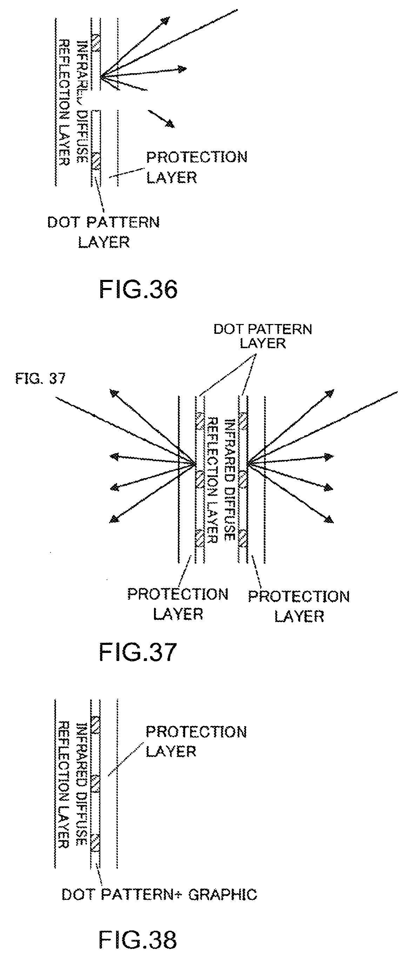

Figures 36 to 38 show a section view of a typical grid sheet 1g.

The inner structure of the grid sheet 1g shown in Figure 36 is a layered structure laminating an infrared diffuse reflection layer, dot pattern layer, and protection layer, in the order from the rear side.

The infrared diffuse reflection layer has a characteristic that diffusely reflects infrared rays and transmits visible light from the dot pattern layer side. The infrared diffuse reflection layer has a structure in which infrared diffuse reflection material is deposited on an evaporation transparent sheet produced with material that transmits visible light, such as vinyl, polyvinyl chloride, and polyethylene terephthalate. The infrared diffuse reflection layer reflects infrared rays that is irradiated by IR-LED of the scanner 4a and transmitted through the protection layer into the scanner 4a as well as transmits visible light.

It should be noted that the infrared diffuse reflection layer may have a characteristic that reflects infrared rays from the other side of the dot pattern layer (i.e., the rear surface side). If the grid sheet 1g having such a characteristic is attached on a display screen or the like, infrared rays from the display screen or screen are cut out, and the infrared light irradiated by the IR-LED can be the only reflection. Therefore, a bright and clear dot pattern 3 can be captured and the dot code can be accurately analyzed.

The dot pattern layer is printed with a dot pattern 3 in which dots formed with infrared absorbing material, such as a carbon ink, are arranged in accordance with a predetermined rule.

The protection layer is formed with material that has a characteristic to transmit visible light and infrared rays, such as vinyl, polyvinyl chloride, and polyethylene terephthalate. Touching a dot pattern repeatedly with a scanner causes a problem in which the dots are worn out and the dot pattern cannot be read precisely. Therefore, providing a protection layer prevents the dots from wearing and dirt, allowing longer use of the sheet.

As shown in Figure 36, infrared rays irradiated from the IR-LED are first transmitted through the protection layer, and absorbed into the dot part of the dot pattern layer or transmitted through other region than the dot part. Next, the infrared rays transmitted through the dot pattern layer are diffusely reflected from the infrared diffuse reflection layer.

The inner structure of the grid sheet 1g shown in Figure 37 is a layered structure laminating a protection layer, dot pattern layer, infrared diffuse reflection layer, dot pattern layer, and protection layer in the order from the rear side. That is, this structure features the dot pattern layers provided on both sides of the grid sheet 1g.

In this way, both sides of the grid sheet 1g can be used, which enhances convenience.

It should be noted that, in the grid sheet 1g shown in Figure 37, the dot pattern layers on the front and rear sides may have the same patterned coordinate value and/or code value or different patterned coordinate value and/or code value.

The inner structure of the grid sheet 1g shown in Figure 38 is a layered structure laminating an infrared diffuse reflection layer, dot pattern + graphic printed layer, and protection layer in the order from the rear side.

In this way, a text, illustration, photograph, and the like may be superimposed and printed using ink made of infrared transmissive material or infrared reflective material on the dot pattern layer or other layers. The graphic printed layer on which the text, illustration, photograph and the like are superimposed and printed is a visible print layer.

### [Sixth Embodiment]

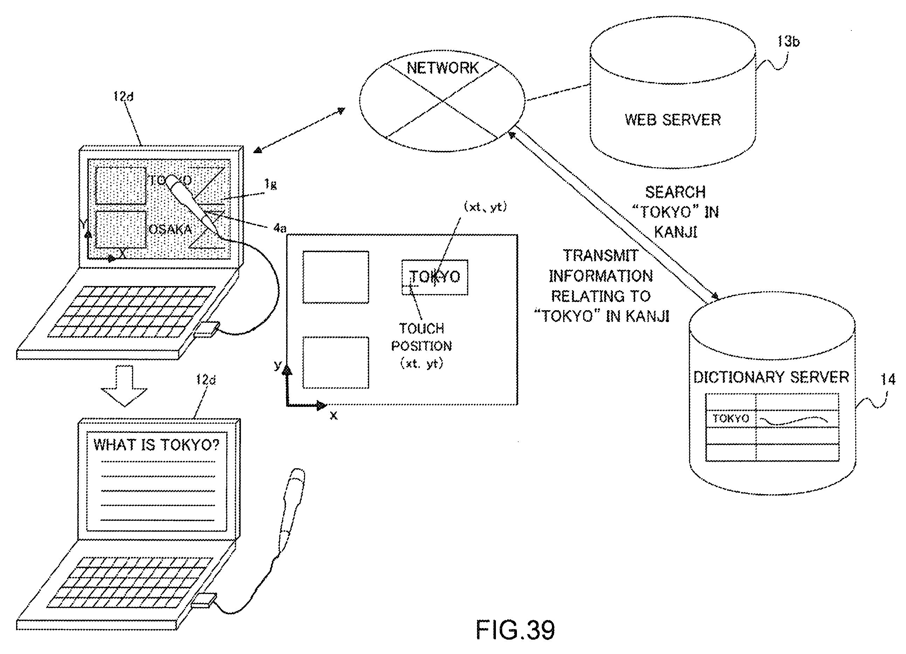

Among the information processing devices of the invention, a grid sheet 1g printed with a dot pattern 3 will be described in an embodiment using the sheet by overlaying the sheet on a general display screen with reference to Figure 39 as follows.

It should be noted that the following description describes only the part different from the forth embodiment that uses a display displaying a dot pattern as well as content.

### <Overview>

Figure 39 shows an overview of the sixth embodiment.

First, a user places the grid sheet 1g over the display screen of the information processing device 12d. A user may place the grid sheet 1g by attaching the sheet on the display. It is preferable that a calibration process is carried out after placing the grid sheet 1g.

Next, the user downloads a desired content file from a Web server 13b to the information processing device 12d using a Web browser or the like. The content of the downloaded content file is displayed on the screen of the information processing device 12d.

Next, through the grid sheet 1g placed on the display screen, the user touches using the scanner 4a the word "Tokyo" 2a in kanji that is the specific information on the screen to which relevant information the user wants to search.

Next, the scanner 4a reads out a coordinate value (Xt, Yt) of the touch position in the XY coordinate system of the grid sheet 1g.

The information processing device 12d recognizes specific information of the touch position using the read XY coordinate value and content data 1d of the content downloaded from the Web server 13b and being displayed.

The process after recognizing the specific information is the same as the process in the forth embodiment.

In this way, simply overlaying the grid sheet 1g over a display screen and touching thereon with the scanner 4a can display, on the screen, detailed description of a text, illustration, photograph, and the like on the display screen (relevant information).

### [Seventh Embodiment]

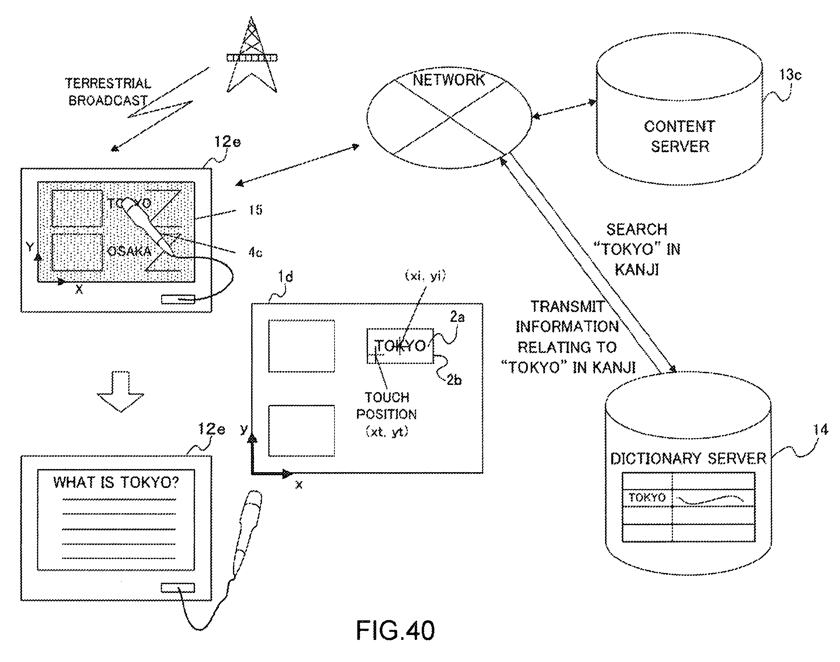

Among the information processing devices of the invention, the following describes an embodiment using a television receiver provided with a display that displays content as well as a dot pattern 3 with reference to Figures 40 to 42.

It should be noted that printed material 1a is used with the information input device 5 in the first embodiment, the information input device 5a in the second embodiment, and the information processing device 12 in the third embodiment. In the seventh embodiment, in order to describe an example of using a display of a television receiver instead of the printed material 1a, a television receiver 12e is used as a variant example of information processing device 12. The method for modifying the structures of the information input device 5 and information input device 5a to use a display instead of the printed material 1a is the same and omitted from description.

Also, the following describes the part different from the forth embodiment and the same part is omitted from description.

### <Overview>

Figure 40 shows an overview of the embodiment.

First, a user receives an airwave in which a normal image is superimposed with a dot pattern 3 using a television receiver 12e and displays the received image on a display 15. Then, on the display 15 that displays the dot pattern 3 together with the received image, a user touches, using the scanner 4c, information that the user desires to input to the television receiver 12e and search.

In this example, since the user wants to search relevant information relating to the word "Tokyo" 2a in kanji among the received images displayed on the display 15, the user touches the word "Tokyo" 2a in kanji displayed on the display 15 with the scanner 4c.

The dot pattern 3 is coded with an XY coordinate value of the display 15 and a content ID specifying the received image, and if a user touches the display 15 with the scanner 4c, the coordinate value (Xt, Yt) of the touch position in the XY coordinate system of the display 15 and the content ID are read out by the television receiver 12e.

Using the read content ID, the television receiver 12e downloads content data 1d corresponding to the content ID among the content data for which specific information and position information for selection is set in advance from a content server 13c (two-dimensional format information server). Then, the television receiver 12e selects the specific information at the touch position using the read XY coordinate value and downloaded content data 1d.

As shown in Figure 40, the content data in the content file has its own xy coordinate system. Specific information included in the content data, such as a text, figure, illustration, and photograph, is set with position information for selection used for selecting the text, figure, illustration, or photograph.

For example, the word "Tokyo" 2a in kanji is set with a corresponding mask region 2b and/or coordinate value (xi, yi) of the center.

For example, since the coordinate value (xt, yt) of the touch position is included in the mask region 2b, the word "Tokyo" 2a in kanji is selected among the large volume of specific information included in the content data 1d.

The television receiver 12e searches the dictionary server 14 using the selected word "Tokyo" 2a in kanji. The relevant information that is the search result is replied from the dictionary server 14 to the television receiver 12e and displayed on the display 15.

In the example shown in Figure 40, the description "What is Tokyo?" in hiragana and kanji that is the relevant information to the word "Tokyo" 2a in kanji is displayed on the display 15 as the search result.

In this way, even specific information for which a hyperlink or the like is not set among the images received from broadcast waves can be input to the television receiver 12e by touching and specifying the specific information by a user with the scanner 4c. Also, relevant information to the input specific information can be searched and displayed.

### <Dot Code Format>

In the above overview description, the dot code of the dot pattern 3 of this embodiment includes a content ID and XY coordinate value that identifies the content received by the television receiver 12e as a broadcast wave. Alternatively, a dot code and a dot pattern 3 may be generated from an XY coordinate value generated by the television receiver 12e itself and a content ID obtained from EPG (Electronic Program Guide) data acquired by the television receiver 12e, and displayed on the display 15.

Further, the dot code of the dot pattern 3 displayed on the display 15 may include only an XY coordinate value. In such a case, the dot pattern 3 may be a structure in which the dot part of the dot pattern 3 is provided fixedly abutting the pixels on the display 15, instead of expressing the dot pattern 3 with RGB pixels.

It should be noted that, if the dot code of the dot pattern 3 displayed on the display 15 does not include the content ID, the content ID may be read out by touching the appropriate part of the print medium, such as a television guide, printed with the content ID as a dot pattern 3 using the scanner 4c or the content ID may be input manually by a user using a paper keyboard and the scanner 4c.

The content ID displayed on the display 15 may be displayed together with XY coordinate value of the dot pattern 3 at least part of the region on which XY coordinate value of the dot pattern 3 is displayed or displayed other region than the region.

Further, the content ID displayed on the display 15 is an XY coordinate value of the dot pattern 3 that uniquely identifies content data, and this XY coordinate value may be displayed all over the region where the XY coordinate value of the dot pattern 3 is displayed.

### <Content Data>

As an example of the content data, there are motion image data such as MPEG, and the ones created by HTML, XML, Flash, or the like. It will be appreciated that the DTP data illustrated in the above-described embodiment may be used as content data.

While content data includes two-dimensional format information in principle, in addition to this, MPEG data and the like may have three-dimensional format information including a time axis. Also, three-dimensional image data may have three-dimensional format information including a Z axis in back and forth directions with reference to the display 15. Further, motion picture data of a three-dimensional image may have four-dimensional format information having XYZ axes and a time axis.

### <Structures of Television Receiver 12e and Information Processing System>

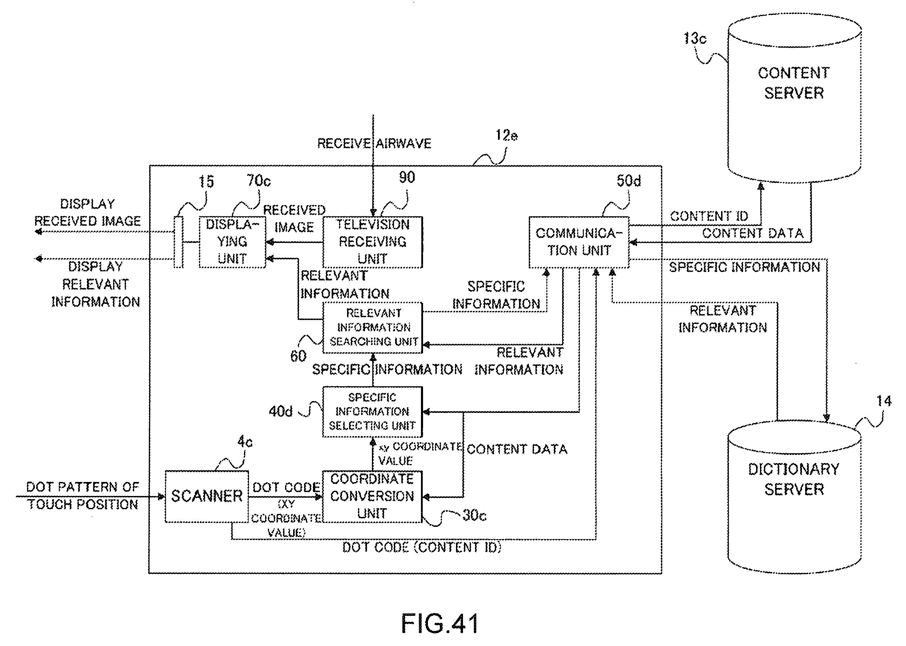

Figure 41 shows a functional block diagram of a television receiver 12e of this embodiment. The television receiver 12e comprises a scanner 4c, coordinate conversion unit 30c, specific information selecting unit 40d, communication unit 50d, relevant information searching unit 60, displaying unit 70c, display 15, and television receiving unit 90.

Also, the information processing system of the embodiment comprises a television receiver 12e, content server 13c, dictionary server 14, and network connecting the television receiver 12e, content server 13c, and dictionary server 14.

In the television receiver 12e, the television receiving unit 90 receives broadcast waves. A dot pattern 3 that is formed by combining a content ID included in the broadcast waves or obtained from EGP or the like and an XY coordinate value on a display screen is added to the received image and displayed to a user through the displaying unit 70c and the display 15. It should be noted that the dot pattern 3 may be added to the received image only when the user uses the scanner 4c.

The scanner 4c reads out the dot pattern 3 of the touch position, transmits the XY coordinate value of the dot code to the coordinate conversion unit 30c, and transmits the content ID of the dot code to the content server 13c through the communication unit 50d. It should be noted that the content ID may be transmitted directly from the television receiving unit 90 to the content server 13c when the scanner reads the XY coordinate value, instead of being converted to a dot pattern 3 once and read by the scanner 4c.

The coordinate conversion unit 30c converts, using the content data 1d received from the content server 13c through the communication unit 50d, the XY coordinate value (Xt, Yt) of the touch position received from the scanner 4c into the coordinate value (xt, yt) of the touch position in an xy coordinate system on the content data 1d, then, transmits the converted coordinate value (xt, yt) to the specific information selecting unit 40d.

The specific information selecting unit 40d, using the xy coordinate value received from the coordinate conversion unit 30c and the content data 1d received from the content server 13c through the communication unit 50d, selects specific information in the content data 1d and outputs the selected specific information to the relevant information searching unit 60.

The relevant information searching unit 60 transmits the specific information received from the specific information selecting unit 40d to the dictionary server 14 through the communication unit 50d, receives relevant information as the search result from the dictionary server 14 through the communication unit 50d, and displays to the user the received relevant information through the displaying unit 70c and the display 15.

The communication unit 50d transmits the content ID received from the scanner 4c to the content server 13c as well as transmits the content data 1d received from the content server 13c and corresponding to the content ID to the coordinate conversion unit 30c and the specific information selecting unit 40d. Further, the communication unit 50d transmits the specific information received from the relevant information searching unit 60 to the dictionary server 14 as well as receives the relevant information searched in the dictionary server 14 based on the transmitted specific information from the dictionary server 14 and passes the relevant information onto the relevant information searching unit 60.

The displaying unit 70c displays the received image to which a dot pattern 3 received from the television receiving unit 90 is added and the relevant information received from the relevant information searching unit 60 to the user through the display 15.

### <Information Processing Procedure>

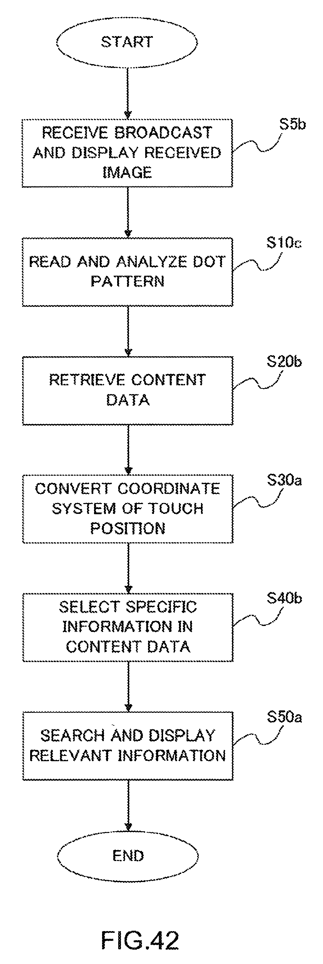

An information processing procedure carried out by the television receiver 12e is described with reference to the flowchart shown in Figure 42. It should be noted that the following describes the case in which specific information in content data 1d corresponding to a word "Tokyo" 2a in kanji displayed on the display 15 is set with a coordinate value (xi, yi) of the center as position information for selection in advance.

First, the television receiving unit 90 receives a broadcast wave, superimposes a dot pattern 3 that includes the content ID obtained from the broadcast wave, Internet, or the like and an XY coordinate value on the screen of the display 15 over the received image, and displays through the displaying unit 70c (S5b).

Next, when the user performs operation for specifying desired specific information using the scanner 4c, the scanner 4c reads out the dot pattern 3 set in a part of the display 15 touched by the user using the scanner 4c. The read dot pattern 3 is converted into a dot code by analysis software in the central processing unit of the scanner 4c. The scanner 4c transmits the XY coordinate value of the converted dot code to the coordinate conversion unit 30c as well as transmits the content ID of the converted dot code to the content server 13c through the communication unit 50d (S10c).

Next, the content server 13c, using the content ID received from the scanner 4c, selects content data 1d corresponding to the content ID among the content data stored in advance. Then, the content server 13c transmits the selected content data 1d to the coordinate conversion unit 30c and the specific information selecting unit 40d through the communication unit 50d (S20b).

Next, the coordinate conversion unit 30c converts the coordinate value (Xt, Yt) in the XY coordinate system received from the scanner 4c to a coordinate value (xt, yt) in an xy coordinate system in the content data 1d obtained from the content server 13c and passes the coordinate value (xt, yt) onto the specific information selecting unit 40d (S30a).

Next, the specific information selecting unit 40d selects appropriate specific information among the specific information in the content data 1d received from the content server 13c based on the coordinate value (xt, yt) received from the coordinate conversion unit 30c. The specific information selecting unit 40d passes the selected specific information onto the relevant information searching unit 60 (S40b).

For example, since the distance form the coordinate value (xt, yt) of the touch position to the coordinate value (xi, yi) of the center of the word "Tokyo" 2a in kanji is shorter than the distance form the coordinate value (xt, yt) of the touch position to the coordinate value (xi, yi) of the center of other specific information in the content data 1d, the word "Tokyo" 2a in kanji is selected as input to the television receiver 12e.

Next, the specific information searching unit 60 transmits the specific information received from the specific information selecting unit 40d through the communication unit 50d to the dictionary server 14, and receives relevant information to the specific information searched in the dictionary server 14 from the dictionary server 14 through the communication unit 50d. Then, the relevant information searching unit 60 displays the received relevant information to the user through the displaying unit 70c and the display 15 (S50a).

In the example shown in Figure 40, the word "Tokyo" 2a in kanji is transmitted to the dictionary server 14 through the network. In the dictionary server 14, a description "What is Tokyo?" in hiragana and kanji corresponding to the direction word "Tokyo" in kanji is searched and replied to the television receiver 12e. The description "What is Tokyo?" in hiragana and kanji corresponding to the word "Tokyo" 2a in kanji is displayed on the screen of the television receiver 12e.

It should be noted that while, in the above description, the content data is analyzed in advance and the specific information and position information for selection is set in advance, the structure is not limited to this. The television receiving unit 90 may first analyze content data, such as a text, figure, illustration, and photograph, within a predetermined distance from the coordinate value (xt, yt) of the touch position at the time when the television receiving unit 90 receives a broadcast wave or when a user touches a dot pattern 3 on a display 15 with the scanner 4c, and recognize the specific information and set the position information for selection.

Further, while this embodiment uses the television receiver 12e as an example of the information processing device, alternatively, the function of the television receiver 12e may be realized by using a normal television receiver in combination with an additionally installed set-top box.

### [Supplementary Notes]

While in the above-described embodiments, a user touches with a scanner on a medium printed with a dot pattern, a display that displays a dot pattern or is provided with a do t pattern, or a grid sheet provided with a dot pattern, to specify a position, the method for inputting a coordinate position is not limited to this, and the method may be the one by touching with a finger on a conventional touch panel or touch screen provided on a conventional display or by a general mouse operation.

In order to search the specific information using the coordinate value (xt, yt) of the touch position, the information input device may search the specific information by allocating one or more methods for searching the specific information based on the method for setting position information for selection according to any one of the above-described aspects, and selecting any one of the searching methods according to a predetermined algorithm.

The information input device may select one or more specific information from a plurality of the specific information searched within an arbitrary distance from the coordinate value (xt, yt), search relevant information to the specific information from a preset link table, database, or electronic dictionary, and output the relevant information.

If a plurality pieces of the specific information that were searched within an arbitrary distance from the coordinate value (xt, yt) includes at least one specific information that is searched based on the fact that the coordinate value (xt, yt) of the touch position is identical to any coordinate value of all the coordinate values (xia, yia) in the mask region, the information input device may assume that the position information for selection of the specific information is the centroid of the mask, search the specific information with which the distance from the coordinate value (xt, yt) of the touch position to its position information for selection is the shortest among a plurality pieces of the searched specific information or search available choices of the specific information in the order from closer distances, and select the specific information.

The invention is not limited to any of the above-described embodiments and may vary in many ways within the scope shown in the claims. Also, any embodiment obtained by properly combining the technical means disclosed in different embodiments may be within the technical scope of the invention.

Lastly, the information input device 5, 5a, information processing device 12-12d, and each block of television receiver 12e, especially the coordinate conversion unit 30-30c, specific information selecting unit 40-40d, and relevant information searching unit 60, may be constructed by a hardware logic or realized by software using CPU as described below.

That is, the information input device 5, 5a, information processing device 12-12d, and television receiver 12e each comprises a CPU (Central Processing Unit) that executes instruction of a control program to realize each function, ROM (Read Only Memory) that stores the program, RAM (Random Access Memory) that develops the program, and a storage (recording medium), such as a memory, that stores the program and a variety of data. And the object of the invention can be achieved by providing a recording medium that computer-readably stores a program code (i.e., exacutable format program, intermidiate code program, or source program) of the control program of the information input device 5, 5a, information processing device 12-12d, and television receiver 12e, that realizes the above-described function, to the information input device 5, 5a, information processing device 12-12d, and television receiver 12e and reading and executing the program code recorded in the recording medium by the computer (or CPU or MPU).

As the recording medium, for example, there may be used tapes including a magnetic tape and cassette tape, disks including magnetic discs such as a floppy (that is a registered trade mark) disk and hard disk, optical discs including a CD-ROM, MO, MD, DVD, and CD-R, cards including an IC card (including a memory card) and optical card, or semiconductor memories including a mask ROM, EPROM, EEPROM, and FlashROM.

Moreover, the information input device 5, 5a, information processing device 12-12d, and television receiver 12e may be connectable to a communication network and the program code may be provided through the communication network. Such a communication network is not specifically limited and there may be used the Internet, intranet, extranet, LAN, ISDN, VAN, CATV, communications system, virtual private network, telephone network, mobile network, satellite network, and the like. Also, the transmission medium constituting the communication network is not specifically limited and there may be used wired means, such as IEEE 1394, USB, power-line carrier, cable television line, telephone line, and ADSL, or wireless means, such as infrared rays including IrDA and remote controller, Bluetooth (that is a registered trade mark), IEEE 802.11, HDR, mobile phone network, satellite connection, and digital terrestrial network. It should be noted that the invention may be realized in an embodiment of a computer data signal embedded in a carrier wave in which the program code is realized in electronical transmission.

### [Industrial Applicability]

The information input device of the invention may be used as a personal computer, PDA, television receiving device, front projector, rear projector, game machine, karaoke machine, mobile phone terminal device, POS terminal device, ATM, KIOSK terminal, car navigation system, pachinko, watch, smartphone, and the like that can easily input a text, figure, illustration, photograph and the like printed on a print medium or displayed on a screen.

Further, the information processing device of the invention may be used as a personal computer, PDA, television receiving device, front projector, rear projector, game machine, karaoke machine, mobile phone terminal device, POS terminal device, ATM, KIOSK terminal, car navigation system, pachinko, watch, smartphone, and the like that can easily search a text, figure, illustration, photograph and the like printed on a print medium or displayed on a screen.

## Claims

1. An information input device (5-5a) comprising:
a dot-pattern reading unit (4-4c) whose subject is DTP data (1b), HTML, Flash, CAD data, map data and other two-dimensional format information (1b, 1d) to be printed on a medium (1a, 1c), wherein, among information that is visualized as a text, a figure, an illustration, a photograph, and the like, information that meets a predetermined criterion is determined in advance as specific information and formatted, and the dot-pattern reading unit (4-4c) is used to touch on the medium (1a, 1c) to read a dot pattern (3) at the touch position when a user specifies, by a predetermined operation, the visualized specific information on a medium (1a, 1c) printed with a dot pattern (3) that is made into a pattern with an XY coordinate value and/or a code value based on a predetermined algorithm for a variety of multimedia information output and/or operation instruction; and
a two-dimensional format information storing and selecting unit (20-20a) that, using identification information for identifying the two-dimensional format information (1b, 1d), selects the two-dimensional format information (1b, 1d) corresponding to the identification information among one or more pieces of the two-dimensional format information (1b, 1d) stored in advance; **characterized in that** the device further comprises:
a coordinate conversion unit (30-30b) that converts a coordinate value (Xt, Yt) in an XY coordinate system of the dot pattern (3) at the touch position into a coordinate value (xt, yt) in an xy coordinate system of the selected two-dimensional format information (1b, 1d); and
a specific information selecting unit (40-40c) that, using the coordinate value (xi, yi) in the xy coordinate system of the two-dimensional format information (1b, 1d) as position information for selection, the coordinate value (xi, yi) being determined when laying out and printing the specific information in order to specify a position of the specific information in the xy coordinate system of the two-dimensional format information (1b, 1d), calculates a distance from the coordinate value (xt, yt) in the xy coordinate system of the two-dimensional format information (1b, 1d) that is converted from the coordinate value (Xt, Yt) of the dot pattern (3) of the touch position to one or more pieces of position information for selection within a predetermined distance, and selects specific information having coordinates of the closest position information for selection as input into a local device.

2. The information input device (5-5a) according to claim 1, wherein the medium (1a, 1c) is a medium on which the dot pattern (3) and the two-dimensional format information (1b, 1d) are superimposed and printed.

3. The information input device (5-5a) according to claim 2, wherein the identification information is the code value of the dot pattern (3) printed on the medium (1a, 1c), and printed together with an XY coordinate value of the dot pattern (3) on at least part of a region printed with the XY coordinate value of the dot pattern (3) or other region than said region.

4. The information input device (5-5a) according to claim 2, wherein the identification information is an XY coordinate value of the dot pattern (3) that uniquely identifies the two-dimensional format information (1b, 1d), and the XY coordinate value is printed on all over a region printed with the XY coordinate value of the dot pattern (3).

5. The information input device (5-5a) according to claim 2, wherein the medium (1a, 1c) is a structure that diffusely reflects infrared rays irradiated from an infrared irradiation unit provided on the dot-pattern reading unit (4-4c), the two-dimensional format information (1b, 1d) is printed on the medium (1a, 1c) using an ink made of an infrared transmissive material or an infrared reflective material; and the dot pattern (3) is printed on the material using an ink made of an infrared absorbing material.

6. The information input device (5-5a) according to claim 1 wherein the medium (1a, 1c) is a display (15) that displays the two-dimensional format information (1b, 1d) together with the dot pattern (3) .

7. The information input device (5-5a) according to claim 6, wherein the identification information is the code value of the dot pattern (3) displayed on the display (15) and displayed together with an XY coordinate value of the dot pattern (3) on at least part of a region that displays the XY coordinate value of the dot pattern (3) or other region than said region.

8. The information input device (5-5a) according to claim 6, wherein the identification information is an XY coordinate value of the dot pattern (3) that uniquely identifies the two-dimensional format information (1b, 1d) and the XY coordinate value is displayed all over a region that displays the XY coordinate value of the dot pattern (3).

9. The information input device (5-5a) according to claim 6, wherein the display (15) is a structure in which dot part of the dot pattern (3) absorbs or transmits infrared rays irradiated from an infrared irradiation unit provided on the dot-pattern reading unit (4-4c) and other region than the dot part diffusely reflects the infrared rays.

10. The information input device (5-5a) according to claim 1 wherein the medium (1a, 1c) is an information input assisting sheet that is placed on a medium (1a, 1c) printed with the two-dimensional format information (1b, 1d) or attached on a display (15) that displays the two-dimensional format information (1b, 1d).

11. The information input device (5-5a) according to claim 10, wherein the information input assisting sheet is printed, together with the dot pattern (3), with a plurality of icons that allow a user to input an index for identifying the two-dimensional format information (1b, 1d) printed on the medium (1a, 1c) or displayed on the display (15), and the two-dimensional format information storing and selecting unit (20-20a) converts the index input by touching the icon using the dot-pattern reading unit (4-4c) into the identification information and selects the two-dimensional format information (1b, 1d) using the converted identification information.

12. The information input device (5-5a) according to claim 10, wherein the information input assisting sheet is made by laminating:
an infrared diffuse-reflection layer that has a characteristic that diffusely reflects infrared rays as well as transmits visible light entering from one side;
a dot pattern layer provided on one side of the infrared diffuse-reflection layer and formed by arranging dots of the dot pattern (3) formed of a material that has a characteristic that absorbs infrared rays; and
a protection layer provided on opposite side to the infrared diffuse-reflection layer of the dot pattern layer and having a characteristic that transmits infrared rays and visible light.

13. The information input device (5-5a) according to claim 10, wherein the information input assisting sheet is made by laminating:
an infrared diffuse-reflection layer that has a characteristic that diffusely reflects infrared rays entering from each side as well as transmits visible light from each side;
dot pattern layers provided on both sides of the infrared diffuse-reflection layer and formed by arranging dots of the dot pattern (3) formed of a material that has a characteristic that absorbs infrared rays; and
protection layers provided on further external sides of each of the dot pattern layers and have a characteristic that transmits infrared rays and visible light entering from each direction, wherein the coordinate values and/or code values made into a pattern in the dot pattern (3) arranged on each of the dot pattern layers are identical or different from each other.

14. The information input device (5-5a) according to any one of claims 1, 2, 6 and 10, wherein a user performs the predetermined operation using the dot-pattern reading unit (4-4c) by touching the visualized specific information, by touching the visualized specific information and dragging over the specific information and by touching the visualized specific information and encircling a region displaying the specific information.

15. The information input device (5-5a) according to claim 14, wherein the specific information selecting unit (40-40c) selects specific information having the position information for selection surrounded by a plurality of coordinate values (xt, yt) in an xy coordinate system of the two-dimensional format information (1b, 1d) corresponding to a trajectory obtained by the operation of encircling the region displaying the specific information, and if there are a plurality pieces of the specific information, decides one piece of the specific information by selecting after displaying candidates of the specific information or based on a predetermined algorithm.

16. The information input device (5-5a) according to any one of claims 1, 2, 6 and 10, wherein if the specific information is a word (2a) and a gap exists between letters constituting the word (2a), the specific information has the position information for selection (2b) for each letter, while if the specific information is a figure, an illustration, a photograph, and the like and constituted by a plurality of objects, the specific information has the position information for selection (2b) for each object.

17. The information input device (5-5a) according to any one of claims 1, 2, 6 and 10, wherein the position information for selection (2b) is a coordinate value of a center of a word (2a), that is, specific information, or a center of each letter constituting the word (2a), or a coordinate value of a centroid of a figure, an illustration, a photograph, and the like, that is, specific information, or an object constituting the figure, the illustration, and the photograph.

18. The information input device (5-5a) according to any one of claims 1, 2, 6 and 10, wherein the position information for selection (2b) is a combination of a coordinate value of a starting point (xi1, yi1) and a coordinate value of an end point (xi2, yi2) of a line segment indicating a width of a word (2a) of specific information or a letter constituting the word (2a) between middle points or arbitrary positions in a height direction of the word (2a) or the letter, and
the specific information selecting unit (40-40c) selects the specific information having a line segment where a length from a coordinate value of the touch position (xt, xy) to said line segment is within an arbitrary distance and shortest.

19. The information input device (5-5a) according to any one of claims 1, 2, 6 and 10, wherein the position information for selection (2b) is a collection of all coordinate values (xia, yia) included in a mask surrounding a word (2a) of the specific information or each letter constituting the word (2a) or a collection of all coordinate values (xia, yia) included in a figure, an illustration, a photograph, and the like of the specific information, or an object constituting the figure, the illustration and the photograph, wherein if a coordinate value of the touch position (xt, yt) matches any pair of the all coordinate values (xia, yia), the specific information selecting unit (40-40c) selects the corresponding specific information.

20. The information input device (5-5a) according to claim 19, wherein the specific information selecting unit (40-40c), based on a combination of a coordinate value of a starting point (xi1, yi1) and a coordinate value of an end point (xi2, yi2) of a line segment indicating a width of a word (2a) of specific information or each letter constituting the word (2a) between middle points or arbitrary positions in a height direction of the word (2a) or the letter, and a height of the letter, hi, generates the mask surrounding the word (2a) or the letter according to a predetermined algorithm.

21. The information input device (5-5a) according to any one of claims 1, 2, 6 and 10, wherein the specific information selecting unit (40-40c) recognizes one or more pieces of the specific information by parsing a text and/or searching a file and/or analyzing an image of a figure, an illustration, a photograph and the like within an arbitrary distance from the coordinate value of the touch position (xt, yt) in the two-dimensional format information (1b, 1d) according to a predetermined algorithm, calculates the position information for selection (2b) of the specific information according to a predetermined algorithm, and selects the specific information based on the coordinate value (xt, yt), the recognized specific information, and the calculated position information for selection (2b).

22. The information input device (5-5a) according to any one of claims 1, 2, 6 and 10, wherein the specific information is specified in advance by parsing a text and/or searching a file and/or analyzing an image of a figure, an illustration, a photograph, and the like included in the two-dimensional format information (1b, 1d), the position information for selection (2b) of the specific information is calculated in advance according to a predetermined algorithm, and the two-dimensional format information (1b, 1d) stores the specific information and the position information for selection (2b).

23. The information input device (5-5a) according to any one of claims 1, 2, 6 and 10, wherein the two-dimensional format information (1b, 1d) is CAD data or map data, and the CAD data is a figure drawn by CAD and has a text and/or a dot, a line segment, a plane, a three-dimensional object as the specific information, and the map data has specific information sorted into categories including a text, a road, a feature, and an intersection, and the specific information has a region surrounded by roads, a feature area, a road centerline, and a centroid of a feature as position information for selection (2b).

24. The information input device (5-5a) according to any one of claims 1, 2, 6 and 10, further comprising a print unit that prints the two-dimensional format information (1b, 1d) displayed on a screen, together with the dot pattern (3).

25. An information-processing device comprising:
the information input device (5-5a) according to any one of claims 1, 2, 6 and 10; and
a relevant information searching unit (60) that searches relevant information of the specific information selected by the information input device (5-5a), and outputs the searched relevant information ,wherein the relevant information searching unit (60) searches the relevant information from a preset link table, database, and/or electronic dictionary.

26. An information input system composed of the information input device (5-5a) according to any one of claims 1 to 24, a two-dimensional format information server (13-13c), and a network connecting the information input device (5-5a) and the two-dimensional format information server, the information input device (5-5a) further comprising:
a communication unit (50-50c, 51) that transmits the identification information to the two-dimensional format information server (13-13c) and receives two-dimensional format information (1b, 1d) corresponding to the identification information from the two-dimensional format information server (13-13c),
and the two-dimensional format information server (13-13c) comprising:
a two-dimensional format information storing and selecting unit (20-20a) that, using the identification information received from the information input device (5-5a), selects the two-dimensional format information (1b, 1d) corresponding to the identification information among one or more pieces of the two-dimensional format information (1b, 1d) stored in advance; and
a communication unit (50-50c, 51) that receives the identification information from the information input device (5-5a) and transmits the selected two-dimensional format information (1b, 1d) to the information input device (5-5a).

## Patentansprüche

1. Eine Dateneingabevorrichtung (5-5a), umfassend:
ein Punktmusterlesegerät (4-4c), dessen Gebiet DTP-Daten (1b), HTML-, Flash-, CAD-Daten, Kartendaten und andere auf ein Medium (1a, 1c) zu druckende zweidimensionale Dateninformation (1b, 1d) sind, wobei unter den Informationen, die als ein Text, eine Figur, eine Illustration, ein Foto und Ähnliches visuell dargestellt sind, Information, welche ein vorgegebenes Kriterium erfüllt, im Voraus als spezifische Information bestimmt und formatiert wird und das Punktmusterlesegerät (4-4c) benutzt wird, um das Medium (1a, 1c) zu berühren und an der Berührungsposition ein Punktmuster (3) zu lesen, sobald ein Benutzer durch eine vorgegebene Operation die visuell dargestellte spezifische Information auf einem Medium (1a, 1c), gedruckt in einem Punktmuster (3) spezifiziert, das in ein Muster mit einem xy-Koordinatenwert und/oder einem Codewert auf der Grundlage eines vorgegebenen Algorithmus für eine Vielfalt von Multimedia-Informationsausgabe- und/oder Betriebsanweisungen umgewandelt wird, sowie
eine Speicher- und Auswahleinheit (20-20a) für zweidimensionale Formatinformation, welche mithilfe von Identifizierungsinformation für das Identifizieren der zweidimensionalen Formatinformation (1b, 1d) diejenige zweidimensionale Formatinformation (1b, 1d) auswählt, welche der Identifizierungsinformation unter der einen oder den mehreren im Voraus gespeicherten zweidimensionalen Formatinformation(en) (1b, 1d) entspricht; **dadurch gekennzeichnet, dass** die Vorrichtung ferner Folgendes umfasst:
ein Koordinatenumwandlungseinheit (30-30b), welche einen Koordinatenwert (Xt, Yt) in einem xy-Koordinatensystem des Punktmusters (3) an der Berührungsposition in einen Koordinatenwert (xt, yt) in einem xy-Koordinatensystem der ausgewählten zweidimensionalen Formatinformation (1b, 1d) umwandelt, und
eine spezifische Informationsauswahleinheit (40-40c), welche unter Verwendung des Koordinatenwerts (xi, yi) in dem xy-Koordinatensystem der zweidimensionalen Formatinformation (1b, 1d) als Positionsinformation für die Auswahl eine Entfernung vom Koordinatenwert (xt, yt) im xy-Koordinatensystem der zweidimensionalen Formatinformation (1b, 1d) berechnet, die von dem Koordinatenwert (Xt, Yt) des Punktmusters (3) der Berührungsposition in eine oder mehrere Positionsinformation(en) zur Auswahl innerhalb einer vorgegebenen Entfernung umgewandelt wird, wobei der Koordinatenwert (xi, yi) bestimmt wird, wenn die spezifische Information angelegt und gedruckt wird, um eine Position der spezifischen Information im xy-Koordinatensystem der zweidimensionalen Formatinformation (1b, 1d) anzugeben, und welche eine spezifische Information, die die Koordinaten der am nächsten liegenden Positionsinformation aufweist, zur Auswahl als Eingabe in ein lokales Gerät auswählt.

2. Dateneingabevorrichtung (5-5a) nach Anspruch 1, wobei das Medium (1a, 1c) ein Medium ist, auf das das Punktmuster (3) und die zweidimensionale Formatinformation (1b, 1d) einkopiert und gedruckt werden.

3. Dateneingabevorrichtung (5-5a) nach Anspruch 2, wobei die Identifizierungsinformation der Codewert des auf dem Medium (1a, 1c) gedruckten Punktmusters (3) ist und zusammen mit einem xy-Koordinatenwert des Punktmusters (3) auf zumindest einem Teil der mit dem xy-Koordinatenwert des Punktmusters (3) bedruckten Zone oder einer anderen als der genannten Zone gedruckt ist.

4. Dateneingabevorrichtung (5-5a) nach Anspruch 2, wobei die Identifizierungsinformation ein xy-Koordinatenwert des Punktmusters (3) ist, welcher die zweidimensionale Formatinformation (1b, 1d) eindeutig identifiziert, und wobei der xy-Koordinatenwert überall auf einer mit dem xy-Koordinatenwert des Punktmusters (3) bedruckten Zone gedruckt ist.

5. Dateneingabevorrichtung (5-5a) nach Anspruch 2, wobei das Medium (1a, 1c) eine Struktur ist, welche die Infrarotstrahlen, die von einer auf dem Punktmusterlesegerät (4-4c) vorgesehenen Infrarotstrahlungseinheit ausgestrahlt werden, diffus reflektiert, die zweidimensionale Formatinformation (1b-1d) auf dem Medium (1a, 1c) mithilfe einer aus infrarot-durchlässigem oder infrarot-reflektierendem Material hergestellten Druckfarbe aufgedruckt ist und das Punktmuster (3) auf dem Material mithilfe einer aus infrarot-absorbierendem Material hergestellten Druckfarbe aufgedruckt ist.

6. Dateneingabevorrichtung (5-5a) nach Anspruch 1, wobei das Medium (1a, 1c) eine Anzeige (15) ist, welche die zweidimensionale Formatinformation (1b, 1d) zusammen mit dem Punktmuster (3) anzeigt.

7. Dateneingabevorrichtung (5-5a) nach Anspruch 6, wobei die Identifizierungsinformation der Codewert des auf der Anzeige (15) angezeigten Punktmusters (3) ist und zusammen mit dem xy-Koordinatenwert des Punktmusters (3) in zumindest einem Teil einer Zone, die den xy-Koordinatenwert des Punktmusters (3) anzeigt, oder in einer anderen als der genannten Zone angezeigt wird.

8. Dateneingabevorrichtung (5-5a) nach Anspruch 6, wobei die Identifizierungsinformation ein xy-Koordinatenwert des Punktmusters (3) ist, welcher die zweidimensionale Formatinformation (1b, 1d) eindeutig identifiziert, und wobei der xy-Koordinatenwert überall in einer mit dem xy-Koordinatenwert des Punktmusters (3) angezeigten Zone angezeigt wird.

9. Dateneingabevorrichtung (5-5a) nach Anspruch 6, wobei die Anzeige (15) eine Struktur ist, in welcher der Punkteteil des Punktmusters (3) Infrarotstrahlen absorbiert oder übermittelt, die von einer auf dem Punktlesegerät (4-4c) vorgesehenen Infrarotstrahlungseinheit ausgestrahlt wird, und wobei eine andere Zone als der Punktebereich die Infrarotstrahlen diffus reflektiert.

10. Dateneingabevorrichtung (5-5a) nach Anspruch 1, wobei das Medium (1a, 1c) eine Informationseingabe-Unterstützungsplatte ist, die auf ein mit der zweidimensionalen Formatinformation (1b, 1d) bedrucktes Medium (1a, 1c) platziert oder an einer Anzeige (15) befestigt ist, welche die zweidimensionale Formatinformation (1b, 1d) anzeigt.

11. Dateneingabevorrichtung (5-5a) nach Anspruch 10, wobei die Informationseingabe-Unter-stützungsplatte zusammen mit dem Punktmuster (3) mit einer Vielzahl von Symbolen gedruckt wird, die dem Benutzer ermöglichen, einen Index für die Kennzeichnung der auf dem Medium (1a, 1c) gedruckten oder auf der Anzeige (15) angezeigten zweidimensionalen Formatinformation (1b, 1d) einzugeben, wobei die Speicher- und Auswahleinheit (20-20a) für zweidimensionale Formatinformation die Indexeingabe durch Berühren des Symbols mithilfe des Punktmusterlesegeräts (4-4c) in die Identifizierungsinformation umwandelt und die zweidimensionale Formatinformation (1b, 1d) mithilfe der umgewandelten Identifizierungsinformation auswählt.

12. Dateneingabevorrichtung (5-5a) nach Anspruch 10, wobei die Informationseingabe-Unterstützungsplatte hergestellt wird durch Laminieren:
einer Infrarot-Diffusreflexionsschicht, welche eine Besonderheit besitzt, durch die sowohl Infrarotstrahlen diffus reflektiert werden als auch von einer Seite eintretendes sichtbares Licht übertragen wird;
einer auf einer Seite der Infrarot-Diffusreflexionsschicht vorgesehenen und durch das Anordnen von Punkten des Punktmusters (3) gebildeten Punktmusterschicht aus einem Material, welches eine Besonderheit besitzt, die Infrarotstrahlen absorbiert, und
einer an der der Infrarot-Diffusreflexionsschicht der Punktmusterschicht gegenüberliegend vorgesehenen Schutzschicht, und welche eine Besonderheit besitzt, die Infrarotstrahlen und sichtbares Licht überträgt.

13. Dateneingabevorrichtung (5-5a) nach Anspruch 10, wobei die Informationseingabe-Unter-stützungsplatte hergestellt wird durch Laminieren:
einer Infrarot-Diffusreflexionsschicht, welche eine Besonderheit besitzt, durch die sowohl von jeder Seite eintretende Infrarotstrahlen diffus reflektiert werden als auch von jeder Seite eintretendes sichtbares Licht übertragen wird;
von auf beiden Seiten der Infrarot-Diffusreflexionsschicht vorgesehenen und durch das Anordnen von Punkten des Punktmusters (3) gebildeten Punktmusterschichten, gebildet aus einem Material, das eine Besonderheit besitzt, welche Infrarotstrahlen absorbiert, und
auf weiteren Außenseiten einer jeden der Punktmusterschichten vorgesehene Schutzschichten, und welche eine Besonderheit aufweisen, die aus jeder Richtung eintretende Infrarotstrahlen und sichtbares Licht überträgt, wobei die Koordinatenwerte und/oder Codewerte, die in dem auf jeder der Punktmusterschichten angeordneten Punktmuster (3) in ein Muster gefasst wurden, zueinander identisch oder voneinander unterschiedlich sind.

14. Dateneingabevorrichtung (5-5a) nach einem beliebigen der Ansprüche 1, 2, 6 und 10, wobei ein Benutzer vorgegebene Operationen mithilfe des Punktmusterlesegeräts (4-4c) durch Berühren der visuell dargestellten spezifischen Information, durch Berühren der visuell dargestellten spezifischen Information und Ziehen über die spezifische Information sowie durch Berühren der visuell dargestellten spezifischen Information und Einkreisen einer die spezifische Information anzeigenden Zone durchführt.

15. Dateneingabevorrichtung (5-5a) nach Anspruch 14, wobei die spezifische Informationsauswahleinheit (40-40c) spezifische Information auswählt, bei welcher die Positionsinformation für die Auswahl von einer Vielzahl von Koordinatenwerten (xt, yt) in einem xy-Koordinatensystem zweidimensionaler Formatinformation (1b, 1d) umringt ist, welche einer Kurve entspricht, die durch die Operation des Einkreisens der die spezifische Information anzeigenden Zone gewonnen wird, und, falls von der spezifischen Information eine Vielzahl vorhanden sind, sich durch Auswählen nach Anzeigen von Kandidaten der spezifischen Information oder auf der Grundlage eines vorgegebenen Algorithmus für eine spezifische Information entscheidet.

16. Dateneingabevorrichtung (5-5a) nach einem beliebigen der Ansprüche 1, 2, 6 und 10, wobei, falls die spezifische Information ein Wort (2a) ist und zwischen den das Wort (2a) darstellenden Buchstaben eine Lücke ist, die spezifische Information die Positionsinformation für das Auswählen (2b) eines jeden Buchstabens besitzt, während für den Fall, dass die spezifische Information eine Figur, eine Illustration, ein Foto und Ähnliches ist und durch eine Vielzahl von Objekten gebildet ist, die spezifische Information die Positionsinformation für die Auswahl (2b) jedes einzelnen Objekts besitzt.

17. Dateneingabevorrichtung (5-5a) nach einem beliebigen der Ansprüche 1, 2, 6 und 10, wobei die Positionsinformation für die Auswahl (2b) ein Koordinatenwert einer Mitte eines Wortes (2a), d. h., spezifische Information, oder eines die Mitte jeden das Wort (2a) bildenden Buchstabens, oder ein Koordinatenwert eines Mittelpunkts einer Figur, einer Illustration, eines Fotos oder von etwas Ähnlichem, d. h., spezifische Information, oder ein die Figur, die Illustration und das Foto darstellendes Objekt ist.

18. Dateneingabevorrichtung (5-5a) nach einem beliebigen der Ansprüche 1, 2, 6 und 10, wobei die Positionsinformation für die Auswahl (2b) eine Kombination eines Koordinatenwerts eines Startpunktes (xi1, yi1) und eines Koordinatenwerts eines Endpunktes (xi2, yi2) eines Zeilensegments ist, welches die Breite eines Wortes (2a) spezifischer Information, oder eines ein Wort (2a) bildenden Buchstabens zwischen den mittleren Punkten oder beliebigen Positionen in einer Höhenrichtung des Wortes (2a) oder des Buchstabens ist, und
die spezifische Informationsauswahleinheit (40-40c) die spezifische Information auswählt, welche ein Zeilensegment besitzt, bei dem eine Länge von einem Koordinatenwert der Berührungsposition (xt, xy) zum genannten Zeilensegment innerhalb einer beliebigen Entfernung und am kürzesten ist.

19. Dateneingabevorrichtung (5-5a) nach einem beliebigen der Ansprüche 1, 2, 6 und 10, wobei die Positionsinformation für die Auswahl (2b) eine Sammlung aller Koordinatenwerte (xia, yia), die in einer Maske enthalten sind, welche ein Wort (2a) der spezifischen Information oder jeden das Wort (2a) bildenden Buchstaben umgeben, oder eine Sammlung aller Koordinatenwerte (xia, yia) ist, welche in einer Figur, einer Illustration, einem Foto und Ähnlichem der spezifischen Information oder in einem die Figur, die Illustration und das Foto bildenden Objekt enthalten sind, wobei in jenen Fällen, in denen ein Koordinatenwert der Berührungsposition (xt, yt) einem Paar aller Koordinatenwerte (xia, yia) entspricht, die spezifische Informationsauswahleinheit (40-40c) die entsprechende spezifische Information auswählt.

20. Dateneingabevorrichtung (5-5a) nach Anspruch 19, wobei die spezifische Informationsauswahleinheit (40-40c) auf der Grundlage einer Kombination eines Koordinatenwerts eines Startpunktes (xi1, yi1) und eines Koordinatenwerts eines Endpunktes (xi2, yi2) eines Zeilensegments, welches die Breite eines Wortes (2a) spezifischer Information, oder eines jeden das Wort (2a) bildenden Buchstabens zwischen den mittleren Punkten oder beliebigen Positionen in einer Höhenrichtung des Wortes (2a) oder des Buchstabens anzeigt, und einer Höhe des Buchstabens, hi, eine Maske generiert, welche einem vorgegebenen Algorithmus entsprechend das Wort (2a) oder den Buchstaben umgibt.

21. Dateneingabevorrichtung (5-5a) nach einem beliebigen der Ansprüche 1, 2, 6 und 10, wobei die spezifische Informationsauswahleinheit (40-40c) eine oder mehrere spezifische (Information(en) durch Parsen eines Textes und/oder Durchsuchen einer Datei und/oder Analysieren eines Bildes einer Figur, einer Illustration, eines Fotos oder von Ähnlichem mit einem beliebigen Abstand vom Koordinatenwert der Berührungsposition (xt, yt) in der zweidimensionalen Formatinformation (1b, 1d) nach einem vorgegebenen Algorithmus erkennt, die Positionsinformation für die Auswahl (2b) der spezifischen Information nach einem vorgegebenen Algorithmus berechnet und die spezifische Information auf der Grundlage des Koordinatenwerts (xt, yt), der erkannten spezifischen Information und der berechneten Positionsinformation für die Auswahl (2b) auswählt.

22. Dateneingabevorrichtung (5-5a) nach einem beliebigen der Ansprüche 1, 2, 6 und 10, wobei die spezifische Information im Voraus durch Parsen eines Textes und/oder Durchsuchen einer Datei und/oder Analysieren eines Bildes, einer Figur, einer Illustration, eines Fotos oder von ähnlichem in der zweidimensionalen Formatinformation (1b, 1d) Enthaltenem spezifiziert wird, die Positionsinformation für die Auswahl (2b) der spezifischen Information im Voraus einem vorgegebenen Algorithmus entsprechend berechnet wird und die zweidimensionale Formatinformation (1b, 1d) die spezifische Information und die Positionsinformation für die Auswahl (2b) speichert.

23. Dateneingabevorrichtung (5-5a) nach einem beliebigen der Ansprüche 1, 2, 6 und 10, wobei die zweidimensionale Formatinformation (1b, 1d) aus CAD-Daten oder Kartendaten besteht, und wobei die CAD-Daten eine mithilfe von CAD gezeichnete Figur sind und als die spezifische Information einen Text und/oder einen Punkt, ein Zeilensegment, eine Ebene, ein dreidimensionales Objekt haben, und wobei die Kartendaten spezifische Information haben, welche in Kategorien wie einen Text, eine Straße, ein Merkmal und einen Kreuzungspunkt sortiert sind, und wobei die spezifische Information eine von Straßen umgebenen Zone, einen Merkmalsbereich, eine Straßen-Mittellinie und einen Schwerpunkt als Positionsinfomation für die Auswahl (2b) besitzt.

24. Dateneingabevorrichtung (5-5a) nach einem beliebigen der Ansprüche 1, 2, 6 und 10, ferner umfassend ein Druckgerät, welches die auf einem Bildschirm angezeigte zweidimensionale Formatinformation (1b, 1d) zusammen mit dem Punktmuster (3) ausdruckt.

25. Eine Informationsverarbeitungsvorrichtung, umfassend:
die Dateneingabevorrichtung (5-5a) nach einem beliebigen der Ansprüche 1, 2, 6 und 10, und
eine relevante Informationssucheinheit (60), welche die von der Dateneingabevorrichtung (5-5a) gewählte relevante Information der spezifischen Information durchsucht und die durchsuchte relevante Information ausgibt, wobei die relevante Informationssucheinheit (60) die relevante Information aus einer/einem voreingestellten Verknüpfungstabelle, Datenbank und/oder elektronischen Wörterbuch heraus sucht.

26. Ein Informationseingabesystem, zusammengesetzt aus der Dateneingabevorrichtung (5-5a) nach einem beliebigen der Ansprüche 1 bis 24, einem zweidimensionalen Formatinformationsserver (13-13c) und einem Netzwerk, welches die Dateneingabevorrichtung (5-5a) und den zweidimensionalen Formatinformationsserver verbindet, die Dateneingabevorrichtung (5-5a) ferner umfassend:
eine Kommunikationseinheit (50-50c, 51), welche die Identifizierungsinformation an den zweidimensionalen Formatinformationsserver (13-13c) überträgt und zweidimensionale Formatinformation (1b, 1d) empfängt, welche der Identifizierungsinformation aus dem zweidimensionalen Formatinformationsserver (13-13c) entspricht,
und den zweidimensionalen Formatinformationsserver (13-13c), umfassend:
eine Speicher- und Auswahleinheit (20-20a) für zweidimensionale Formatinformation, die mithilfe der von der Dateneingabevorrichtung (5-5a) eingegangenen Identifizierungsinformation die zweidimensionale Formatinformation (1b, 1d) auswählt, welche der Identifizierungsinformation unter einer oder mehreren im Voraus gespeicherten zweidimensionalen Formatinformation(en) (1b, 1d) entspricht, und
eine Kommunikationseinheit (50-50c, 51), welche die Identifizierungsinformation aus der Dateneingabevorrichtung (5-5a) empfängt und die ausgewählte zweidimensionale Formatinformation (1b, 1d) an die Dateneingabevorrichtung (5-5a) überträgt.

## Revendications

1. Dispositif d'entrée d'informations (5-5a) comprenant :
une unité (4-4c) de lecture de motif de points dont le sujet est constitué de données de PAO (1b), de HTML, de Flash, de données de CAO, de données de carte et d'autres informations au format bidimensionnel (1b, 1d) devant être imprimées sur un support (1a, 1c), où, parmi des informations visualisées en tant que texte, figure, illustration, photographie et analogues, des informations qui répondent à un critère prédéterminé sont déterminées au préalable en tant qu'information spécifique et mises en forme, et l'unité (4-4c) de lecture de motif de points est utilisée pour toucher le support (1a, 1c) afin de lire un motif de points (3) au niveau de la position de contact quand un utilisateur spécifie, par le biais d'une opération prédéterminée, l'information spécifique visualisée sur un support (1a, 1c) sur lequel est imprimé un motif de points (3) qui est converti en motif avec une valeur de coordonnées XY et/ou une valeur de code selon un algorithme prédéterminé pour une variété de sorties d'informations multimédia et/ou d'instructions d'utilisation ; et
une unité (20-20a) de stockage et de sélection d'informations au format bidimensionnel qui, au moyen d'informations d'identification destinées à identifier les informations au format bidimensionnel (1b, 1d), sélectionne les informations au format bidimensionnel (1b, 1d) correspondant aux informations d'identification parmi un ou plusieurs éléments d'informations au format bidimensionnel (1b, 1d) stockés au préalable ; **caractérisé en ce que** le dispositif comprend, en outre :
une unité (30-30b) de conversion de coordonnées qui convertit une valeur de coordonnées (Xt, Yt) dans un système de coordonnées XY du motif de points (3) au niveau de la position de contact en une valeur de coordonnées (xt, yt) dans un système de coordonnées xy des informations au format bidimensionnel (1b, 1d) sélectionnées ; et
une unité (40-40c) de sélection d'information spécifique qui, au moyen de la valeur de coordonnées (xi, yi) dans le système de coordonnées xy des informations au format bidimensionnel (1b, 1d), la valeur de coordonnées (xi, yi) étant déterminée lors de la présentation et de l'impression de l'information spécifique afin de spécifier une position de l'information spécifique dans le système de coordonnées des informations au format bidimensionnel (1b, 1d), calcule une distance depuis la valeur de coordonnées (xt, yt) dans le système de coordonnées xy des informations au format bidimensionnel (1b, 1d) qui est convertie à partir de la valeur de coordonnées (Xt, Yt) du motif de points au niveau du point de contact jusqu'à un ou plusieurs éléments d'information à sélectionner à l'intérieur d'une distance prédéterminée, et sélectionne l'information spécifique ayant les coordonnées de l'information de position pour sélection les plus proches en tant qu'entrée dans un périphérique local.

2. Dispositif d'entrée d'informations (5-5a) selon la revendication 1, dans lequel le support (1a, 1c) est un support sur lequel le motif de points (3) et les informations au format bidimensionnel (1b, 1d) sont superposés et imprimés.

3. Dispositif d'entrée d'informations (5-5a) selon la revendication 2, dans lequel l'information d'identification est la valeur de code du motif de points (3) imprimé sur le support (1a, 1c), et imprimé conjointement à une valeur de coordonnées XY du motif de points (3) sur au moins une partie d'une région sur laquelle est imprimée la valeur de coordonnées XY du motif de points (3) ou une région autre que ladite région.

4. Dispositif d'entrée d'informations (5-5a) selon la revendication 2, dans lequel l'information d'identification est une valeur de coordonnées YX du motif de points (3) qui identifie de façon unique les informations au format bidimensionnel (1b, 1d), et la valeur de coordonnées XY est imprimée sur l'ensemble d'une région sur laquelle est imprimée la valeur de coordonnées XY du motif de points (3).

5. Dispositif d'entrée d'informations (5-5a) selon la revendication 2, dans lequel le support (1a, 1c) est une structure qui reflète de manière diffuse des rayons infrarouges émis par une unité d'émission infrarouge disposée sur l'unité (4-4c) de lecture de motif de points, les informations au format bidimensionnel (1b, 1d) sont imprimées sur le support (1a, 1c) au moyen d'une encre constituée d'un matériau transmettant les infrarouges ou d'un matériau réfléchissant les infrarouges ; et le motif de points (3) est imprimé sur le matériau au moyen d'une encre constituée d'un matériau absorbant les infrarouges.

6. Dispositif d'entrée d'informations (5-5a) selon la revendication 1, dans lequel le support (1a, 1c) est un écran qui affiche les informations au format bidimensionnel (1b, 1d) conjointement au motif de points (3).

7. Dispositif d'entrée d'informations (5-5a) selon la revendication 6, dans lequel l'information d'identification est la valeur de code du motif de points (3) affiché sur l'écran (15) et affiché conjointement à une valeur de coordonnées XY du motif de points (3) sur au moins une partie d'une région qui affiche la valeur de coordonnées XY du motif de points (3) ou une région autre que ladite région.

8. Dispositif d'entrée d'informations (5-5a) selon la revendication 6, dans lequel l'information d'identification est une valeur de coordonnées XY du motif de points (3) qui identifie de façon unique les informations au format bidimensionnel (1b, 1d) et la valeur de coordonnées XY est affichée sur l'ensemble d'une région qui affiche la valeur de coordonnées XY du motif de points (3).

9. Dispositif d'entrée d'informations (5-5a) selon la revendication 6, dans lequel l'écran (15) est une structure dans laquelle la partie points du motif de points (3) absorbe ou transmet des rayons infrarouges émis par une unité d'émission infrarouge disposée sur l'unité (4-4c) de lecture de motif de points et une région autre que la partie points réfléchit de façon diffuse les rayons infrarouges.

10. Dispositif d'entrée d'informations (5-5a) selon la revendication 1, dans lequel le support (1a, 1c) est une feuille d'aide à l'entrée d'informations qui est placée sur un support (1a, 1c) sur lequel sont imprimées les informations au format bidimensionnel (1b, 1d) ou fixée sur un écran (15) qui affiche les informations au format bidimensionnel (1b, 1d).

11. Dispositif d'entrée d'informations (5-5a) selon la revendication 10, dans lequel est imprimée, sur la feuille d'aide à l'entrée d'informations, conjointement au motif de points (3), une pluralité d'icônes qui permettent à un utilisateur d'entrer un indice pour identifier les informations au format bidimensionnel (1b, 1d) imprimées sur le support (1a, 1c) ou affichées sur l'écran (15), et l'unité(20-20a) de stockage et de sélection d'informations au format bidimensionnel convertit l'indice entré en touchant l'icône au moyen de l'unité (4-4c) de lecture de motif de points en informations d'identification et sélectionne les informations au format bidimensionnel (1b, 1d) au moyen des informations d'identification converties.

12. Dispositif d'entrée d'informations (5-5a) selon la revendication 10, dans lequel la feuille d'aide à l'entrée d'informations est fabriquée en stratifiant :
une couche de réflexion diffuse des infrarouges qui présente pour caractéristique de réfléchir de façon diffuse les rayons infrarouges et transmet également la lumière visible entrant d'un côté ;
une couche de motif de points disposée sur un côté de la couche de réflexion diffuse des infrarouges et constituée en agençant des points du motif de points (3) constitué d'un matériau qui présente pour caractéristique d'absorber les rayons infrarouges ; et
une couche de protection disposée sur un côté opposé de la couche de réflexion diffuse des infrarouges de la couche de motif de points et qui présente pour caractéristique de transmettre les rayons infrarouges et la lumière visible.

13. Dispositif d'entrée d'informations (5-5a) selon la revendication 10, dans lequel la feuille d'aide à l'entrée d'informations est fabriquée en stratifiant :
une couche de réflexion diffuse des infrarouges qui présente une caractéristique qui réfléchit de façon diffuse les rayons infrarouges pénétrant par chaque côté et transmet également la lumière visible de chaque côté ;
des couches de motif de points disposées des deux côtés de la couche de réflexion diffuse des infrarouges et constituées en agençant des points du motif de points (3) constitués d'un matériau qui présente une caractéristique d'absorption des rayons infrarouges ; et
des couches de protection disposées sur des côtés extérieurs supplémentaires de chacune des couches de motif de points et qui présentent une caractéristique de transmettre les rayons infrarouges et la lumière visible pénétrant selon chaque direction, les valeurs de coordonnées et/ou les valeurs de code transcrites en motif dans le motif de points (3) disposé sur chacune des couches de motif de points étant identiques ou différentes l'une de l'autre.

14. Dispositif d'entrée d'informations (5-5a) selon l'une quelconque des revendications 1, 2, 6 et 10, dans lequel un utilisateur effectue l'opération prédéterminée au moyen de l'unité (4-4c) de lecture de motif de points en touchant l'information spécifique visualisée, en touchant l'information spécifique visualisée et en glissant sur l'information spécifique et en touchant l'information spécifique visualisée et en entourant une région affichant l'information spécifique.

15. Dispositif d'entrée d'informations (5-5a) selon la revendication 14, dans lequel l'unité (40-40c) de sélection d'information spécifique sélectionne des informations spécifiques dont les informations de position pour sélection sont entourées d'une pluralité de valeurs de coordonnées (xt, yt) dans un système de coordonnées xy des informations au format bidimensionnel (1b, 1d) correspondant à une trajectoire obtenue par le biais de l'opération consistant à entourer la région affichant l'information spécifique, et s'il existe une pluralité d'éléments d'information spécifique, choisit un élément d'information spécifique en effectuant une sélection après affichage des candidats de l'information spécifique ou sur la base d'un algorithme prédéterminé.

16. Dispositif d'entrée d'informations (5-5a) selon l'une quelconque des revendications 1, 2, 6 et 10, dans lequel, si l'information spécifique est un mot (2a) et qu'il existe un espace entre des lettres constituant le mot (2a), l'information spécifique comprend l'information de position (2b) pour sélection pour chaque lettre, tandis que si l'information spécifique est une figure, une illustration, une photographie et analogues, et qu'elle est constituée d'une pluralité d'objets, l'information spécifique comprend l'information de position (2b) pour sélection pour chaque objet.

17. Dispositif d'entrée d'informations (5-5a) selon l'une quelconque des revendications 1, 2, 6 et 10, dans lequel l'information de position (2b) pour sélection est une valeur de coordonnées d'un centre d'un mot (2a), c'est-à-dire une information spécifique, ou un centre de chaque lettre constituant le mot (2a), ou une valeur de coordonnées d'un centroïde d'une figure, d'une illustration, d'une photographie et analogues, c'est-à-dire une information spécifique, ou un objet constituant la figure, l'illustration et la photographie.

18. Dispositif d'entrée d'informations (5-5a) selon l'une quelconque des revendications 1, 2, 6 et 10, dans lequel l'information de position (2b) pour sélection est une combinaison d'une valeur de coordonnées d'un point de début (xi1, yi1) et d'une valeur de coordonnée d'un point de fin (xi2, yi2) d'un segment de ligne indiquant une largeur d'un mot (2a) d'information spécifique ou d'une lettre constituant le mot (2a) entre des points médians ou des positions arbitraires dans une direction de hauteur du mot (2a) ou de la lettre, et
l'unité de sélection (40-40c) d'information spécifique sélectionne l'information spécifique ayant un segment de ligne, une longueur d'une valeur de coordonnées de la position de contact (xt, xy) audit segment de ligne étant comprise dans une distance arbitraire et aussi courte que possible.

19. Dispositif d'entrée d'informations (5-5a) selon l'une quelconque des revendications 1, 2, 6 et 10, dans lequel l'information de position (2b) pour sélection est un ensemble de toutes les valeurs de coordonnées (xia, yia) comprises dans un masque entourant un mot (2a) de l'information spécifique ou chaque lettre constituant le mot (2a) ou un ensemble de toutes les valeurs de coordonnées (xia, yia) comprises dans une figure, une illustration, une photographie et analogues de l'information spécifique, ou un objet constituant la figure, l'illustration et la photographie, où lorsque une valeur de coordonnées de la position de contact (xt, yt) correspond à une quelconque paire parmi toutes les valeurs de coordonnées (xia, yia),
l'unité (40-40c) de sélection d'information spécifique sélectionne l'information spécifique correspondante.

20. Dispositif d'entrée d'informations (5-5a) selon la revendication 19, dans lequel l'unité (40-40c) de sélection d'information spécifique, sur la base d'une combinaison d'une valeur de coordonnées d'un point de début (xi1, yi1) et d'une valeur de coordonnée d'un point de fin (xi2, yi2) d'un segment de ligne indiquant une largeur d'un mot (2a) d'information spécifique ou d'une lettre constituant le mot (2a) entre des points médians ou des positions arbitraires dans une direction de hauteur du mot (2a) ou de la lettre, et une hauteur hi de la lettre génèrent le masque entourant le mot (2a) ou la lettre selon un algorithme prédéterminé.

21. Dispositif d'entrée d'informations (5-5a) selon l'une quelconque des revendications 1, 2, 6 et 10, dans lequel l'unité (40-40c) de sélection d'information spécifique reconnaît un ou plusieurs éléments de l'information spécifique en analysant un texte et/ou en cherchant dans un fichier et/ou en analysant une image d'une figure, d'une illustration, d'une photographie et analogues, dans une distance arbitraire par rapport à la valeur de coordonnées de la position de contact (xt, yt) dans les informations au format bidimensionnel (1b, 1d) selon un algorithme prédéterminé, calcule l'information de position (2b) pour sélection de l'information spécifique selon un algorithme prédéterminé et sélectionne l'information spécifique sur la base de la valeur de coordonnées (xt, yt), de l'information spécifique reconnue et de l'information de position (2b) pour sélection calculée.

22. Dispositif d'entrée d'informations (5-5a) selon l'une quelconque des revendications 1, 2, 6 et 10, dans lequel l'information spécifique est spécifiée au préalable en analysant un texte et/ou en cherchant dans un fichier et/ou en analysant une image d'une figure, d'une illustration, d'une photographie et analogues incluses dans les informations au format bidimensionnel (1b, 1d), l'information de position (2b) pour sélection de l'information spécifique est calculée au préalable selon un algorithme prédéterminé et les informations au format bidimensionnel (1b, 1d) stockent l'information spécifique et l'information de position (2b) pour sélection.

23. Dispositif d'entrée d'informations (5-5a) selon l'une quelconque des revendications 1, 2, 6 et 10, dans lequel les informations au format bidimensionnel (1b, 1d) sont des données de CAO ou des données de carte, et les données de CAO sont une figure dessinée par CAO et comportant un texte et/ou un point, un segment de ligne, un plan, un objet tridimensionnel en tant qu'information spécifique, et les données de carte comprennent des informations spécifiques triées en catégories comprenant un texte, une route, une caractéristique et une intersection, et les informations spécifiques comportent une région entourée de routes, une région de caractéristique, une ligne centrale de route et un centroïde d'une caractéristique en tant qu'information de position (2b) pour sélection.

24. Dispositif d'entrée d'informations (5-5a) selon l'une quelconque des revendications 1, 2, 6 et 10, comprenant, en outre, une unité d'impression qui imprime les informations au format bidimensionnel (1b, 1d) affichées sur un écran, conjointement au motif de points (3).

25. Dispositif de traitement d'information comprenant :
le dispositif d'entrée d'informations (5-5a) selon l'une quelconque des revendications 1, 2, 6 et 10 ; et une unité (60) de recherche d'informations pertinentes qui recherche des informations pertinentes correspondant à l'information spécifique sélectionnée par le dispositif d'entrée d'informations (5-5a) et renvoie en sortie les informations pertinentes trouvées, l'unité (60) de recherche d'informations pertinentes recherchant les informations pertinentes dans une table de liens prédéfinie, une base de données et/ou un dictionnaire électronique.

26. Système d'entrée d'informations composé du dispositif d'entrée d'informations (5-5a) selon l'une quelconque des revendications 1 à 24, un serveur (13-13c) d'informations au format bidimensionnel et un réseau reliant le dispositif d'entrée d'informations (5-5a) et le serveur d'informations au format bidimensionnel, le dispositif d'entrée d'informations (5-5a) comprenant, en outre :
une unité de communication (50-50c, 51) qui transmet les informations d'identification au serveur (13-13c) d'informations au format bidimensionnel et reçoit des informations au format bidimensionnel (1b, 1d) correspondant aux informations d'identification du serveur (13-13c) d'informations au format bidimensionnel,
et le serveur d'informations au format bidimensionnel (13-13c) comprenant :
une unité (20-20a) de stockage et de sélection d'informations au format bidimensionnel qui, au moyen des informations d'identification reçues du dispositif d'entrée d'informations (5-5a), sélectionne les informations au format bidimensionnel (1b, 1d) correspondant aux informations d'identification parmi un ou plusieurs éléments d'informations au format bidimensionnel (1b, 1d) stockés au préalable ; et
une unité (50-50c, 1) de communication qui reçoit les informations d'identification depuis le dispositif d'entrée d'informations (5-5a) et transmet les informations au format bidimensionnel (1b, 1d) au dispositif d'entrée d'informations (5-5a).
